(19) Europäisches Patentamt
European Patent Office
Office européen des brevets

(11) **EP 3 519 521 B1**

(12) **EUROPÄISCHE PATENTSCHRIFT**

(45) Veröffentlichungstag und Bekanntmachung des Hinweises auf die Patenterteilung:
**29.06.2022   Patentblatt 2022/26**

(21) Anmeldenummer: **17777791.9**

(22) Anmeldetag: **12.09.2017**

(51) Internationale Patentklassifikation (IPC):
$C09J\ 175/14^{(2006.01)}$    $C08G\ 18/00^{(2006.01)}$
$C08G\ 18/22^{(2006.01)}$    $C08G\ 18/32^{(2006.01)}$
$C08G\ 18/48^{(2006.01)}$    $C08G\ 18/66^{(2006.01)}$
$C08G\ 18/69^{(2006.01)}$    $C08G\ 18/65^{(2006.01)}$
$C08G\ 18/75^{(2006.01)}$    $C08G\ 18/76^{(2006.01)}$
$B29B\ 7/48^{(2006.01)}$    $B29B\ 7/60^{(2006.01)}$
$B29B\ 7/72^{(2006.01)}$    $B29B\ 7/84^{(2006.01)}$
$B29B\ 7/86^{(2006.01)}$    $B29B\ 7/90^{(2006.01)}$
$B29C\ 48/00^{(2019.01)}$    $B29C\ 48/15^{(2019.01)}$
$B29C\ 48/40^{(2019.01)}$    $B29C\ 48/67^{(2019.01)}$
$C08G\ 18/87^{(2006.01)}$

(52) Gemeinsame Patentklassifikation (CPC):
(C-Sets verfügbar)
**C09J 175/14; B29B 7/485; B29B 7/487;
B29B 7/603; B29B 7/726; B29B 7/845; B29B 7/86;
B29B 7/90; B29C 48/022; B29C 48/15;
B29C 48/40; B29C 48/402; B29C 48/67;
C08G 18/227; C08G 18/3206;**    (Forts.)

(86) Internationale Anmeldenummer:
**PCT/EP2017/072848**

(87) Internationale Veröffentlichungsnummer:
**WO 2018/059931 (05.04.2018 Gazette 2018/14)**

(54) **THERMISCH VULKANISIERBARER KLEBSTOFF UND DARAUS HERGESTELLTES KLEBEBAND**

THERMAL VULCANIZABLE ADHESIVE AND ADHESIVE TAPE MANUFACTURED THEREOF

ADHÉSIF VULCANISÉ THERMIQUE ET BANDE ADHÉSIVE EN FAIT

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **30.09.2016   DE 102016218978**

(43) Veröffentlichungstag der Anmeldung:
**07.08.2019   Patentblatt 2019/32**

(73) Patentinhaber: **TESA SE**
**22848 Norderstedt (DE)**

(72) Erfinder:
• **DIETZE, Sebastian**
**22307 Hamburg (DE)**
• **ELSENBACH, Kim**
**22941 Bargteheide (DE)**
• **HANNEMANN, Frank**
**22047 Hamburg (DE)**
• **ZEYSING, Björn**
**22393 Hamburg (DE)**
• **SCHÜMANN, Uwe**
**25421 Pinneberg (DE)**
• **SEIBERT, Matthias**
**22453 Hamburg (DE)**
• **MEYER, Katja**
**22523 Hamburg (DE)**
• **DIETZ, Bernd**
**22949 Ammersbek (DE)**
• **FLUCKE, Jasmin**
**22359 Hamburg (DE)**
• **KAUS, Amy**
**Michigan 48220 (US)**

(74) Vertreter: **tesa SE**
**Hugo-Kirchberg-Straße 1**
**22848 Norderstedt (DE)**

(56) Entgegenhaltungen:
**EP-A1- 0 009 613      EP-A1- 0 877 069**
**WO-A1-2007/025690    DE-A1- 1 645 358**
**US-A1- 2008 045 643**

(52) Gemeinsame Patentklassifikation (CPC): (Forts.)
**C08G 18/6588; C08G 18/69; C08G 18/755;**
**C08G 18/758; C08G 18/87**

C-Sets
**C09J 175/14, C08K 3/011, C08K 3/013, C08K 3/06,**
**C08K 5/39, C08K 5/40, C08K 5/47;**
**C09J 175/14, C08L 63/00, C08L 95/00**

**Beschreibung**

Die vorliegende Erfindung betrifft ein Klebeband enthaltend einen thermisch vulkanisierbaren, schmelzbaren, vorzugsweise haftklebrigen Klebstoff, ein Verfahren zu dessen Herstellung sowie ein Verfahren zur Herstellung des Klebebandes. Die Erfindung kann als Klebeband oder Dichtungsband oder als Teil eines Klebe- oder Dichtungsbandes in der Automobilindustrie im Rohbau zur Applikation auf geölten Blechen oder im Lackierprozess zur Applikation auf lackierten Blechen, insbesondere auf KTL-Blechen verwendet werden, aber auch in anderen Bereichen, in denen Prozesstemperaturen zwischen 130°C und 230°C zur Verfügung stehen.

Thermisch vulkanisierbare Haftklebebänder sind bekannt. EP 877069 B1 (Beiersdorf) beschreibt eine haftklebrige Folie auf Basis eines thermisch vulkanisierbaren, polyveresterten Kautschuks. Nachteilig daran ist, dass die Polyveresterungsreaktion zu einem vernetzten Elastomer führt, so dass eine Compoundierung des ausreagierten Elastomers mit Vulkanisationshilfsmitteln, Füllstoffen und weiteren Betsandteilen nicht möglich ist. Diese Stoffe müssen bereits vorher eindispergiert beziehungsweise zugemischt werden, bevor die Vernetzungsreaktion fortgeschritten ist. Zu diesem Zeitpunkt ist die Reaktionsmischung bei Raumtemperatur flüssig oder pastös. Das Polymer wird erst während der Beschichtung durch allmähliches Voranschreiten der Vernetzungsreaktion gebildet. Dies hat den Nachteil, dass die Beschichtungsgeschwindigkeit limitiert ist, denn im noch flüssigen oder pastösen Zustand kann die auf einen Trennliner oder auf ein Trägermaterial beschichtete Reaktionsmischung nicht oder zumindest nicht mit konstanter Schichtdicke aufgewickelt werden. Mit konstanter Schichtdicke können nur feste Polymerfilme aufgewickelt werden. Der Reaktionsfortschritt bis zur Verfestigung der Reaktionsmischung muss also abgewartet werden, bevor das Reaktionsprodukt aufgewickelt werden kann. Entsprechend langsam muss die Beschichtungsgeschwindigkeit eingestellt werden.

Zudem haben polyveresterte Kautschuke den potentiellen Nachteil einer leichten hydrolytischen Spaltbarkeit.

Der in der deutschen Offenlegungsschrift DE 38 30 895 A (Hüls) beschriebene Kautschuk aus mindestens zwei Ausgangspolymeren, die über Estergruppen chemisch miteinander verknüpft sind und von denen zumindest eines olefinisch ungesättigt ist, hat als mögliches Basiselastomer eines thermisch vulkanisierbaren Haftklebebandes prinzipiell ähnliche Nachteile. Das Gleiche gilt für die in EP 0 356 715 B1 (Henkel) beschriebene flüssige oder streichfähige, vulanisierbare Kautschukmischung auf Basis polyveresterter Polymere, von denen zumindest eines olefinisch ungesättigt ist.

Alternativ könnten Polybutadien-basierte Polyurethane ein mögliches Basiselastomer für thermisch vulkanisierbare Klebebänder bilden. Ein Polybutadien-Polyurethan-Haftklebstoff wird in JP 59230076A (Sekisui) beschrieben. Ein Polybutadien-Polyol mit einer Funktionalität von 2,2 bis 2,4 wird darin mit einem Polyisocyanat in einem NCO/OH-Verhältnis von 0,2 bis 0,65 umgesetzt, um ein Polyol mit einer Molmasse von 5000 bis 30000 und einer Funktionalität von 2,0 bis 2,4 zu bilden. Dieses wird anschließend mit einem Polyisocyanat im NCO/OH-Verhältnis von 0,6 bis 1,0 gemischt und so zum gewünschten Produkt umgesetzt. Ein solches Produkt hat im Hinblick auf eine Verwendung als Basiselastomer eines thermisch vulkanisierbaren Klebebandes, das in einem lösemittelfreien Compoundier- und Beschichtungsprozess hergestellt wird, den Nachteil, entweder vernetzt und somit für einen Beschichtungsprozess ungeeignet zu sein oder für den Fall, dass innerhalb der in der Schrift angegebenen Grenzen in einem sehr niedrigen NCO/OH-Verhältnis gearbeitet wird und somit keine Vernetzung eintritt, bei Raumtemperatur flüssig und somit ebenfalls als Basiselastomer für einen Beschichtungsprozess ungeeignet zu sein.

In US 3743617A (Kest) werden Polyurethan-Haftklebstoffe auf Basis des Reaktionsproduktes von Isocyanatreaktive Gruppen tragenden Dien-Polymeren mit IsocyanatKomponenten in Gegenwart von Tackifier-Harzen offenbart. Nachteilig ist hier die zwingend notwendige Anwesenheit von Tackifier-Harzen, die sich störend auf die Haftungseigenschaften eines daraus hergestellten Klebebandes nach der Vulkanisation auswirken könnten. Zudem schweigt die Schrift im Hinblick auf die Frage, ob und wie auf dieser Basis ein haftklebriges Elastomer mit einem geeignetem Schmelzbeziehungsweise Erweichungsbereich für die Verwendung in einem lösemittelfreien Compoundier- und Beschichtungsprozess hergestellt werden kann.

In US 3515773A (Continental) wird zur Herstellung von Haftklebstoffen die Umsetzung von hydroxylierten Polybutadienen mit aromatischen Isocyanaten beziehungsweise mit Vorprodukten auf Basis von aromatischen Isocyanaten vorgeschlagen und gleichzeitig herausgestellt, dass Tackiness ohne die Verwendung von Tackifier-Harzen und Weichmachern erzielt werden kann. Nachteilig ist die Verwendung von aromatischen Isocyanaten aufgrund der möglichen besonderen Gesundheitsgefahren, die von dieser Substanzklasse ausgehen. Auch diese Schrift schweigt im Hinblick auf die Frage, ob und wie auf dieser Basis ein haftklebriges Elastomer mit einem geeignetem Schmelz- beziehungsweise Erweichungsbereich für die Verwendung in einem lösemittelfreien Compoundier- und Beschichtungsprozess hergestellt werden kann.

In WO 1998030648 A1 (Shell) werden thermoplastische Polyurethan-Haftklebstoffe auf Basis von hydrierten Polydien-Diolen und -monoolen beschrieben. Diese haben im Hinblick auf das Ziel, ein haftklebriges, schmelzbares Basiselastomer für ein thermisch vulkanisierbares Klebeband zu finden, den Nachteil, thermisch nicht vulkanisierbar zu sein.

Die DE 16 45 358 A beschreibt Polyurethanharzpolymerisate, beinhaltend Dienhomo- und Mischpolymerisate, die auch als Klebstoffe Anwendung finden. Diese Polymerisate können über Reaktionen mit Schwefel ausgehärtet werden.

Die EP 0 877 069 A1 beschreibt eine beidseitig haftklebrige Folie auf Basis von Kautschuk, beinhaltend Klebstoffformulierungen auf Basis von hydroxyl-funktionalisiertem Polybutadien und Maleinsäureanhydrid-funktionalisiertem Polybutadien. Diese können ebenfalls über eine Reaktion mit Schwefel ausgehärtet werden.

Aufgabe der Erfindung ist es, ein Klebeband enthaltend einen vorzugsweise haftklebrigen Klebstoff welches thermisch innerhalb eines Temperaturbereichs von 130°C bis 230°C vulkanisierbar ist, so dass sie in der Automobilindustrie sowohl im Rohbau auf geölten Blechen als auch in der Lackierstraße auf KTL-beschichteten oder anderweitig lackierten Blechen zum Kleben und/ oder Dichten verwendet werden können, zum Beispiel zur Bördelfalzklebung, zur Bördelfalzabdichtung, zur Nahtabdichtung, zur Unterfütterungsklebung, zum Lochverschluss und vieles mehr. Die mit dem Klebstoff erzielbaren Klebfestigkeiten sollen innerhalb weiter Grenzen beliebig und anforderungsgerecht einstellbar sein. Der Bereich umfasst Zugscherfestigkeiten zwischen größer 0 bis mindestens 30,0 N/mm$^2$. Der Klebstoff soll innerhalb eines Temperaturbereichs von 40°C bis 100°C in einem Compoundier- und Extrusionsprozess hergestellt werden können. Das Basiselastomer dieses Klebstoffes muss somit innerhalb dieses letztgenannten Temperaturbereichs als Schmelze vorliegen. Während der Verarbeitung als Schmelze oder während der nachfolgenden Lagerung bei Temperaturen bis 40°C darf es nicht zum Anspringen der Vulkanisationsreaktion oder zu einer anderweitigen Vernetzungsreaktion kommen. Im Temperaturbereich von Raumtemperatur (20°C-25°C, idealerweise 23°C) bis 30°C muss der Klebstoff genügend fest beziehungsweise hochviskos sein, so dass er als auf einen Trennliner oder als auf ein Trägermaterial beschichteter Film zu einer Rolle aufgewickelt werden kann, ohne dass er an der Seite herausfließt beziehungsweise durch den Wickeldruck herausgequetscht wird.

Gelöst wird diese Aufgabe durch ein Klebeband enthaltend einen thermisch vulkanisierbaren, schmelzbaren, vorzugsweise haftklebrigen Klebstoff, umfassend ein schmelzbares Polybutadien-Polyurethan, gemahlenen Schwefel. Erfindungsgemäß umfasst das schmelzbare Polybutadien-Polyurethan das chemische Umsetzungsprodukt zumindest eines Polybutadien-Diols, zumindest eines Kettenverlängerers mit einer Hydroxyl-Funktionalität von zwei und einer Molmasse von kleiner oder gleich 300 g/mol und optional zumindest eines Polybutadien-Polyols, das eine zahlengemittelte, mittlere Funktionalität zwischen größer 2,0 und kleiner oder gleich 3 besitzt, mit zumindest einem aliphatischen oder alicyclischen Diisocyanat, wobei an der Umsetzung zum Polybutadien-Polyurethan keine anderen Polyole oder Isocyanate als die vorgenannten beteiligt sind.

Jeweils optional vorhanden sein können zumindest ein Vulkanisationsbeschleuniger, zumindest ein Füllstoff, zumindest ein Epoxidharz, zumindest ein Klebrigmacherharz, Bitumen, zumindest ein Weichmacher sowie weitere Hilfs- und Zusatzstoffe. Von den optionalen Substanzklassen Vulkanisationsbeschleuniger, Füllstoff, Epoxidharz, Klebrigmacherharz, Bitumen, Weichmacher sowie weitere Hilfs- und Zusatzstoffe kann jeweils nur eine oder jede beliebige Kombination mehrerer Substanzklassen enthalten sein. Ebenso kann innerhalb einer Substanzklasse jeweils eine Verbindung oder eine beliebige Anzahl verschiedener Verbindungen enthalten sein.

Die vorliegende Erfindung betrifft insbesondere ein Klebeband enthaltend einen thermisch vulkanisierbaren Klebstoff, der bei Raumtemperatur eine feste oder zumindest sehr hochviskose Konsistenz hat und vorzugsweise haftklebrig ist, in einem Temperaturbereich zwischen ungefähr 40°C und 100°C als Schmelze in einem Compoundier- und Extrusionsprozess verarbeitet werden kann und thermisch in einem Temperaturbereich zwischen 130°C und 230°C vulkanisierbar und somit aushärtbar ist. Die so erzielte Aushärtung beinhaltet eine chemische Vernetzung.

Mit thermischer Vulkanisation ist in dieser Schrift ausschließlich die Schwefelvulkanisation gemeint, also die durch Temperaturerhöhung aktivierte und vollzogene Vernetzung ungesättigter Verbindungen mittels Schwefel.

Zur Aktivierung der Schwefelvulkanisation können Vulkanisationsbeschleuniger und Vulkanisationshilfs- und zusatzstoffe zugesetzt werden. Diese Stoffe bewirken eine Herabsetzung der Aktivierungstemperatur und / oder eine beschleunigte Aushärtung und Vernetzung.

Unter einem schmelzbaren Polybutadien-Polyurethan wird in dieser Schrift ein durch eine Polyadditionsreaktion aus mindestens einem mindestens zweifach hydroxyl-funktionalisierten Polybutadien oder Polybutadien-Derivat, mindestens einem Kettenverlängerer mit einer Hydroxyl-Funktionalität von zwei und einer Molmasse von kleiner oder gleich 300 g/mol, und mindestens einem Diisocyanat hergestelltes schmelzbares Reaktionsprodukt verstanden, wobei an der Umsetzung zum Polybutadien-Polyurethan keine anderen Polyole oder Isocyanate als die vorgenannten beteiligt sind, das bei Raumtemperatur genügend fest und formstabil ist, dass es bei Raumtemperatur auf einem Trennliner oder auf einem Trägermaterial zu einer Rolle aufgewickelt werden kann, ohne dass es an der Seite herausfließt beziehungsweise durch den Wickeldruck herausgequetscht wird. Unter mindestens zweifach hydroxyl-funktionalisierten Polybutadien-Derivaten sind von Polybutadien-Diolen oder -Polyolen abgeleitete Stoffe zu verstehen, die mehrere, jeweils eine Kohlenstoff/ Kohlenstoff-Doppelbindung enthaltende C4-Einheiten besitzen und gleichzeitig noch entweder zusätzliche funktionelle Gruppen wie beispielsweise Epoxidgruppen oder zusätzliche Seitenketten wie beispielsweise Vinyl-Gruppen oder andere zusätzliche Strukturelemente tragen.

Ein schmelzbares Reaktionsprodukt im Sinne dieser Schrift hat eine mit einem Rheometer im Oszillationsversuch bei einer sinusförmig oszillierenden Scherbeanspruchung in einer Platte-Platte-Anordnung, einer Temperatur von 23 °C und einer Oszillationsfrequenz von 10,0 rad/s gemessene komplexe Viskosität von mindestens 3.000 Pas, vorzugsweise mindestens 6.000 Pas, idealerweise mindestens 10.000 Pas. Bei Temperaturen im Bereich zwischen 40°C und 100°C und einer Oszillationsfrequenz von 10,0 rad/s verringert sich die komplexe Viskosität bis auf weniger als 1.000 Pas, vorzugsweise bis auf weniger als 500 Pas, idealerweise bis auf weniger als 200 Pas. Die Oszillationsfrequenz entspricht der Winkelfrequenz.

Die komplexe Viskosität $\eta^*$ ist folgendermaßen definiert: $\eta^* = G^* / \omega$ ($G^*$ = komplexer Schubmodul, $\omega$ = Winkelfrequenz).

Die weiteren Definitionen lauten:

$$G^* = \sqrt{(G')^2 + (G'')^2}$$

($G''$ = Viskositätsmodul (Verlustmodul), $G'$ = Elastizitätsmodul (Speichermodul)).

$G'' = \tau/\gamma \cdot \sin(\delta)$ ($\tau$ = Schubspannung, $\gamma$ = Deformation, $\delta$ = Phasenwinkel = Phasenverschiebung zwischen Schubspannungs- und Deformationsvektor).

$G' = \tau/\gamma \cdot \cos(\delta)$ ($\tau$ = Schubspannung, $\gamma$ = Deformation, $\delta$ = Phasenwinkel = Phasenverschiebung zwischen Schubspannungs- und Deformationsvektor).

$$\omega = 2\pi \cdot f$$

($f$ = Frequenz).

Haftklebrigkeit ist die Eigenschaft eines Stoffes, bereits unter relativ schwachem Andruck eine dauerhafte Verbindung zu einem Haftgrund einzugehen. Stoffe, die diese Eigenschaft besitzen, werden als Haftklebstoffe bezeichnet. Haftklebstoffe sind seit langem bekannt. Häufig können sie nach Gebrauch im Wesentlichen rückstandsfrei vom Haftgrund wieder abgelöst werden. Haftklebstoffe sind in der Regel bei Raumtemperatur permanent eigenklebrig, weisen also eine gewisse Viskosität und Anfassklebrigkeit auf, so dass sie die Oberfläche des jeweiligen Haftgrunds bereits bei geringem Andruck benetzen. Die Fähigkeit eines Haftklebstoffs, auf Werkstoffen zu haften und Kräfte zu übertragen, beruht auf dem Adhäsionsvermögen und der Kohäsion des Haftklebstoffs.

Haftklebstoffe können als extrem hochviskose Flüssigkeiten mit einem elastischen Anteil betrachtet werden. Haftklebstoffe haben demzufolge besondere, charakteristische viskoelastische Eigenschaften, die zu der dauerhaften Eigenklebrigkeit und Klebfähigkeit führen.

Kennzeichnend für sie ist, dass, wenn sie mechanisch deformiert werden, es sowohl zu viskosen Fließprozessen als auch zum Aufbau elastischer Rückstellkräfte kommt. Beide Prozesse stehen hinsichtlich ihres jeweiligen Anteils in einem bestimmten Verhältnis zueinander, abhängig sowohl von der genauen Zusammensetzung, der Struktur und dem Vernetzungsgrad des jeweiligen Haftklebstoffs als auch von der Geschwindigkeit und Dauer der Deformation sowie von der Temperatur.

Der anteilige viskose Fluss ist zur Erzielung von Adhäsion notwendig. Nur die viskosen Anteile, hervorgerufen durch Makromoleküle mit relativ großer Beweglichkeit, ermöglichen eine gute Benetzung und ein gutes Anfließen auf das zu verklebende Substrat. Ein hoher Anteil an viskosem Fluss führt zu einer hohen Haftklebrigkeit (auch als Tack oder Oberflächenklebrigkeit bezeichnet) und damit oft auch zu einer hohen Klebkraft. Stark vernetzte Systeme, kristalline oder glasartig erstarrte Polymere sind mangels fließfähiger Anteile in der Regel nicht oder zumindest nur wenig haftklebrig.

Die anteiligen elastischen Rückstellkräfte sind zur Erzielung von Kohäsion notwendig. Sie werden zum Beispiel durch sehr langkettige und stark verknäuelte sowie durch physikalisch oder chemisch vernetzte Makromoleküle hervorgerufen und ermöglichen die Übertragung der auf eine Klebverbindung angreifenden Kräfte. Sie führen dazu, dass eine Klebverbindung einer auf sie einwirkenden Dauerbelastung, zum Beispiel in Form einer dauerhaften Scherbelastung, in ausreichendem Maße über einen längeren Zeitraum standhalten kann.

Zur genaueren Beschreibung und Quantifizierung des Maßes an elastischem und viskosem Anteil sowie des Verhältnisses der Anteile zueinander können die mittels Dynamisch Mechanischer Analyse (DMA) ermittelbaren Größen Speichermodul ($G'$) und Verlustmodul ($G''$) herangezogen werden. $G'$ ist ein Maß für den elastischen Anteil, $G''$ ein Maß für den viskosen Anteil eines Stoffes. Beide Größen sind abhängig von der Deformationsfrequenz und der Temperatur.

Die Größen können mit Hilfe eines Rheometers ermittelt werden. Das zu untersuchende Material wird dabei zum Beispiel in Form einer planparallelen Schicht in einer Platte-Platte-Anordnung einer sinusförmig oszillierenden Scherbeanspruchung ausgesetzt. Bei schubspannungsgesteuerten Geräten werden die Deformation als Funktion der Zeit und der zeitliche Versatz dieser Deformation gegenüber dem Einbringen der Schubspannung gemessen. Dieser zeitliche Versatz wird als Phasenwinkel $\delta$ bezeichnet.

Der Speichermodul $G'$ ist wie folgt definiert: $G' = (\tau/\gamma) * \cos(\delta)$ ($\tau$ = Schubspannung, $\gamma$ = Deformation, $\delta$ = Phasenwinkel = Phasenverschiebung zwischen Schubspannungs- und Deformationsvektor). Die Definition des Verlustmoduls G" lautet: G" = (τ/γ) * sin(δ) (τ = Schubspannung, γ = Deformation, δ = Phasenwinkel = Phasenverschiebung zwischen Schubspannungs- und Deformationsvektor).

Ein Stoff und die daraus hergestellte Schicht gelten im Allgemeinen als haftklebrig und werden im Sinne dieser Schrift als haftklebrig definiert, wenn bei Raumtemperatur, hier definitionsgemäß bei 23 °C, im Deformationsfrequenzbereich von $10°$ bis $10^1$ rad/sec, G' zumindest zum Teil im Bereich von $10^3$ bis $10^7$ Pa liegt und wenn G" ebenfalls zumindest zum Teil in diesem Bereich liegt. Zum Teil heißt, dass zumindest ein Abschnitt der G'-Kurve innerhalb des Fensters liegt, das durch den Deformationsfrequenzbereich von einschließlich $10°$ bis einschließlich $10^1$ rad/sec (Abszisse) sowie den Bereich der G'-Werte von einschließlich $10^3$ bis einschließlich $10^7$ Pa (Ordinate) aufgespannt wird, und wenn zumindest ein Abschnitt der G"-Kurve ebenfalls innerhalb dieses Fensters liegt.

Innerhalb dieses Bereiches, den man in einer Matrix-Auftragung aus G' und G" (G' aufgetragen in Abhängigkeit von G") auch als viskoelastisches Fenster für Haftklebeanwendungen oder als Haftklebstofffenster nach viskoelastischen Kriterien bezeichnen kann, gibt es wiederum unterschiedliche Sektoren und Quadranten, die die zu erwartenden Haftklebeeigenschaften der jeweils zugehörigen Stoffe näher charakterisieren. Stoffe mit hohem G" und niedrigem G' innerhalb dieses Fensters zeichnen sich beispielsweise im Allgemeinen durch eine hohe Klebkraft und eine geringe Scherfestigkeit aus, während sich Stoffe mit hohem G" und hohem G' sowohl durch eine hohe Klebkraft als auch durch eine hohe Scherfestigkeit auszeichnen.

Generell sind die Erkenntnisse über die Zusammenhänge zwischen Rheologie und Haftklebrigkeit Stand der Technik und beispielsweise in "Satas, Handbook of Pressure Sensitive Adhesive Technology, Third Edition, (1999), Seiten 153 bis 203" beschrieben.

Gemahlener Schwefel ist löslicher oder unlöslicher gemahlener Elementarschwefel. Der Reinheitsgrad sollte mindestens 95% betragen, besser mindestens 99%. Der Schwefel sollte so fein gemahlen sein, dass der Siebrückstand bei einer Maschenweite von 100μm höchstens 2% beträgt. Gröbere Sorten funktionieren im Prinzip zwar auch, jedoch kann es dazu führen, dass der Klebstoff dann eine optisch deutlich wahrnehmbare Rauigkeit besitzt und und die erzielbaren Klebfestigkeiten etwas geringer sind.

Unter Vulkanisationsbeschleunigern, die in dem erfindungsgemäßen Klebstoff optional enthalten sein können, werden in dieser Schrift alle Stoffe verstanden, die die Vulkanisation bekanntermaßen beschleunigen. Diese können auch gleichzeitig Schwefelspender sein. In den Erfindungsgedanken werden auch solche bekannten Schwefelspender einbezogen, die in der Fachliteratur nicht ausdrücklich gleichzeitig auch als Beschleuniger klassifiziert werden.

Die wichtigsten Vulanisationsbeschleuniger lassen sich in folgende bekannte Substanzklassen einordnen: Mercapto-Beschleuniger, Sulfenamid-Beschleuniger, Sulfenimid-Beschleuniger, Thiuram-Beschleuniger, Dithiocarbamat-Beschleuniger, Dithiocarbamylsulfenamid-Beschleuniger, Xanthogenat-Beschleuniger, Guanidin-Beschleuniger, Amin-Beschleuniger, Thioharnstoff-Beschleuniger, Dithiophosphat-Beschleuniger und SchwefelSpender. Beispiele für Mercapto-Beschleuniger sind 2-Mercaptobenzothiazol (MBT), Zink-2-mercaptobenzothiazol (ZMBT) und Dibenzothiazyldisulfid (MBTS). Typische Sulfenamid-Beschleuniger sind N-Cyclohexyl-2-benzothiazolsulfenamid (CBS), N-tert-Butyl-2-benzothiazolsulfenamid (TBBS), N-Oxydiethylen-2-benzothiazolsulfenamid (MBS) und N,N'-Dicyclohexyl-2-benzothiazolsulfenamid (DCBS). Ein Beispiel für einen Sulfenimid-Beschleuniger ist N-tert-Butyl-2-benzothiazolsulfenimid. Beispiele für Thiuram-Beschleuniger sind Tetramethylthiurammonosulfid (TMTM), Tetramethylthiuramdisulfid (TMTD), Tetraethylthiuramdisulfid (TETD), Tetrabenzylthiuramdisulfid (TBzTD), Tetraisopropylthiuramdisulfid (TiPTD), Dimethyldiphenylthiuramdisulfid (MPTD) und Dipentamethylenthiuramtetrasulfid (TPTT). Zink-dimethyldithiocarbamat (ZDMC), Zink-diethyldithiocarbamat (ZDEC), Zinkdibutyldithiocarbamat (ZDBC), Zink-pentamethylendithiocarbamat (Z5MC), Zink-ethylphenyldithiocarbamat (ZEPC), Zink-dibenzyldithiocarbamat (ZBEC), Zinkdiisopropyldithiocarbamat (ZDIPC), Piperidin-pentamethylendithiocarbamat (PPC), Tellurdimethyldithiocarbamat (TDMC), Tellur-diethyldithiocarbamat (ZDEC), Bleidimethyldithiocarbamat (PbDMC), Kupfer-dimethyldithiocarbamat (CuDMC), Kupferdibutyldithiocarbamat (CuDBC), Wismuth-dimethyldithiocarbamat (BiDMC) und Natriumdimethyldithiocarbamat (NaDMC) stellen eine Auswahl an bekannten Dithiocarbamat-Beschleunigern dar. Typische Dithiocarbamylsulfenamid-Beschleuniger sind N-Oxydiethylendithiocarbamyl-N'-oxydiethylensulfenamid (OTOS) und N-Oxydiethylendithiocarbamyl-N'-tert-butylsulfenamid (OTTBS). Bekannte Beispiele für Xanthogenat-Beschleuniger sind Zink-isopropylxanthogenat (ZIX), Zink-butylxanthogenat (ZBX), Natrium-isopropylxanthogenat (NaIX) und Polyxanthogenat. Typische Guanidin-Beschleuniger sind Diphenylguanidin (DPG), Di-o-tolylguanidin (DOTG) und o-Tolylbiguanid (OTBG). Amin-Beschleuniger sind zum Beispiel Butyraldehydanilin (BAA), Tricrotonylidentetramin (TCT), Hexamethylentetramin (HEXA), Polyethylenpolyamine (PEP) sowie Cyclohexylethylamin (CEA). N,N'-Ethylenthioharnstoff (ETU), N,N'-Dibutylthioharnstoff (DBTU), N,N'-Diethylthioharnstoff (DETU) und N,N'-Diphenylthioharnstoff (DPTU) sind Beispiele für Thioharnstoff-Beschleuniger. Bekannte Dithiophosphat-Beschleuniger sind Zink-dibutyldithiophosphat (ZBPD), Zink-diisooctyldithiophosphat (ZOPD), Dodecylammonium-diisooctyldithiophosphat (AOPD) und Kupfer-diisopropyldithiophosphat (CuPPD). Als Schwefelspender seien 2-Morpholinodithiobenzothiazol (MBSS), N,N'-Dithiodimorpholin (DTDM) und Caprolactamdisulfid (CLD) genannt.

Generell gehört das Wissen über Vulkanisationsbeschleuniger zum Stand der Technik und ist beispielsweise in "Werner Hoffmann, Heinz Gupta, Handbuch der Kautschuk-Technologie (2001)" dargestellt.

Bevorzugte Substanzklassen sind Mercapto-Beschleuniger, Thiuram-Beschleuniger und Dithiocarbamat-Beschleuniger. Mercapto-Beschleuniger werden als "all-purpose"-Beschleuniger angesehen, die im Temperaturbereich von 160°C bis 180°C für eine zügige Vulkanisation sorgen und keinen negativen Einfluss auf die Stabiltät des noch nicht vulkanisierten Klebstoffes haben. Die Thiuram-Beschleuniger und Dithiocarbamat-Beschleuniger werden einzeln oder in Kombination, oder auch in Kombination mit den Mercapto-Beschleunigern, als "Ultrabeschleuniger" angesehen, die bereits bei Temperaturen ab 130°C für eine schnelle Vulkanisation sorgen und dennoch eine ausreichende Stabilität während der Herstellung des Klebstoffes, selbst bei Compoundierungstemperaturen bis ca. 90°C, und während der späteren Lagerung bei Temperaturen zwischen Raumtemperatur und 30°C gewährleisten. Ein bevorzugter "all-purpose"-Vulkanisationsbeschleuniger ist MBTS. Bevorzugte "Ultrabeschleuniger" sind TBzTD und ZBEC. Neben technisch-funktionalen Gesichtspunkten spielt bei der Auswahl auch der Sicherheitsaspekt im Hinblick auf die mögliche Freisetzung gefährlicher, carcinoger Spaltprodukte, insbesondere carcinogener N-Nirosamine, eine Rolle. Diesbezüglich gelten MBTS, TBzTD und ZBEC als unkritisch.

Bevorzugte Konzentrationen der Vulkanisationsbeschleuniger in dem thermisch vulkanisierbaren, schmelzbaren, vorzugsweise haftklebrigen Klebstoff betragen zusammen zwischen mindestens 0,1 Gewichtsprozent und maximal 15,0 Gewichtsprozent, bevorzugt zwischen mindestens 0,5 und maximal 12,5 Gewichtsprozent , besonders bevorzugt zwischen mindestens 1,0 und maximal 10,0 Gewichtsprozent.

Hohe Konzentrationen der Vulkanisationsbeschleuniger erniedrigen die Härtungsstemperatur, erhöhen aber die Gefahr, dass während der Verarbeitung die Härtung (Vulkanisation) bereits anspringt. Liegt die Härtungtemperatur der Klebemasse unterhalb von 130 °C ist es bevorzugt, für die Compoundierung im Extruder als Compoundierextruder einen Planetwalzenextruder zu verwenden, da hiermit die Compoundiertemperaturen unterhalb von 90 °C, insbesondere bevorzugt unterhalb von 80 °C, gehalten werden können.

Um die Vulkanisation weiter zu beschleunigen, können bei Bedarf auch noch Vulkanisationshilfs- und zusatzstoffe wie zum Beispiel Metalloxide, insbesondere Zinkoxid, Fettsäuren, wie zum Beispiel Stearinsäure oder deren Salze zugegeben werden. Im Hinblick auf die Stabilität des noch nicht vulkanisierten Klebstoffes und im Hinblick auf die Haftungseigenschaften nach der Vulkanisation, insbesondere auf geölten Blechen, erwies sich die Verwendung von Vulkanisationshilfs- und zusatzstoffen eher kritisch, so dass bevorzugte Ausführungsformen frei von diesen Stoffen sind.

Als Füllstoffe, die optional ebenfalls enthalten sein können, können sowohl verstärkende, wie zum Beispiel Ruß, als auch nicht verstärkende, wie zum Beispiel Carbonate, insbesondere Kreide oder Sulfate wie zum Bespiel Bariumsulfat, eingesetzt werden. Weitere Beispiele für in Frage kommende Füllstoffe sind Silikate, wie etwa Talkum, Kaolin, calciniertes oder teilcalciniertes Kaolin, Wollastonite oder Glimmer, Hydroxide oder Oxide, wie etwa Quarzmehl, Aluminiumhydroxid, Zinkoxid oder Calciumoxid. Auch Mikrokugeln kommen als Füllstoffe in Frage. Mikrokugeln können Mikrovollglaskugeln, Mikrohohlglaskugeln und/oder Mikrokunststoffkugeln aller Art sein. Die Mikrokunststoffkugeln können vorexpandiert sein oder unexpandiert vorliegen. Die Partikelgröße im expandierten Zuustand liegt meist im Bereich zwischen 20 und 150 $\mu$m. Auch Mischungen der genannten Stoffe können eingesetzt werden. Insbesondere haben sich Mischungen aus Calciumcarbonat und Calciumoxid als besonders vorteilhaft im Hinblick auf das Erzielen hoher Klebfestigkeiten und der Minimierung einer gelegentlichen Bläschenbildung während der thermischen Vulkanisation erwiesen. Vorteilhafte Gewichtsanteile von Calciumcarbonat und Calciumoxid an dem thermisch vulkanisierbaren, schmelzbaren, vorzugsweise haftklebrigen Klebstoff betragen zusammen zwischen 10,0 und 70,0 Gewichtsprozent. Auch Talkum hat sich aus den gleichen Gründen als vorteilhaft herausgestellt. Vorteilhafte Gewichtsanteile von Talkum an dem thermisch vulkanisierbaren, schmelzbaren, vorzugsweise haftklebrigen Klebstoff betragen zwischen 10,0 und 50,0 Gewichtsprozent.

Optional kann der thermisch vulkanisierbare, schmelzbare, vorzugsweise haftklebrige Klebstoff Epoxidharze enthalten. Unter einem Epoxidharz werden dabei Kunstharze verstanden, die Epoxidgruppen tragen. Vorteilhaft sind Bisphenol-basierte Epoxidharze, insbesondere Bisphenol A-basierte, aber auch Bisphenol F-basierte. Besonders vorteilhaft ist ein bei Raumtemperatur flüssiges Epoxidharz, insbesondere das Reaktionsprodukt aus Bisphenol-A und Epichlorhydrin mit einem zahlengemittelten, mittleren Molekulargewicht von kleiner oder gleich 700 g/mol (CAS-Nr. 25068-38-6), aber auch entsprechende feste Reaktionsprodukte mit höheren zahlengemittelten, mittleren Molekulargewichten sind optionale Epoxidharze. Andere vorteilhafte Epoxidharze sind Epoxyphenol-Novolak-Harze, Epoxy-dicyclopentadienphenol-Novolak-Harze, Epoxykresol-Novolak-Harze, Glycidylaminbasierte Epoxidharze, insbesondere Triglycidylether von para-Aminophenol, Triglycidylether von meta-Aminophenol, Tetraglycidylether von Methylendianilin, Hydroxylphenyl-basierte Epoxidharze sowie aliphatische Epoxidharze, insbesondere cycloaliphatische. Zu nennen ist hier insbesondere 3,4-Epoxycyclohexylmethyl-3',4'-epoxycyclohexancarboxylat (CAS-Nr. 2386-87-0).

Eine vorteilhafte Konzentration des Epoxidharzes in dem thermisch vulkanisierbaren, schmelzbaren, vorzugsweise haftklebrigen Klebstoff liegt zwischen einschließlich 1,0 Gew.% und einschließlich 20 Gew.%. Besonders vorteilhaft ist eine Konzentration zwischen einschließlich 5,0 Gew.% und einschließlich 15,0 Gew.%. Der Zusatz von Epoxidharzen hat sich insbesondere im Hinblick auf die Haftungseigenschaften des thermisch vulkanisierbaren, schmelzbaren, vorzugsweise haftklebrigen Klebstoffes auf geölten Blechen nach der thermischen Vulkanisationsreaktion als vorteilhaft herausgestellt. Weiterhin wird die Viskosität des Compounds während der Herstellung des Klebstoffes vorteilhaft herabgesetzt, so dass bei niedrigeren Prozesstemperaturen gearbeitet werden kann.

Vorteilhafterweise erfolgt die chemische Umsetzung zum schmelzbaren Polybutadien-Polyurethan bereits in Gegenwart des optionalen mindestens einen Epoxidharzes. Der Vorteil dieses Verfahrens besteht darin, dass das mindestens eine Epoxidharz energiesparend bei Raumtemperatur eingearbeitet werden kann. Würde dagegen das Polybutadien-Polyurethan erst hergestellt und anschließend das mindestens eine Epoxidharz zugegeben wird, müsste das Polybutadien-Polyurethan zunächst so hoch erhitzt werden, bis es als Schmelze vorliegt. Dies hätte den Nachteil, dass ein höherer Energieeintrag notwendig wäre. Ein weiterer Vorteil ist, dass die Erweichungsbeziehungsweise Schmelztemperatur des Gemisches aus Prepolymer und Epoxidharz deutlich niedriger als die Erweichungs- beziehungsweise Schmelztemperatur des reinen Prepolymers ist, wobei der Hotmeltcharakter dennoch erhalten bleibt. Eine spätere Compoundierung mit Schwefel und weiteren Stoffen, wie zum Beispiel Vulkanisationsbeschleunigern kann somit energiesparend und schonend bei niedrigeren Temperaturen erfolgen als ohne das bereits während der Polybutadien-Polyurethan-Herstellung eingearbeitete Epoxidharz. Auf diese Weise ist auch eine Compoundierung mit sogenannten Ultrabeschleunigern, die mitunter bereits bei ungefähr 120°C innerhalb von wenigen Minuten die Vulkanisation anspringen lassen, möglich, ohne dass es zu unerwünschten Aushärtungen oder Vergelungen während des Compoundierprozesses kommt. Erfolgt die spätere Compoundierung des Polybutadien-Polyurethans mit Schwefel, Vulkanisationsbeschleunigern und Vulkanisationshilfs- und zusatzstoffen in einem kontinuierlich arbeitendem Mischaggregat, insbesondere einem Compoundierextruder, ist ein weiterer Vorteil dadurch gegeben, dass keine der in der Regel begrenzt verfügbaren Dosierstellen am Compoundierextruder durch das mindestens eine Epoxidharz blockiert wäre.

Die Tatsache, dass es technisch möglich ist, die isocyanat-basierte chemische Umsetzung zum Polybutadien-Polyurethan in Gegenwart eines oder mehrerer Epoxidharze erfolgen zu lassen, ist für den Fachmann überraschend, denn Isocyanate sind in der Fachliteratur als reaktiv gegenüber Epoxiden beschrieben, so beispielsweise in Ullmann's Encyclopedia of Industrial Chemistry, 6th Edition, Vol. 12, Seite 271 (Tabelle) und in Encyclopedia of Polymer Science and Engineering, Vol. 6, S. 345.

Überraschend wurde zudem gefunden, dass Mischungen aus Epoxidharz und dem Polybutadien-Polyurethan-Hotmelt zur Phasenseparierung neigen, wenn das mindestens eine Epoxidharz erst nach der Herstellung des Polybutadien-Polyurethans zugemischt wird. Erfolgt dagegen die chemische Umsetzung zum Polybutadien-Polyurethan in Gegenwart des Epoxidharzes/ der Epoxidharze, werden zwar in der Regel je nach Mischungsverhältnis trübe, aber nicht separierende Mischungen erhalten, die den Vorteil haben, homogen zu vulkanisieren (auszuhärten), wodurch eine höhere Festigkeit und eine verbesserte Haftung erzielt werden kann als bei Verwendung einer inhomogenen Mischung aus Polybutadien-Polyurethan und Epoxidharz. In analoger Weise können auch andere Stoffe, wie zum Beispiel Weichmacher, Klebrigmacherharze, Bitumen oder auch Füllstoffe oder rheologische Additive bereits vor oder während der chemischen Umsetzung zum Polybutadien-Polyurethan zugegeben werden.

Optional kann der thermisch vulkanisierbare, schmelzbare, vorzugsweise haftklebrige Klebstoff auch Klebrigmacherharze enthalten. Unter der Bezeichnung "Klebrigmacherharz", englisch "Tackifier Resins", versteht der Fachmann einen Stoff auf Harzbasis, der die Klebrigkeit erhöht. Klebrigmacherharze lassen sich einteilen in Naturharze und synthetische Harze.

Typische Naturharze sind auf Kolophonium basierende Harze und ihre Derivate. Kolophoniumharze schließen zum Beispiel natürliches Kolophonium, polymerisiertes Kolophonium, teilweise hydriertes Kolophonium, vollständig hydriertes Kolophonium, veresterte Produkte dieser Kolophoniumarten (wie Glycerinester, Pentaerythritester, Ethylenglycolester und Methylester) und Kolophoniumderivate (wie Disproportionierungs-Kolophonium, mit Fumarsäure modifiziertes Kolophonium und mit Kalk modifiziertes Kolophonium) ein.

Typische synthetische Harze sind Polyterpenharze, wobei die Rohstoffe hier allerdings natürlichen Quellen entstammen, Kohlenwasserstoffharze und Terpenphenolharze. Es handelt sich sich dabei um Polymere mit niedrigem Molekulargewicht. Das gewichtsgemittelte, mittlere Molekulargewicht beträgt in der Regel kleiner 25.000 g/mol. Polyterpenharze basieren auf $\alpha$-Pinen und/oder $\beta$-Pinen und/oder $\delta$-Limonen. Diese können hydriert, nicht hydriert oder teilhydriert sein.

Rohstoffe für die meisten Kohlenwasserstoffharze sind Nebenprodukte, die bei der Crackung von Naphtha oder Gasöl anfallen. Kohlenwasserstoffharze können danach klassifiziert werden, ob sie auf in erster Linie aromatischen, aliphatischen oder Dien-Monomeren basieren. Aromatische werden oft als C-9-Harze, aliphatische als C-5-Harze und Dien-Harze als $(C-5)_2$-Harze bezeichnet. Gemischte aromatisch-aliphatische Kohlenwasserstoffharze ((C-5/C-9)-Harze) sind ebenfalls vom Erfindungsgedanken eingeschlossen. Auch Kohlenwasserstoffharze können hydriert, nicht hydriert oder teilhydriert sein.

Vom Erfindungsgedanken eingeschlossen sind weiterhin Monomerharze vom Typ Styrol / $\alpha$-Methylstyrol (CAS-Nr.: 9011-11-4). Terpenphenolharze sind nach DIN 16916-1 1981-06 und ISO/TR 8244:1988 Harze, die durch Säurekatalysierte Addition von Phenolen an Terpene oder Kolophonium hergestellt werden.

Erfindungsgemäß bevorzugte Klebrigmacherharze sind Polyterpenharze auf Basis von $\alpha$-Pinen und/oder $\beta$-Pinen und/oder $\delta$-Limonen. Ganz besonders bevorzugt sind $\beta$-Pinen-Harze (CAS-Nr.: 25719-60-2), beispielsweise das Harz Dercolyte S-115 von der Firma DRT.

Vorteilhafte Konzentrationen der Klebrigmacherharze in dem thermisch vulkanisierbaren, schmelzbaren, vorzugsweise haftklebrigen Klebstoff liegen zwischen einschließlich 1,0 Gew.% und einschließlich 30,0 Gew.%. Besonders vorteilhaft sind Konzentrationen zwischen einschließlich 5,0 Gew.% und einschließlich 20,0 Gew.%. Der Zusatz von Klebrigmacherharzen hat sich insbesondere im Hinblick auf die Haftungseigenschaften des thermisch vulkanisierbaren, schmelzbaren, vorzugsweise haftklebrigen Klebstoffes auf geölten Blechen vor der thermischen Vulkanisationsreaktion als vorteilhaft herausgestellt. Die Klebkraft des noch nicht vulkanisierten Klebstoffes auf geölten Blechen kann so signifikant erhöht werden.

Optional kann der thermisch vulkanisierbare, schmelzbare, vorzugsweise haftklebrige Klebstoff weiterhin Bitumen enthalten. Bitumen ist ein dunkelfarbiges, halbfestes bis springhartes, hochmolekulares Kohlenwasserstoffgemisch, das bei der Destillation geeigneten Erdöls als Rückstand anfällt und noch chemisch gebundenen Schwefel, Sauerstoff, Stickstoff und einige Spuren von Metallen enthält. Physikalisch gesehen gehört Bitumen zu den thermoplastischen Stoffen, das heißt seine Eigenschaften sind temperaturabhängig. Bei Abkühlung wird es spröde, bei Erwärmung durchläuft es stufenlos alle Zustände von fest über zähflüssig bis dünnflüssig. Man unterscheidet unter anderem folgende Bitumenarten und abgeleitete Produkte: Straßenbaubitumen, insbesondere Weichbitumen, modifiziertes Bitumen, insbesondere polymermodifiziertes Bitumen, Industrie-Bitumen, insbesondere Oxidationsbitumen beziehungsweise Hartbitumen, Flux-Bitumen und Bitumenemulsion.

Erfindungsgemäß bevorzugt ist Straßenbaubitumen. Besonders bevorzugt ist die Sorte 50/70, wobei die Zahlen die minimale und maximale Penetration bei 25°C in der Einheit mm/10 nach DIN EN 1426 angeben. Vorteilhafte Bitumen-Konzentrationen in dem thermisch vulkanisierbaren, schmelzbaren, vorzugsweise haftklebrigen Klebstoff liegen zwischen einschließlich 1,0 Gew.% und einschließlich 30,0 Gew.%. Besonders vorteilhaft sind Konzentrationen zwischen einschließlich 5,0 Gew.% und einschließlich 20,0 Gew.%. Durch den Zusatz von Bitumen kann die Ölaufnahme verbessert werden, wenn auf geölten Blechen geklebt wird.

Optional kann der thermisch vulkanisierbare, schmelzbare, vorzugsweise haftklebrige Klebstoff außerdem Weichmacher enthalten. Weichmacher sind flüssige oder feste, indifferente organische Substanzen mit geringem Dampfdruck, überwiegend solche esterartiger Natur, welche ohne chemische Reaktion, vorzugsweise durch ihr Löse- und Quellvermögen, unter Umständen aber auch ohne ein solches, mit hochpolymeren Stoffen in physikalische Wechselwirkung treten und ein homogenes System mit diesen bilden können. Die Kurzbezeichnungen von Weichmachern sind in der DIN EN ISO 1043-3: 2000-01 geregelt. Die wichtigsten Weichmacher lassen sich in größere Gruppen einteilen, die im Folgenden aufgeführt sind, wobei in Klammern die Kurzzeichen nach DIN EN ISO 1043-3: 2000-01 stehen.

Phthalsäureester, auch kurz Phthalate genannt, umfassen unter anderem Dioctylphthalat (DOP; Di(2-ethylhexyl)phthalat), Diisononylphthalat (DINP), Diisodecylphthalat (DIDP) Phthalsäureester mit überwiegend linearen $C_6$- bis $C_{11}$-Alkoholen, Dibutylphthalat (DBP), Diisobutylphthalat (DIBP), Dicyclohexylphthalat (DCHP), Dimethylphthalat (DMP) und Diethylphthalat (DEP) sowie Mischester aus Benzyl(butyl)- (BBP), Butyl(octyl)-, Butyl(decyl)- und Dipentylphthalat, Bis(2-methoxyethyl)phthalat und Dicaprylphthalat (DCP).

Ein Beispiel für Trimellit(h)säureester mit (überwiegend) linearen $C_6$- bis $C_{11}$-Alkoholen ist Tris(2-ethylhexyl)trimellitat (TOTM).

Acyclische aliphatische Dicarbonsäureester sind zum Beispiel Ester der Adipinsäure wie Bis(2-ethylhexyl)adipat (Dioctyladipat, DOA), Bis(8-methylnonyl)adipat (Diisodecyladipat, DIDA), Dibutyldecandioat (Dibutylsebacat, DBS), Bis(2-ethylhexyl)decandioat (Dioctylsebacat, DOS); Ein Beispiel für einen cyclischen aliphatischen Dicarbonsäureester ist 1,2-Cyclohexandicarbonsäurediisononylester (DINCH).

Beispiele für Polymerweichmacher sind Polyester aus Adipin-, Decandi-, Nonandi- und Phthalsäure mit Diolen wie Butan-1,3-diol, Propan-1,2-diol, Butan-1,4-diol, Hexan-1,6-diol und anderen ($M_r$ ca. 1800-13000 g/mol).

Phosphorsäureester, kurz Phosphate genannt, sind eine weitere Gruppe. Beispielhaft zu nennen wären hier Trikresylphosphat (TCF), Triphenylphosphat (TPP), Diphenylkresylphosphat (DPCF), (2-Ethylhexyl)diphenylphosphat (Diphenyloctylphosphat, DPOF) , Tris(2-ethylhexyl)phosphat (TOF) und Tris(2-butoxyethyl)phosphat.

Butyloleat oder Butylstearat sind Beispiele für Fettsäureester, die eine weitere Gruppe darstellen. Weitere Beispiele für diese Gruppe sind Methyl- und Butylester der acetylierten Ricinolfettsäure und Fettsäureglycolester sowie Triethylenglycol-bis(2-ethylbutyrat). Citronensäureester sind Beispiele für die Gruppe der Hydroxycarbonsäureester. Weitere Beispiele sind Weinsäureester und Milchsäureester.

Eine weitere Gruppe von Weichmachern sind Epoxyweichmacher, zum Beispiel epoxidierte Fettsäure-Derivate, insbesondere Triacylglycerole und Monoester. Auch einige der zuvor genannten Epoxidharze lassen sich in die Gruppe der Weichmacher einordnen. Weiterhin zu nennen wären noch Polyamidweichmache, zum Beispiel Benzolsulfonamide oder Methylbenzolsulfonamide. Eine weitere Gruppe von Weichmachern sind Alkylsulfonsäureester des Phenols (ASE). Auch Mineralöle sind im Sinne dieser Schrift als Weichmacher zu betrachten. Bevorzugt sind naphthenische Mineralöle. Auch das bereits separat aufgeführte Bitumen ließe sich in die Rubrik der Weichmacher einordnen.

In einer optionalen Ausführungsform enthält der thermisch vulkanisierbare, schmelzbare, vorzugsweise haftklebrige Klebstoff weitere Hilfs- und Zusatzstoffe wie zum Beispiel rheologische Additive, Alterungsschutzmittel (Antioxidantien), Lichtschutzmittel oder UV-Absorber. Beispiele für rheologische Additive sind pyrogene, hydrophobierte oder nicht hydrophobierte Kieselsäuren, Schichtsilikate (Bentonite), hochmolekulare Polyamidpulver oder Rizinusölderivat-Pulver. Die genannten rheologischen Additive können auch in die Rubrik der Füllstoffe eingeordnet werden. Zu den geeigneten Antioxidantien zählen zum Beispiel sterisch gehinderte Phenole, Hydrochinon-Derivate, Amine, organische Schwefelverbindungen oder organische Phosphorverbindungen.

Als Lichtschutzmittel finden zum Beispiel die bei Gaechter und Müller, Taschenbuch der Kunststoff-Additive, München 1979, bei Kirk-Othmer (3.) 23, 615 bis 627, bei Encycl. Polym. Sci. Technol. 14, 125 bis 148 und bei Ullmann (4.) 8, 21; 15, 529, 676 offenbarten Verbindungen Verwendung.

Das schmelzbare Polybutadien-Polyurethan ist ein durch eine Polyadditionsreaktion aus mindestens einem Polybutadien-Diol, zumindest einem Kettenverlängerer mit einer Hydroxyl-Funktionalität von zwei und einer Molmasse von kleiner oder gleich 300 g/mol und optional zumindest einem Polybutadien-Polyol mit einer zahlengemittelten, mittleren Funktionalität zwischen größer 2,0 und kleiner oder gleich 3,0 mit zumindest einem aliphatischen oder alicyclischen Diisocyanat hergestelltes Reaktionsprodukt, wobei an der Umsetzung zum Polybutadien-Polyurethan keine anderen Polyole oder Isocyanate als die vorgenannten beteiligt sind.

Kettenverlängerer im Sinne dieser Schrift sind alle Hydroxylgruppen tragenden Verbindungen mit einer Hydroxyl-Funktionalität von zwei und einer Molmasse von kleiner oder gleich 300 g/mol. Sie tragen keine weiteren isocyanat-reaktiven Gruppen. Es sind somit Diole mit einer Molmasse von kleiner oder gleich 300 g/mol. Bekanntlich sind viele Kettenverlängerer, die zur Herstellung von Polyurethanen auf Basis von Polyester- oder Polyether-Polyolen Verwendung finden, nicht mit Polybutadien-Diolen und -Polyolen verträglich. Es kommt zu Entmischungen. Erfindungsgemäß bevorzugt sind die mit Polybutadien-Diolen und -Polyolen verträglichen Kettenverlängerer. Dies sind beispielsweise N,N-Diisopropanolanilin (CAS-Nr. 003077-13-2), 2,2,4-Trimethyl-1,3-pentandiol (CAS-Nr. 144-19-4 ) und 2-Butyl-2-Ethyl-1,3-propandiol (CAS-Nr. 115-84-4). Besonders bevorzugt ist 2-Ethyl-1,3-hexandiol (CAS-Nr. 94-96-2). Die Erkenntnisse über die mit Polybutadien-Diolen und -Polyolen verträglichen Kettenverlängerer gehören zum Stand der Technik. Sie sind beispielsweise publiziert in Herbert Chao, Nan Tian, Cray Valley, USA, LLC, Exton, PA, PCI, April 2010.

Zur Erzielung einer hohen Haftklebrigkeit (eines hohen Tacks) unter gleichzeitiger Vermeidung einer zu großen Weichheit des Polybutadien-Polyurethans, die zu einer verminderten Scherfestigkeit führen würde, ist es vorteilhaft, wenn der anzahlmäßige Anteil der zur Bildung des Polybutadien-Polyurethans eingebrachten Hydroxylgruppen, die von dem zumindest einen Kettenverlängerer stammen, zwischen größer oder gleich 20,0 % und kleiner oder gleich 80,0 %, bevorzugt zwischen größer oder gleich 30,0 % und kleiner oder gleich 70,0 % beträgt. Der anzahlmäßige Anteil entspricht stets dem Stoffmengenanteil. Unter einem Polybutadien-Diol werden in dieser Schrift alle hydroxyl-funktionalisierten Polybutadiene oder deren Derivate verstanden, deren zahlengemittelte, mittlere Hydroxyl-Funktionalität zwei oder etwas weniger als zwei, mindestens aber 1,5, vorzugsweise mindestens 1,8 beträgt. Keinesfalls ist die zahlengemittelte, mittlere Hydroxyl-Funktionalität eines Polybutadien-Diols größer als zwei.

Unter einem Polybutadien-Polyol werden in dieser Schrift alle hydroxyl-funktionalisierten Polybutadiene oder deren Derivate mit einer zahlengemittelten, mittleren Funktionalität zwischen größer 2,0 und kleiner oder gleich 3,0 verstanden.

Unter der zahlengemittelten, mittleren Hydroxyl-Funktionalität wird die mittlere Zahl der Hydroxylgruppen pro Molekül eines Polyols verstanden. Sie wird in dieser Schrift auf das zahlengemittelte, mittlere Molekulargewicht des jeweiligen Polyols bezogen und nach der folgenden Formel berechnet:

$$f = M_n[g/mol] \times OHZ \ [mmol \ OH/kg]/10^6$$

f ist die zahlengemittelte, mittlere Hydroxyl-Funktionalität. $M_n$ ist das zahlengemittelte mittlere Molekulargewicht des jeweiligen Polyols in der Einheit [g/mol] und OHZ ist die Hydroxylzahl des Polyols in der Einheit [mmol OH / kg].

Die Hydroxylzahl ist ein Maß für den Gehalt an Hydroxylgruppen in einem Polyol.

Die Bestimmung der Hydroxylzahl erfolgt dabei nach DIN 53240. Nach dieser Methode wird die Hydroxylzahl (OHZ) in der Einheit [mg KOH/g] angegeben. Sie entspricht der Menge KOH in [mg], welche der bei der Acetylierung von 1 g Polyol gebundenen Menge Essigsäure gleichwertig ist. Zum Zwecke der Vereinfachung der Rezepturberechnungen wird die Hydroxylzahl in dieser Schrift in die Einheit [mmol OH/kg] umgerechnet.

Dies erfolgt nach folgender Formel:

$$OHZ \ [mmol \ OH/kg] = OHZ[mg \ KOH/g] \times 1000/56{,}1.$$

56, 1 ist dabei die Molmasse von KOH.

Die Hydroxylgruppen der Polybutadien-Diole und -Polyole können primär oder sekundär an die Polybutadien-Kette gebunden sein. Die Butadien-Einheiten der Polybutadien-Kette können in einer 1,4- cis oder trans-Form oder in einer 1,2-Form mit Vinyl-Gruppen in der Seitenkette oder in einer gemischten Weise miteinander verknüpft sein. Polybutadien-Diole werden durch anionische Polymerisation hergestellt während Polybutadien-Polyole mit einer zahlengemittelten, mittleren Funktionalität zwischen größer 2,0 und kleiner oder gleich 3,0 durch radikalische Polymerisation hergestellt werden. Polybutadien-Diole sind unter dem Handelsnamen Krasol ® kommerziell verfügbar, Polybutadien-Polyole mit einer zahlengemittelten, mittleren Funktionalität zwischen größer 2,0 und kleiner oder gleich 3,0 unter dem Handelsnamen Poly bd ®, beide Sorten von der Firma Cray Valley.

Zur Erzielung einer hohen Haftklebrigkeit (eines hohen Tacks) ist es vorteilhaft, Polybutadien-Diole mit einer zahlengemittelten mittleren Molmasse zwischen größer 1000 g/mol und kleiner 5000 g/mol, bevorzugt zwischen größer oder gleich 2000 g/mol und kleiner oder gleich 3000 g/mol zu verwenden.

Auch die optionalen Polybutadien-Polyole mit einer zahlengemittelten, mittleren Funktionalität zwischen größer 2,0 und kleiner oder gleich 3,0 sollten aus dem gleichen Grund vorteilhafterweise eine zahlengemittelte mittleren Molmasse zwischen größer 1000 g/mol und kleiner 5000 g/mol, bevorzugt zwischen größer oder gleich 2000 g/mol und kleiner oder gleich 3000 g/mol haben.

Die Polybutadien-Polyole mit einer zahlengemittelten, mittleren Funktionalität zwischen größer 2,0 und kleiner oder gleich 3,0 können optional zur Herstellung des Polybutadien-Polyurethans mitverwendet werden, um Verzweigungsstellen in das Polyurethan einzubauen. Ein gewisser Verzweigungsgrad hätte den Vorteil, dass das beschichtete Polyurethan während der thermischen Vulkanisation im Verlauf der Temperaturzuführung, aber vor dem Anspringen der Vulkanisationsreaktion weniger stark erweichen würde und somit in dieser Phase unmittelbar vor der durch die Vulkanisation hervorgerufenen Aushärtung eine höhere Scherfestigkeit besitzen würde.

Bei Mitverwendung der optionalen Polybutadien-Polyole mit einer zahlengemittelten, mittleren Funktionalität zwischen größer 2,0 und kleiner oder gleich 3,0 zur Herstellung des Polybutadien-Polyurethans muss darauf geachtet werden, dass keine Gelierung eintritt, dass also der Verzweigungsgrad im Verhältnis zur Länge der erzeugten Prepolymerketten nicht so hoch ist, dass es zu einer Vernetzung während der Polyadditionsreaktion kommt. Der Grad der Verzweigung wird so eingestellt, dass die Schmelzbarkeit des Polybutadien-Polyurethans gewährleistet ist, dass sich also keine vernetzten Strukturen ausbilden. Um vernetzte Strukturen auszuschließen, darf der sogenannte Gelpunkt nicht überschritten werden. Der theoretische Gelpunkt lässt sich mit der Gelpunktsgleichung von P.J.Flory berechnen. Eine aus der Flory-Gleichung abgeleitete Formel zur Abschätzung des Gelierungs- NCO/OH-Verhältnisses in Polyurethan-Bildungsreaktionen aus Diolen und Triolen mit Diisocyanaten im Unterschuss, lautet:

$$\left[\frac{NCO}{OH}\right]_{Gelierung} = \cfrac{1}{1 + \cfrac{1}{\cfrac{(Diol\text{-}OH)}{(Triol\text{-}OH)} + 1}}$$

Mit Diol-OH ist in dieser Formel die Gesamtanzahl der an der Polyurethan-Bildungsreaktion beteiligten Hydroxylgruppen gemeint, die von Polyolen herrühren, deren Hydroxyl-Funktionalität kleiner oder gleich zwei ist. Darin eingeschlossen sind auch die Kettenverlängerer. Mit Triol-OH ist die Gesamtanzahl der an der Polyurethan-Bildungsreaktion beteiligten Hydroxylgruppen gemeint, die an Polyole gebunden sind, deren Funktionalität größer zwei und kleiner oder gleich drei ist.

Wird das Gelierungs-NCO/OH-Verhältnis erreicht oder überschritten, muss mit der Ausbildung vernetzter Strukturen, also mit dem Einsetzen einer Gelierung, gerechnet werden. Die Formel liefert nur einen ungefähren, aber für die Praxis in der Regel ausreichenden Anhaltspunkt, ab welchem NCO/OH-Verhältnis die tatsächliche Gelierung eintritt.

Wird mit Diisocyanaten im Überschuss gearbeitet, ist also das NCO/OH-Verhältnis größer 1,0, ist obige Formel reziprok anzuwenden.

Der anzahlmäßige Anteil der zur Bildung des Polybutadien-Polyurethans eingebrachten Hydroxylgruppen, die von dem optionalen mindestens einen Polybutadien-Polyol mit einer zahlengemittelten, mittleren Funktionalität zwischen größer 2,0 und kleiner oder gleich 3,0 stammen, beträgt vorteilhafterweise maximal 50,0 %, bevorzugt maximal 30,0 %, besonders bevorzugt maximal 10%. Höhere Anteile erfordern ein unvorteilhaft geringes NCO/OH-Verhältnis bei NCO-Unterschuss beziehungsweise ein unvorteilhaft hohes NCO/OH-Verhältnis bei NCO-Überschuss, das eine unvorteilhaft niedrige Erweichungstemperatur des hydroxyl-funktionalisierten Polybutadien-Polyurethan-Hotmelt-Prepolymers zur Folge hätte. Im Hinblick auf die Prozesssicherheit beträgt der Anteil ganz besonders vorteilhaft 0,0%. Bei einem Anteil von 0,0% ist das Risiko der vorzeitigen Ausbildung vernetzter Strukturen, also das Einsetzen einer Gelierung während der Polyurethan-Herstellung, am geringsten.

Das Polybutadien-Polyurethan wird durch Umsetzung der genannten Diole/ Polyole mit zumindest einem aliphatischen oder alicyclischen Diisocyanat erhalten.

Unter aliphatischen oder alicyclischen Diisocyanaten werden in dieser Schrift alle organischen Polyisocyanate mit einer Isocyanat-Funktionalität von zwei verstanden, in denen die Isocyanat-Gruppen nicht direkt an ein nach der Hückel-Regel aromatisches Ringsystem gebunden sind. Beispiele für aliphatische oder alicyclische Diisocyanate sind Butan-1,4-diisocyanat, Tetramethoxybutan-1,4-diisocyanat, Hexan-1,6-diisocyanat, Ethylendiisocyanat, 2,2,4-Trimethyl-hexamethylendiisocyanat, Ethylethylendiisocyanat, Dicyclohexylmethan-4,4'-diisocyanat (H12MDI), 1,4-Diisocyanatocyclohexan, 1,3-Diisocyanatocyclohexan, 1,2-Diisocyanatocyclohexan, 1,3-Diisocyanatocyclopentan, 1,2-Diisocyanatocyclopentan, 1,2-Diisocyanatocyclobutan, 1-Isocyanatomethyl-3-isocyanato-1,5,5-trimethylcyclohexan (Isophorondiisocyanat, IPDI), 1-Methyl-2,4-diisocyanatocyclohexan, 1,6-Diisocyanato-2,2,4-trimethylhexan, 1,6-Diisocyanato-2,4,4-trimethylhexan, 5-Isocyanato-1-(2-isocyanatoeth-1-yl)-1,3,3-trimethyl-cyclohexan, 5-isocyanato-1-(3-isocyanatoprop-1-yl)-1,3,3-trimethyl-cyclohexan, 5-Isocyanato-1-(4-isocyanatobut-1-yl)-1,3,3-trimethyl-cyclohexan, 1-Isocyanato-2-(3-isocyanatoprop-1-yl)-cyclohexan, 1-Isocyanato-2-(2-isocyanatoeth-1-yl)-cyclohexan, 2-Heptyl-3,4-bis(9-isocyanatononyl)-1-pentyl-cyclohexan, Norbonandiisocyanatomethyl sowie m-Tetramethyl-xylen-diisocyanat (TMXDI). Besonders bevorzugt sind Isophorondiisocyanat (CAS-Nr. 4098-71-9) und Dicyclohexylmethan-4,4'-diisocyanat (CAS-Nr. 5124-30-1).

Das Verhältnis der Gesamtanzahl der Isocyanat-Gruppen zur Gesamtanzahl der Hydroxylgruppen der an der chemischen Umsetzung zum Polybutadien-Polyurethan beteiligten Stoffe liegt in einer vorteilhaften Ausführungsform zwischen größer oder gleich 0,3 und kleiner oder gleich 1,3, bevorzugt zwischen größer oder gleich 0,4 und kleiner oder gleich 1,2, besonders bevorzugt zwischen größer oder gleich 0,5 und kleiner oder gleich 1,1, ganz besonders bevorzugt zwischen größer oder gleich 0,6 und kleiner oder gleich 1,0. Die bevorzugten Verhältnisse führen zu Hotmelt-Polyurethanen mit einer bei Raumtemperatur besonders festen Konsistenz und einer gleichzeitig hohen Haftklebrigkeit (eines hohen Tacks).

Bevorzugt umfasst das erfindungsgemäße Polybutadien-Polyurethan das chemische Umsetzungsprodukt aus ausschließlich einem oder mehreren Polybutadien-Diolen, optional einem oder mehreren Polybutadien-Polyolen mit einer zahlengemittelten, mittleren Funktionalität zwischen größer 2,0 und kleiner oder gleich 3,0 und einem oder mehreren Kettenverlängerers mit einer Hydroxyl-Funktionalität von zwei und einer Molmasse von kleiner oder gleich 300 g/mol mit einem oder mehreren aliphatischen oder alicylischen Diisocyanaten. An der chemischen Umsetzung zum Polybutadien-Polyurethan sind keine zusätzlichen, anderen Polyole oder Isocyanate beteiligt, insbesondere keine Polyether-Polyole, keine Polyester-Polyole und keine aromatischen Diisocyanate. Es wird angenommen, dass sich bei Verwendung des erfindungsgemäßen Polybutadien-Polyurethans als Basiselastomer zur Herstellung eines thermisch vulkanisierbaren, schmelzbaren, vorzugsweise haftklebrigen Klebstoffes Polyether- und Polyester-Polyole unvorteilhaft auf die Haftungseigenschaften nach der Vulkanisationsreaktion auswirken, insbesondere auf die Haftungseigenschaften auf geölten Blechen. Weiterhin wird angenommen, dass sich aromatische Diisocyanate unvorteilhaft auf die Haftklebrigkeit (den Tack) auswirken.

Zur Beschleunigung der Reaktion erfolgt die chemische Umsetzung zum Polybutadien-Polyurethan bevorzugt unter Zusatz eines Katalysators. Es können ein oder mehrere dem Fachmann bekannte Katalysatoren wie zum Beispiel tertiäre Amine, bismut- oder zinnorganische Verbindungen eingesetzt werden, um nur einige zu nennen. Sehr vorteilhaft können Bismut und Kohlenstoff enthaltende Katalysatoren eingesetzt werden, bevorzugt ein Bismutcarboxylat oder ein Bismutcarboxylat-Derivat. Besonders vorteilhaft ist Bismuttrisneodecanoat (CAS-Nr. 34364-26-6).

Die Konzentration der Katalysatoren wird auf die gewünschte Reaktionsgeschwindigkeit abgestimmt und liegt typischerweise zwischen 0,01 Gew.% und 0,5 Gew.% des herzustellenden Polybutadien-Polyurethans.

Das erfindungsgemäße Polybutadien-Polyurethan wird bevorzugt ohne die Verwendung von Lösemitteln hergestellt. Die Einbeziehung von Lösemitteln in den Herstellprozess ist zwar technisch leicht möglich, bringt aber normalerweise keine Vorteile.

Das erfindungsgemäße Polybutadien-Polyurethan wird vorteilhaft batchweise, also diskontinuierlich, zum Beispiel in einem beheizbaren Mischkessel, Kneter, Planetenmischer oder Dissolver hergestellt. Um Blasenfreiheit zu erreichen, erfolgt das Mischen in der Endphase des Prozesses, wenn die chemische Umsetzung weitgehend abgeschlossen ist, bevorzugt unter vermindertem Druck.

Die vorliegende Erfindung betrifft ein Klebeband, das auf einer Seite oder auf beiden Seiten zumindest teilweise mit dem erfindungsgemäßen Haftklebstoff beschichtet ist. Dabei kann es sich bei dem Klebeband auch um ein Transferklebeband handeln. Ein Klebeband ermöglicht eine besonders einfache und präzise Verklebung und ist daher besonders geeignet.

Der allgemeine Ausdruck "Klebeband" umfasst ein Trägermaterial, welches ein- oder beidseitig jeweils zumindest teilweise mit einem (Haft)klebstoff versehen ist. Das Trägermaterial umfasst alle flächigen Gebilde, beispielsweise in zwei Dimensionen ausgedehnte Folien oder Folienabschnitte, Bänder mit ausgedehnter Länge und begrenzter Breite, Bandabschnitte, Stanzlinge (beispielsweise in Form von Umrandungen oder Begrenzungen einer zu klebenden Anordnung), andere Formkörper, Mehrschichtanordnungen und dergleichen. Dabei sind für verschiedene Anwendungen unterschiedlichste Träger wie zum Beispiel Folien, Gewebe, Vliese und Papiere mit den Klebstoffen kombinierbar. Des Weiteren umfasst der Ausdruck "Klebeband" auch so genannte "Transferklebebänder", das heißt ein Klebeband ohne Träger. Bei einem Transferklebeband ist der Klebstoff vielmehr vor der Applikation zwischen flexiblen Linern aufgebracht, die mit einer Trennschicht versehen sind und/oder anti-adhäsive Eigenschaften aufweisen. Zur Applikation wird regelmäßig zunächst ein Liner entfernt, der Klebstoff appliziert und dann der zweite Liner entfernt. Der Klebstoff kann so direkt zur Verbindung zweier Oberflächen verwendet werden.

Es sind aber auch Klebebänder möglich, bei denen nicht mit zwei Linern sondern mit einem einzigen doppelseitig trennend ausgerüstet Liner gearbeitet wird. Die Klebebandbahn ist dann an ihrer Oberseite mit der einen Seite eines doppelseitig trennend ausgerüsteten Liners abgedeckt, ihre Unterseite mit der Rückseite des doppelseitig trennend ausgerüsteten Liners, insbesondere einer benachbarten Windung auf einem Ballen oder einer Rolle.

Für bestimmte Anwendungen kann es gewünscht sein, dass eine Seite oder beide Seiten des Klebebandes nicht vollständig mit Klebstoff versehen ist bzw. sind, sondern teilweise klebstofffreie Bereiche vorgesehen sind, um z.B. Aussparungen in den zu beklebenden Oberflächen zu berücksichtigen.

Als Trägermaterial eines Klebebandes werden vorliegend bevorzugt Polymerfolien, Folienverbunde oder mit organischen und/oder anorganischen Schichten versehene Folien oder Folienverbunde eingesetzt, wobei Folien, insbesondere dimensionsstabile Kunststoff- oder Metallfolien, bevorzugt werden. Derartige Folien/Folienverbunde können aus allen gängigen zur Folienherstellung verwendeten Kunststoffen bestehen, beispielhaft aber nicht einschränkend erwähnt seien:

Polyethylen, Polypropylen - insbesondere das durch mono- oder biaxiale Streckung erzeugte orientierte Polypropylen (OPP), Cyclische Olefin Copolymere (COC), Polyvinylchlorid (PVC), Polyester - insbesondere Polyethylenterephthalat (PET) und Poylethylennaphtalat (PEN), Ethylenvinylalkohol (EVOH), Polyvinylidenchlorid (PVDC), Polyvinylidenfluorid (PVDF), Polyacrylnitril (PAN), Polycarbonat (PC), Polyamid (PA), Polyethersulfon (PES) oder Polyimid (PI).

Polyesterfolien weisen den Vorteil auf, dass sie für Temperaturstabilität sorgen und eine erhöhte mechanische Stabilität einbringen. Ganz besonders bevorzugt besteht daher eine Trägerschicht in einem erfindungsgemäßen Liner aus einer Polyesterfolie, beispielsweise aus biaxial verstrecktem Polyethylenterephthalat.

Bei doppelseitig (selbst)klebenden Klebebändern können als obere und untere Schicht erfindungsgemäße Klebstoffe gleicher oder verschiedener Art und/oder gleicher oder verschiedener Schichtdicke zur Anwendung kommen. Der Träger kann dabei auf einer oder beiden Seiten dem Stand der Technik entsprechend vorbehandelt sein, so dass beispielsweise eine Verbesserung der Klebstoffverankerung erzielt wird. Die Haftklebstoffschichten können optional mit Trennpapieren oder Trennfolien eingedeckt werden. Alternativ kann auch nur eine Klebstoffschicht mit einem doppelseitig trennenden Liner eingedeckt sein.

In einer Variante ist in dem doppelseitig (selbst)klebenden Klebeband ein erfindungsgemäßer Klebstoff vorgesehen sowie ein beliebiger weiterer, zum Beispiel ein solcher, der besonders gut auf einem Abdecksubstrat haftet oder eine besonders gute Repositionierbarkeit zeigt.

Die Dicke der Haftklebstoffschicht, die entweder als Transferklebeband oder auf einem flächigen Gebilde beschichtet vorliegt, beträgt bevorzugt zwischen 10 $\mu$m und 5000 $\mu$m, weiter bevorzugt zwischen 100 $\mu$m und 4000 $\mu$m und besonders bevorzugt zwischen etwa 200 $\mu$m und 3000 $\mu$m.

Für doppelseitige Klebebänder gilt für die Klebstoffe ebenfalls, dass die Dicke der einzelnen Haftklebstoffschicht(en) bevorzugt zwischen 10 $\mu$m und 5000 $\mu$m, weiter bevorzugt zwischen 100 $\mu$m und 4000 $\mu$m und besonders bevorzugt zwischen etwa 200 $\mu$m und 3000 $\mu$m liegt.

Klebebänder, die ein- oder beidseitig mit Klebstoffen beschichtet sind, werden am Ende des Herstellungsprozesses zumeist zu einer Rolle in Form einer archimedischen Spirale oder kreuzgespult aufgewickelt. Um bei doppelseitig klebenden Klebebändern zu verhindern, dass die Klebstoffe miteinander in Kontakt kommen, oder um bei einseitig klebenden Klebebändern eine Verklebung der Klebstoffe auf dem Träger zu verhindern, werden die Klebebänder vor dem Wickeln mit einem Abdeckmaterial (auch als Trennmaterial bezeichnet) eingedeckt, das zusammen mit dem Klebeband aufgewickelt wird. Dem Fachmann sind derartige Abdeckmaterialien unter den Namen Liner oder Releaseliner bekannt. Neben der Abdeckung von ein- oder doppelseitig klebenden Klebebändern werden Liner auch zur Eindeckung von reinen Klebstoffen (Transferklebeband) und Klebebandabschnitten (zum Beispiel Etiketten) eingesetzt.

Der thermisch vulkanisierbare, schmelzbare, vorzugsweise haftklebrige Klebstoff der vorliegenden Erfindung wird bevorzugt als Schicht zur Herstellung eines thermisch vulkanisierbaren, vorzugsweise haftklebrigen Klebebandes oder Dichtungsbandes, sowie daraus hergestellter Formkörper oder Stanzlinge verwendet, wobei das thermisch vulkanisierbare, schmelzbare, vorzugsweise haftklebrige Klebeband oder Dichtungsband zusätzliche hafklebrige und/ oder nicht haftklebrige Schichten, Trägerfolien oder -filme, haftvermittelnde Schichten, Release-Schichten oder sonstige Funktionsschichten sowie auch mehrere thermisch vulkanisierbare oder auf andere Art härt- oder vernetzbare Klebebandschichten enthalten kann und mit einem Trennliner ausgerüstet sein kann, der ein- oder beidseitig silikonisiert sein kann.

Die Herstellung einer thermisch vulkanisierbaren, schmelzbaren, vorzugsweise haftklebrigen Klebebandschicht erfolgt vorzugsweise in einem lösemittelfreien, kontinuierlichen Compoundier- und Beschichtungsprozess. Die Zudosierung des Schwefels und der optionalen Vulkanisationsbeschleuniger, Füllstoffe sowie der weiteren Hilfs- und Zusatzstoffe zu dem - gegebenenfalls bereits Epoxidharze und/oder andere weitere Komponenten enthaltenden - Polybutadien-Polyurethan erfolgt bevorzugt während des kontinuierlichen Compoundierprozesses in das kontinuierlich arbeitende Mischaggregat, insbesondere den Compoundierextruder.

Die erfindungsgemäßen Haftklebebänder enthaltend einen thermisch vulkanisierbare, schmelzbare, vorzugsweise haftklebrige Klebstoff zeigen eine hervorragende Kombination von Produkteigenschaften, die auch für den Fachmann derartig nicht vorherzusehen waren.

Der erfindungsgemäße Klebstoff ist gezielt so einstellbar, dass er im Temperaturbereich zwischen 130°C und 230°C innerhalb kurzer Zeit aushärtet. Kurze Zeit heißt zwischen ungefähr 5 und 30 Minuten, je nachdem ob ein Beschleunigersystem verwendet und welches Beschleunigersystem verwendet wurde. Er ist dabei so einstellbar, dass während der Aushärtung eine gute Haftung zum Substrat, auf dem der Klebstoff appliziert wurde, aufgebaut wird, so dass es zum Kohäsionsbruch innerhalb der Klebstoffschicht kommt, wenn zum Beispiel in einem Zugscherversuch in Anlehnung an DIN EN 1465 oder in einem Schälversuch versucht wird, die Klebstoffschicht vom Substrat zu entfernen. Die erzielbaren Klebfestigkeiten sind dabei innerhalb einer weiten Spanne anforderungsgerecht einstellbar.

Sie decken beispielsweise im Zugscherversuch den Bereich von größer 0 bis mindestens 30 N/mm$^2$ ab. Die Klebfestigkeit wird dabei in erster Linie über den Anteil an Schwefel im Verhältnis zum Polybutadien-Polyurethan gesteuert. Weitere Steuerungsmöglichkeiten ergeben sich aus den optionalen Formulierungsmöglichkeiten.

Die oben genannten Substrate, auf denen der Klebstoff bzw. das Klebeband appliziert wird, können typischerweise geölte Stahlbleche sein, wie sie in der Automobilindustrie im Rohbau verwendet werden. Diese können verzinkt oder nicht verzinkt sein. Auch andere Metallsorten, wie zum Beispiel Aluminium, kommen in Frage. Es können aber auch lackierte oder vorbeschichtete Bleche, beispielsweise kataphoretisch tauchlackierte Bleche (KTL-Bleche) sein, wie sie in den Lackierstraßen der Automobilindustrie vorliegen.

Dadurch, dass der erfindungsgemäße Klebstoff auf den typischen Substraten des Automobilrohbaus und der Lackierstraße gut haftet, und dadurch, dass die Klebfestigkeiten in einer weiten Spanne anforderungsgerecht eingestellt werden können, kann der erfindungsgemäße Klebstoff bzw. das erfindungsgemäße Klebeband sowohl zum Kleben als auch zum Abdichten verwendet werden, zum Beispiel zur Bördelfalzklebung, zur Bördelfalzabdichtung, zur Nahtabdichtung, zur Unterfütterungsklebung, zum Lochverschluss und vieles mehr.

Der erfindungsgemäße Klebstoff ist auf vielfache Weise gezielt so einstellbar, dass er haftklebrig ist. Dies kann beispielsweise über das NCO/OH-Verhältnis erfolgen oder über den Kettenverlängerer-Anteil oder über den Anteil an einem Klebrigmacherharz, um nur einige wenige Möglichkeiten zu nennen.

Eine Klebebandschicht aus dem erfindungsgemäßen, thermisch vulkanisierbaren, schmelzbaren, vorzugsweise haftklebrigen Klebstoff kann in einem lösemittelfreien, kontinuierlichen oder auch diskontinuierlichen Compoundier- und Extrusionsprozess hergestellt werden, ohne dass es zur Aushärtung in einem solchen Hotmelt-Herstellprozess kommt. Die Prozesstemperaturen bewegen sich dabei zwischen ungefähr 40°C und 100°C, je nach Viskosität des erfindungsgemäßen Klebstoffes. Selbst bei Verwendung optionaler Vulkanisationsbeschleuniger ist ein solcher Prozess innerhalb des genannten Temperaturrahmens möglich. Bei Verwendung der optionalen Ultrabeschleuniger liegt die maximal mögliche Prozesstemperatur bei ungefähr 80°C bis 90°C. Durch die Möglichkeit, die Klebebandschicht aus dem erfindungsgemäßen Klebstoff in einem Hotmeltprozess herzustellen, können vorteilhafterweise sehr dicke Schichten hergestellt werden, beispielsweise mehrere Millimeter dicke, ohne dass es dabei zu einer störenden Blasenbildung kommt.. Da der erfindungsgemäße Klebstoff vor der Aushärtung kurzfristig einen hochviskos flüssigen Zustand durchläuft, können spaltüberbrückende Eigenschaften (Gap-Filling-Eigenschaften) erreicht werden.

Bei Raumtemperatur bis hin zu ungefähr 30°C ist der erfindungsgemäße Klebstoff genügend fest beziehungsweise hochviskos, so dass er als auf einen Trennliner oder als auf ein Trägermaterial beschichteter Film zu einer Rolle aufgewickelt werden kann, ohne dass er an der Seite herausfließt beziehungsweise durch den Wickeldruck herausgequetscht wird.

Der Klebstoff bzw. ein daraus hergestelltes Klebeband erweist sich als sehr lagerstabil im Temperaturbereich von Raumtemperatur bis ungefähr 40°C. Er muss nicht gekühlt gelagert werden, was einen großen Vorteil darstellt. Die Lagerstabilität erstreckt sich auf einen Zeitraum von mindestens einem Jahr.

Optionale Epoxidharze können besondere Vorteile bringen. Durch den Zusatz eines oder mehrerer Epoxidharze kann eine Verbesserung der Haftungseigenschaften, insbesondere auf manchen geölten Blechsorten nach der thermischen Vulkanisationsreaktion erzielt werden.

Durch den optionalen Zusatz von Bitumen kann die Ölaufnahme verbessert werden, so dass es auch bei Verklebungen von stark beölten Blechen im Zugscherversuch zu kohäsiven Bruchbildern kommt.

Der optionale Zusatz von Klebrigmacherharzen hat sich insbesondere im Hinblick auf die Haftungseigenschaften des thermisch vulkanisierbaren, schmelzbaren, vorzugsweise haftklebrigen Klebstoffes auf geölten Blechen vor der thermischen Vulkanisationsreaktion als vorteilhaft herausgestellt. Die Klebkraft des noch nicht vulkanisierten Klebstoffes auf geölten Blechen kann so signifikant erhöht werden.Dies gilt besonders vorteilhaft für den Zusatz von β-Pinen-Harzen.

Füllstoffe können überraschenderweise positiv zur Erhöhung der Klebfestigkeit beitragen. Insbesondere Mischungen aus Calciumcarbonat und Calciumoxid haben als besonders vorteilhaft im Hinblick auf das Erzielen hoher Klebfestigkeiten und der Minimierung einer gelegentlichen Bläschenbildung während der thermischen Vulkanisation erwiesen. Auf diese Weise konnten bei unveränderter Schwefelkonzentration die Zugscherfestigkeiten signifikant gesteigert werden. Auch Talkum hat sich in dieser Hinsicht als vorteilhaft herausgestellt.

Anhand der folgenden Beispiele soll die Erfindung näher beschrieben werden, ohne die Erfindung damit einschränken zu wollen.

Die folgenden Prüfmethoden wurden eingesetzt, um die erfindungsgemäß hergestellten Muster kurz zu charakterisieren:

Dynamisch Mechanische Analyse (DMA) zur Bestimmung des Speichermoduls G' und des Verlustmoduls G"

Zur Charakterisierung der schmelzbaren Polybutadien-Polyurethane erfolgten Bestimmungen des Speichermoduls G' und des Verlustmoduls G" mittels Dynamisch Mechanischer Analyse (DMA).

Die Messungen erfolgten mit dem schubspannungsgesteuerten Rheometer DSR 200 N der Firma Rheometric Scientific im Oszillationsversuch bei einer sinusförmig oszillierenden Scherbeanspruchung in einer Platte-Platte-Anordnung. Der Speichermodul G' und der Verlustmoduls G" wurden im Frequenzsweep von $10^{-1}$ bis $10^2$ rad/sec bei einer Temperatur von 25 °C bestimmt. G' und G" sind folgendermaßen definiert:

G' = $\tau/\gamma$ •cos($\delta$) ($\tau$ = Schubspannung, $\gamma$ = Deformation, $\delta$ = Phasenwinkel = Phasenverschiebung zwischen Schubspannungs- und Deformationsvektor).
G" = $\tau/\gamma$ •sin($\delta$) ($\tau$ = Schubspannung, $\gamma$ = Deformation, $\delta$ = Phasenwinkel = Phasenverschiebung zwischen Schubspannungs- und Deformationsvektor).
Die Definition der Winkelfrequenz lautet: $\omega$ = 2n • f (f = Frequenz). Die Einheit ist rad/sec.

Die Dicke der gemessenen Proben betrug stets zwischen 0,9 und 1,1 mm (1 ± 0,1 mm). Der Probendurchmesser betrug jeweils 25 mm. Die Vorspannung erfolgte mit einer Belastung von 3N. Der Stress der Probenkörper betrug bei allen Messungen 2500 Pa.

Dynamisch Mechanische Analyse (DMA) zur Bestimmung der komplexen Viskosität ($\eta$*)

Zur Charakterisierung der schmelzbaren Polybutadien-Polyurethane erfolgten weiterhin Bestimmungen der komplexen Viskosität mittels Dynamisch Mechanischer Analyse (DMA). Die Messungen erfolgten mit dem schubspannungsgesteuerten Rheometer DSR 200 N der Firma Rheometric Scientific im Oszillationsversuch bei einer sinusförmig oszillierenden Scherbeanspruchung in einer Platte-Platte-Anordnung. Die komplexe Viskosität wurde im Temperatursweep von -50 °C bis +250 °C bei einer Oszillationsfrequenz von 10 rad/s bestimmt. Die komplexe Viskosität $\eta$* ist folgendermaßen definiert: $\eta$* = G* / $\omega$
(G* = komplexer Schubmodul, $\omega$ = Winkelfrequenz).

Die weiteren Definitionen lauten: $$G^* = \sqrt{(G')^2 + (G'')^2}$$

(G" = Viskositätsmodul (Verlustmodul), G' = Elastizitätsmodul (Speichermodul)).
G" = $\tau/\gamma$ •sin($\delta$) ($\tau$ = Schubspannung, $\gamma$ = Deformation, $\delta$ = Phasenwinkel = Phasenverschiebung zwischen Schubspannungs- und Deformationsvektor).
G' = $\tau/\gamma$ •cos($\delta$) ($\tau$ = Schubspannung, $\gamma$ = Deformation, $\delta$ = Phasenwinkel = Phasenverschiebung zwischen Schubspannungs- und Deformationsvektor).

$$\omega = 2\pi \cdot f$$

(f = Frequenz).
Die Dicke der gemessenen Proben betrug stets zwischen 0,9 und 1,1 mm (1 ± 0,1 mm). Der Probendurchmesser betrug jeweils 25 mm. Die Vorspannung erfolgte mit einer Belastung von 3N. Der Stress der Probenkörper betrug bei allen Messungen 2500 Pa.

Tack

Die Tackmessung (Messung der Oberflächenklebrigkeit) erfolgte nach der Stempelmessmethode in Anlehnung an ASTM D 2979-01 mit dem Texture Analyser TA 2 der Firma SMS (Stable Micro Systems) bei Raumtemperatur. Nach dieser Methode wird ein zylindrischer Stahlstempel mit definierter Andruckkraft und -geschwindigkeit auf die zu untersuchende Probe gedrückt und nach definierter Zeit mit definierter Geschwindigkeit wieder abgezogen. Das Prüfergebnis ist die zum Abziehen erforderliche maximale Kraft, angegeben in der Einheit N.

Die Prüfparameter waren im Einzelnen:

| | |
|---|---|
| Zylinderradius: | 1 mm $\Rightarrow$ Zylinderfläche: 3,14 mm$^2$ |
| Andruckgeschwindigkeit: | 0,1 mm/s |
| Andruckkraft: | 5 N |
| Andruckzeit: | 0,01s |
| Abzugsgeschwindigkeit: | 0,6 mm / s |

Die Dicke der gemessenen Proben betrug stets zwischen 0,9 und 1,1 mm (1 $\pm$ 0,1 mm).

Die Messung erfolgte stets vor der thermischen Vulkanisation der Proben.

Dynamischer Schertest (Zugscherfestigkeit)

Der dynamische Schertest erfolgte in Anlehnung an DIN EN 1465. Er erfolgte stets nach der thermischen Vulkanisation der verklebten Proben. Dazu wurden aus einer Klebebandschicht aus dem erfindungsgemäßen Klebstoff, die beidseitig jeweils mit einem Trennpapier abgedeckt war, rechteckige Stanzlinge mit den Maßen 25,0 mm x 12,5 mm ausgestanzt. Die Trennpapiere wurden daraufhin jeweils von einer Seite eines Stanzlings abgezogen. Die Dicke der Stanzlinge betrug stets zwischen 0,4 und 0,6 mm (0,5 $\pm$ 0,1 mm).

Die Stanzlinge wurden passgenau jeweils auf das Ende eines Prüfkörpers (Substrates) mit den Maßen 100,0 mm x 25,0 mm x 2,0 mm aufgelegt. Die Stanzlinge hafteten nun jeweils auf diesem Prüfkörper. Verwendet wurden Prüfkörper aus Stahl, elektrolytisch verzinktem Stahl, feuerverzinktem Stahl und kataphoretisch tauchlackiertem Stahl (KTL-Stahl). Die Bezeichnungen der nicht lackierten Stahlprüfkörper lauteten:

Stahl: DC04

Elektrolytisch verzinkter Stahl: DC01ZE 25/25

Feuerverzinkter Stahl: DX51 D+Z275

Lieferant aller genannten Prüfkörper war die Firma Rocholl GmbH.

Die nicht lackierten Prüfkörper wurden vor dem Auflegen der Stanzlinge zum Teil beölt (siehe Tabelle). Das Öl hatte die Bezeichnung Anticorit RP 4107 S (Firma Fuchs) und wurde in einer Stärke von 2 bis 3 g/m$^2$ aufgetragen. Anschließend wurde das noch auf den Stanzlingen verbliebene Trennpapier abgezogen.

Darauf wurden Prüfkörper aus dem jeweils gleichen Material jeweils bündig mit einem Ende so gelegt, dass wie in DIN EN 1465 beschrieben, jeweils ein überlappender Verbund resultierte. Die Überlappungslänge betrug jeweils 12,5 mm. Die Überlappungsfläche betrug jeweils 300 mm$^2$. Die überlappenden Verbunde wurden auf ein Blech gelegt, wobei durch Unterlegscheiben dafür Sorge getragen wurde, dass der obere Prüfkörper nicht kippen konnte. Auf den oberen Prüfkörper wurde im Bereich der Überlappungsfläche jeweils ein Gewicht von 2 kg gestellt. Der Verbund wurde dem Druck des Gewichtes 10 Sekunden jeweils bei Raumtemperatur ausgesetzt (Verpresszeit). Sodann wurde das Gewicht entfernt. Der Verbund wurde anschließend 10 bis 30 Minuten im Temperaturbereich zwischen 130°C bis 230°C vulkanisiert. Dabei kam es zu einer Härtungsreaktion innerhalb der Klebebandschicht-Proben und zu einer sich aufbauenden starken Haftung zwischen den jeweiligen Klebebandschicht-Proben und den jeweiligen Prüfkörpern. Es kam somit zu einer Verklebung mit einer erheblichen Festigkeitszunahme. Nach Abkühlung und einer Wartezeit von zwei bis drei Stunden erfolgte die Bestimmung der Zugscherfestigkeit.

Die Bestimmung der Zugscherfestigkeit von Überlappungsverklebungen ermöglicht Aussagen über die Scherbelastbarkeit eines doppelseitig klebenden Klebeprodukts. Die Bestimmung erfolgte gemäß DIN EN 1465 mittels einer Zugprüfmaschine. Die Prüfgeschwindigkeit betrug 10 mm/min. Alle Messungen wurden in einem klimatisierten Raum bei 23°C und 50 % relativer Luftfeuchte durchgeführt.

Klebkraft

Die Klebkraft wurde nach PSTC-101 bestimmt. Die Messung erfolgte stets vor der thermischen Vulkanisation der Proben und nur an wenigen ausgewählten Proben. Nach dieser Methode wurde der zu messende, erfindungsgemäße Klebebandschicht-Streifen aus dem erfindungsgemäßen Klebstoff auf den Haftgrund aufgebracht, mit einer 25 $\mu$m dicken Polyesterfolie abgedeckt und somit rückseitenverstärkt, zweimal mit einem 2kg-Gewicht aufgedrückt und sofort anschließend unter definierten Bedingungen mittels einer Zugprüfmaschine abgezogen. In einer zweiten Messung wurde der Klebebandschicht-Streifen erst nach 30 Minuten abgezogen. Der Abzugswinkel betrug stets 180°, die Abzugsgeschwindigkeit 300 mm/min. Die zum Abziehen erforderliche Kraft ist die Klebkraft, welche in der Einheit N/cm angegeben wird. Der Haftgrund war stets Stahl (DC04), der mit Anticorit RP 4107 S (Firma Fuchs) in einer Stärke von 2 bis 3 g/m$^2$

beölt war. Die Klebebandschicht-Streifen hatten eine Dicke von 0,2-0,3 mm.

Härtunqstemperatur

Die Härtungstemperatur von reaktiven Klebemassen wird kalorimetrisch über die Differential Scanning Calorimetry (DSC) nach DIN EN ISO 11357-3:2013-04 bestimmt. Aufheizkurven laufen mit einer Heizrate von 10 K/min. Die Muster werden in Al-Tiegeln mit gelochtem Deckel und Stickstoffatmosphäre vermessen. Eine chemische Reaktion ist als exothermer Peak im Thermogramm erkennbar. Als Aktivierungstemperatur wird diejenige Temperatur notiert, bei der die höchste Wärmetönung auftritt (Peaktemperatur).

Durchführung der Experimente

Die schmelzbaren Polybutadien-Polyurethane wurden in Laboransätzen in einem beheiz- und evakuierbaren 1 Liter-Planetenmischer der Firma PC-Laborsystem gefertigt. Sie wurden jeweils hergestellt, indem zunächst die Polybutadien-Polyole in die Mischdosen eingewogen und unter Vakuum bei einer Temperatur von 80 °C zwei Stunden lang gemischt und dabei entgast und somit von Restfeuchte befreit wurden. Sodann wurde der Kettenverlängerer zugegeben und 20 Minuten lang ohne Vakuum eingemischt. Anschließend wurden die restlichen Stoffe, wie zum Beispiel der Katalyasator und/ oder das Epoxidharz und/ oder das Klebrigmacherharz und/ oder der Weichmacher und/ oder das Bitumen entsprechend der in den einzelnen Beispielen angegebenen Mengenverhältnisse zugefügt und 20 Minuten eingemischt. Zuletzt erfolgte die Zugabe des mindestens einen aliphatischen oder alicyclischn Diisocyanats, das 30 Minuten lang bei einer Temperatur von ungefähr 80°C homogen eingemischt wurde. Die Mischdose wurde aus dem Mischer entfernt, dieses wurde luftdicht verschlossen und die chemisch reagierende Mischung wurde in diesem Gefäß zur Vervollständigung der Umsetzung 7 Tage bei 23 °C stehengelassen. Zur Herstellung des erfindungsgemäßen thermisch vulkanisierbaren, schmelzbaren Klebstoffs und der daraus hergestellten erfindungsgemäßen Klebebandschicht erfolgte nach der einwöchigen Lagerzeit die Zumischung der weiteren Stoffe, wie insbesondere des gemahlenen Schwefels, gegebenenfalls der Vulkanisationsbeschleuniger, Füllstoffe, sowie der weiteren Hilfs- und Zusatzstoffe zu dem so hergestellten schmelzabren Polybutadien-Polyurethan bei 40°C bis 100°C im selben Gerät. Zur homogenen Einarbeitung der Stoffe wurden diese ungefähr 30 Minuten lang eingemischt. Zuletzt wurde ca. 10 Minuten lang Vakuum angelegt, um eingerührte Luft und Feuchtigkeit zu entfernen. Danach wurden aus den Mischungen Filme in der gewünschten Dicke durch Verpressen der Mischungen zwischen zwei mit silikonisierten Polyester-Folien abgedeckten Glasplatten bei ca. 80°C hergestellt. Nach der so erfolgten Ausformung wurden die Filme auf Raumtemperatur abgekühlt, wodurch sie sich sofort verfestigten.

Einige der Polybutadien-Polyurethane wurden in alternativer Weise in einem üblichen beheiz- und evakuierbaren 200 Liter-Mischkessel mit Dissolver-Rührwerk der Firma Molteni gefertigt. Sie wurden jeweils hergestellt, indem zunächst die Polybutadien-Polyole eingewogen und unter Vakuum bei einer Temperatur von 80 °C zwei Stunden lang gemischt wurden. Sodann wurde der Kettenverlängerer zugegeben und 20 Minuten lang ohne Vakuum eingemischt. Anschließend wurden die restlichen Stoffe, wie zum Beispiel Katalyasator und/ oder Epoxidharz und/ oder Klebrigmacherharz und/ oder Weichmacher und/ oder Bitumen entsprechend der in den einzelnen Beispielen angegebenen Mengenverhältnisse zugefügt und 20 Minuten eingemischt. Zuletzt erfolgte die Zugabe des mindestens einen aliphatischen oder alicyclischen Diisocyanats, das 30 Minuten lang homogen eingemischt wurde. Die chemisch reagierenden Mischungen wurden in ein 200 Liter-Fass abgelassen, dieses wurde luftdicht verschlossen und zur Vervollständigung der Umsetzung wurden die Mischungen 7 Tage bei 23 °C stehengelassen.

Die so hergestellten Polybutadien-Polyurethane wurden zur Herstellung der erfindungsgemäßen Klebebandschicht mit Hilfe einer Fassschmelzepumpe bei 40°C-100°C in einen Doppelschneckenextruder der Firma Krauss Maffei Berstorff, Bezeichnung Extruder ZE30Rx54D UTXmi (Schneckendurchmesser 30 mm, L/D=54), gepumpt. Der Extruder wurde von außen auf ca. 40 °C bis 100 °C elektrisch beheizt und über verschiedene Gebläse luftgekühlt. Er war so konzipiert, dass eine gute Durchmischung von Polybutadien-Polyurethan und den weiteren Stoffen, wie insbesondere dem gemahlenen Schwefels, gegebenenfalls den Vulkanisationsbeschleunigern, Füllstoffen, sowie den weiteren Hilfs- und zusatzstoffen bei kurzer Verweilzeit im Extruder gewährleistet war. Dazu wurden die Mischwellen des Doppelschneckenextruders so angeordnet, dass sich fördernde und mischende Elemente abwechselten. Die Zugabe der weiteren Stoffe erfolgte mit geeignetem Dosierequipment unter Verwendung von Dosierhilfsmitteln in die druckfreien Förderzonen des Doppelschneckenextruders.

Nach Austritt der ca. 40 °C bis 100 °C heißen Mischung aus dem Doppelschneckenextruder (Austritt: Runddüse 5 mm Durchmesser) erfolgte die Ausformung zum Film soweit nicht anders beschrieben direkt mittels eines nachgeschalteten Zweiwalzenauftragswerks zwischen zwei zulaufenden, beidseitig silikonisierten 50 μm dicken Polyesterfolien. Die Zulaufgeschwindigkeit wurde zwischen 1 m/min und 20 m/min variiert. Eine der zulaufenden, beidseitig silikonisierten Polyesterfolien wurde nach Abkühlung des Films und damit Verfestigung sofort wieder ausgedeckt. Der vorliegende Film wurde anschließend auf einen zylindrischen Kern aufgewickelt. Dieser Film ist die erfindungsgemäße Klebeband-

**EP 3 519 521 B1**

schicht.

In Tabelle 1 sind die zur Herstellung des Polybutadien-Polyurethans verwendeten Basismaterialien (Rohstoffe) aufgeführt, und zwar jeweils mit Handelsnamen, Hersteller und den für diese Erfindung relevanten technischen Daten.

In Tabelle 2 sind die für die daraus hergestellten erfindungsgemäßen Klebstoffe und Klebebandschichten zusätzlich verwendeten Basismaterialien (Rohstoffe) aufgeführt. Die genannten Rohstoffe sind alle frei im Handel erhältlich.

Tabelle 1: Zur Herstellung des Polybutadien-Polyurethans sowie zur Herstellung der Vergleichsbeispiele verwendete Basismaterialien (Rohstoffe)

| Handelsname | Beschreibung | mittlere zahlengemittelte Molmasse $M_n$ (q/mol) | OH- bzw. NCO-Zahl (mmol OH/kg bzw. mmol NCO/kg | Mittlere, zahlengemittelte Funktionalität f | Hersteller / Lieferant |
|---|---|---|---|---|---|
| **Polybutadien-Polyole** | | | | | |
| Krasol LBH 2000 ® | Polybutadien-Diol | 2100 | 910 | 1,9 | Cray Valley |
| Poly bd R-45 HTLO ® | Polybutadien-Polyol, f größer 2 | 2800 | 840 | 2,4 | Cray Valley |
| **Polyether-Polyole** | | | | | |
| Voranol P 2000L ® | Polypropylenqlykol, Diol | 2000 | 989 | 2,0 | Dow |
| **Kettenverlängerer** | | | | | |
| 2-Ethyl-1,3-hexandiol (EHD) | CAS-Nr.: 94-96-2, Diol | 146,2 | 13679,8 | 2,0 | Sigma-Aldrich |
| **Diisocyanate** | | | | | |
| Vestanat IPDI ® | Isophorondiisocyanat (IPDI), CAS-Nr.: 4098-71-9 | 222,3 | 8998 | 2,0 | Degussa |
| Desmodur W ® | Dicyclohexylmethandiiso-cyanat (HMDI), CAS-Nr.: 5124-30-1 | 262 | 7571 | 2,0 | Bayer |
| 4,4'-Methylen-bis-(phenylisocyanat) | MDI, CAS-Nr.: 101-68-8 | 250,25 | 7992 | 2,0 | Sigma-Aldrich |
| **Katalysator** | | | | | |
| Coscat 83 ® | Bismuttrisneodecanoat CAS-Nr.: 34364-26-6 | | | | Caschem |
| **Epoxidharze** | | | | | |
| Epikote 828 ® | Reaktionsprodukt aus Bisphenol-A und Epichlorhydrin CAS-Nr.: 25068-38-6 | | | | Brenntag |
| 3,4-Epoxycyclohexylmethyl-3', 4'-epoxycyclohexancarboxylat | CAS-Nr.: 2386-87-0 | | | | Sigma-Aldrich |
| **Weichmacher** | | | | | |
| Gravex 925 ® | Naphthenisches Fabrikationsöl | | | | Shell |

| **Bitumen** | | | | | |
|---|---|---|---|---|---|
| Azalt 50/70 DE ® | Straßenbaubitumen nach DIN EN 12591, Tabelle 1, Erweichungspunkt: 46-54°C | | | | Total |

Tabelle 2: Zur Herstellung der erfindungsgemäßen Klebstoffe und Klebebandschichten aus den Polybutadien-Polyurethanen verwendete Basismaterialien (Rohstoffe)

| Handelsname | Beschreibung | Hersteller / Lieferant |
|---|---|---|
| **Vulkanisationsstoffe und -beschleuniger** | | |
| Mahlschwefel 80/90° | Löslicher Mahlschwefel, CAS-Nr.: 7704-34-9 | Avokal GmbH |
| MBTS | Di(benzothiazyl)disulfid, CAS-Nr.: 120-78-5 | Weber & Schaer GmbH |
| ZBEC | Zink-bis(dibenzyldithiocarbamat), CAS-Nr.: 14726-36-4 | Weber & Schaer GmbH |
| TBzTD | Tetrabenzylthiuramdisulfid, CAS-Nr.: 10591-85-2 | Weber & Schaer GmbH |
| **Ruße** | | |
| Luvomaxx N 220 ® | Perlruß | Lehmann & Voss |
| Printex 60 ® | Furnace-Ruß, Oil-Absorption-No: 118, BET-Oberfläche: 115 | Orion Engineered Carbons GmbH |
| **Füllstoffe** | | |
| Talkum Pharma M ® | Talkum, CAS-Nr.: 14807-96-6, spez. Oberfläche: 4,6 m$^2$/g | Scheruhn GmbH |
| Omyacarb 5-GU® | Gemahlene Kreide, mittlrerer Teilchendurchmesser: 5,5 $\mu$m | Omya |
| Rapidquell® Quicklime CL 90-Q | Calciumoxid, Siebrückstand > 90$\mu$m: 3 Masse-% | Rheinkalk GmbH |
| **Klebrigmacherharze** | | |
| Dercolyte S115® | Beta-Pinenharz | DRT |
| Wingtack® 10 | C-5-Harz | Cray Valley |

**Beispiele**

**Beispiel 1**

Das Polybutadien-Polyurethan (PBD-PU 1) setzt sich wie folgt zusammen:

Zusammensetzung PBD-PU 1:

| Rohstoff | Gewichtsanteil [Gew.-%] | Anzahl der eingebrachten OH- beziehungsweise NCO-Gruppen, bezogen auf den prozentualen Gewichtsanteil | Prozentuales Verhältnis der Anzahl der OH-Gruppen zueinander |
|---|---|---|---|
| Krasol LBH 2000 ® | 77,11 | 70,17 mmol OH | 50 |
| 2-Ethyl-1,3-hexandiol ® | 5,13 | 70,17 mmol OH | 50 |
| Coscat 83 ® | 0,15 | | |
| Desmodur W ® | 17,61 | 133,32 mmol NCO | |
| Summe 100,00 | | | |

Die Herstellung erfolgte im Laboransatz (1 Liter). Der Gewichtsanteil an Desmodur W® ist dabei so berechnet, dass das NCO/OH - Verhältnis des Polyurethans 0,95 beträgt. Der theoretische Gelpunkt errechnet sich zu 1,0.

PBD-PU 1 ist bei Raumtemperatur fest, schmelzbar und von der Konsistenz her gummiartig und haftklebrig. Die Prüfergebnisse sind in der folgenden Tabelle zusammengefasst.

Prüfergebnisse PBD-PU 1:

| | |
|---|---|
| G' (bei 1 rad /sec und 23 °C) | 200.000 Pa |
| G" (bei 1 rad /sec und 23 °C) | 150.000 Pa |
| G' (bei 10 rad /sec und 23 °C) | 400.000 Pa |
| G" (bei 10 rad /sec und 23 °C) | 230.000 Pa |
| komplexe Viskosität $\eta^*$ bei 10 rad/sec und 23°C | 46.000 Pas |
| komplexe Viskosität $\eta^*$ bei 10 rad/sec und 90°C | 600 Pas |

Herstellung des erfindungsgemäßen Klebstoffs und der erfindungsgemäßen Klebebandschicht:

PBD-PU 1 wurde zur Herstellung des erfindungsgemäßen Klebstoffs und der erfindungsgemäßen Klebebandschicht gemäß der folgenden Rezeptur im Laboransatz weiter abgemischt und zu einem Film ausgeformt.

Zusammensetzung der thermisch vulanisierbaren Klebebandschicht auf Basis von PBD-PU 1:

| Rohstoff | Gewichtsprozent |
|---|---|
| PBD-PU 1 | 90,0 |
| Mahlschwefel 80/90° | 10,0 |

Es wurden die folgenden Ergebnisse erzielt:

Tack bei 23°C: 0,2 N

Zugscherfestigkeit:

| Prüfkörper | Ölauftrag | Aushärtung | Zugscherfestigkeit [MPa] | Bruchbild |
|---|---|---|---|---|
| Stahl/Stahl | nein | 30 min/ 200°C | 5,9 | kohäsiv |
| Stahl/ Stahl | ja | 30 min/ 200°C | 5,6 | kohäsiv |
| Elektrolytisch verzinkter Stahl/ Elekrolytisch verzinkter Stahl | ja | 30 min/ 200°C | 4,8 | teils kohäsiv/ teils adhäsiv |
| Feuerverzinkter Stahl/ Feuerverzinkter Stahl | ja | 30 min/ 200°C | 5,1 | teils kohäsiv/ teils adhäsiv |

**Beispiel 2**

Das Polybutadien-Polyurethan (PBD-PU 2) setzt sich wie folgt zusammen:

Zusammensetzung PBD-PU 2:

| Rohstoff | Gewichtsanteil [Gew.-%] | Anzahl der eingebrachten OH- beziehungsweise NCO-Gruppen, bezogen auf den prozentualen Gewichtsanteil | Prozentuales Verhältnis der Anzahl der OH-Gruppen zueinander |
|---|---|---|---|
| Krasol LBH 2000 ® | 75,02 | 68,27 mmol OH | 50 |
| 2-Ethyl-1,3-hexandiol ® | 4,99 | 68,27 mmol OH | 50 |

(fortgesetzt)

| Rohstoff | Gewichtsanteil [Gew.-%] | Anzahl der eingebrachten OH- beziehungsweise NCO-Gruppen, bezogen auf den prozentualen Gewichtsanteil | Prozentuales Verhältnis der Anzahl der OH-Gruppen zueinander |
|---|---|---|---|
| Coscat 83 ® | 0,15 | | |
| Desmodur W ® | 19,84 | 150,19 mmol NCO | |
| Summe 100,00 | | | |

Die Herstellung erfolgte im Laboransatz (1Liter). Der Gewichtsanteil an Desmodur W® ist dabei so berechnet, dass das NCO/OH - Verhältnis des Polyurethans 1,10 beträgt. Der theoretische Gelpunkt errechnet sich zu 1,0.

PBD-PU 2 ist bei Raumtemperatur fest, schmelzbar und von der Konsistenz her gummiartig und haftklebrig. Die Prüfergebnisse sind in der folgenden Tabelle zusammengefasst.

Prüfergebnisse PBD-PU 2:

| | |
|---|---|
| G' (bei 1 rad /sec und 23 °C) | 150.000 Pa |
| G" (bei 1 rad /sec und 23 °C) | 120.000 Pa |
| G' (bei 10 rad /sec und 23 °C) | 340.000 Pa |
| G" (bei 10 rad /sec und 23 °C) | 230.000 Pa |
| komplexe Viskosität $\eta$* bei 10 rad/sec und 23°C | 41.000 Pas |
| komplexe Viskosität $\eta$* bei 10 rad/sec und 90°C | 540 Pas |

Herstellung des erfindungsgemäßen Klebstoffs und der erfindungsgemäßen Klebebandschicht:

PBD-PU 2 wurde zur Herstellung des erfindungsgemäßen Klebstoffs und der erfindungsgemäßen Klebebandschicht gemäß der folgenden Rezeptur im Laboransatz weiter abgemischt und zu einem Film ausgeformt.

Zusammensetzung der thermisch vulkanisierbaren Klebebandschicht auf Basis von PBD-PU 2:

| Rohstoff | Gewichtsprozent |
|---|---|
| PBD-PU 2 | 90,0 |
| Mahlschwefel 80/90° | 10,0 |

Es wurden die folgenden Ergebnisse erzielt.
Tack bei 23°C: 0,3 N

Zugscherfestigkeit:

| Prüfkörper | Ölauftrag | Aushärtung | Zugscherfestigkeit [MPa] | Bruch bild |
|---|---|---|---|---|
| Stahl/Stahl | nein | 30 min/ 200°C | 6,5 | kohäsiv |
| Stahl/ Stahl | ja | 30 min/ 200°C | 6,9 | kohäsiv |
| Elektrolytisch verzinkter Stahl/ Elekrolytisch verzinkter Stahl | ja | 30 min/ 200°C | 5,9 | teils kohäsiv/ teils adhäsiv |
| Feuerverzinkter Stahl/ Feuerverzinkter Stahl | ja | 30 min/ 200°C | 5,7 | teils kohäsiv/ teils adhäsiv |

**Beispiel 3**

Die chemische Umsetzung zum Polybutadien-Polyurethan erfolgte in Gegenwart eines Epoxidharzes. Das Polybutadien-Polyurethan (PBD-PU 3) setzt sich inklusive des Epoxidharzes wie folgt zusammen:

Zusammensetzung PBD-PU 3:

| Rohstoff | Gewichtsanteil [Gew.-%] | Anzahl der eingebrachten OH- beziehungsweise NCO-Gruppen, bezogen auf den prozentualen Gewichtsanteil | Prozentuales Verhältnis der Anzahl der OH-Gruppen zueinander |
|---|---|---|---|
| Krasol LBH 2000 ® | 61,67 | 56,12 mmol OH | 50 |
| 2-Ethyl-1,3-hexandiol ® | 4,10 | 56,12 mmol OH | 50 |
| Coscat 83 ® | 0,15 | | |
| Desmodur W ® | 14,08 | 106,62 mmol NCO | |
| Epikote 828 ® | 20,00 | | |
| Summe | 100,00 | | |

Die Herstellung erfolgte im 200 Liter Mischkessel. Der Gewichtsanteil an Desmodur W ® ist dabei so berechnet, dass das NCO/OH - Verhältnis des Polyurethans 0,95 beträgt. Der theoretische Gelpunkt errechnet sich zu 1,0.

PBD-PU 3 (inklusive Epoxidharz) ist bei Raumtemperatur fest, schmelzbar und von der Konsistenz her gummiartig und haftklebrig. Die Prüfergebnisse sind in der folgenden Tabelle zusammengefasst:

Prüfergebnisse PBD-PU 3 (inklusive Epoxidharz):

| | |
|---|---|
| G' (bei 1 rad /sec und 23 °C) | 9.000 Pa |
| G" (bei 1 rad /sec und 23 °C) | 20.000 Pa |
| G' (bei 10 rad /sec und 23 °C) | 70.000 Pa |
| G" (bei 10 rad /sec und 23 °C) | 90.000 Pa |
| komplexe Viskosität $\eta^*$ bei 10 rad/sec und 23°C | 11.000 Pas |
| komplexe Viskosität $\eta^*$ bei 10 rad/sec und 90°C | 200 Pas |

Herstellung des erfindungsgemäßen Klebstoffs und der erfindungsgemäßen Klebebandschicht:

PBD-PU 3 (inklusive Epoxidharz) wurde zur Herstellung des erfindungsgemäßen Klebstoffs und der erfindungsgemäßen Klebebandschicht gemäß der folgenden Rezeptur im Doppelschneckenextruder weiter abgemischt. Das bereits während der Polybutadien-Polyurethan-Herstellung eingemischte Epoxidharz ist in der folgenden Tabelle separat aufgeführt.

Zusammensetzung der thermisch vulanisierbaren Klebebandschicht auf Basis von PBD-PU 3:

| Rohstoff | Gewichtsprozent |
|---|---|
| PBD-PU 3 (exklusive Epoxidharz) | 51,9 |
| Epikote 828 ® (aus der PBD-PU 3- Herstellung) | 13,0 |
| Mahlschwefel 80/90° | 6,9 |
| MBTS | 2,1 |
| ZBEC | 0,9 |
| TBzTD | 0,9 |

(fortgesetzt)

| Rohstoff | Gewichtsprozent |
|---|---|
| Luvomaxx N220 ® | 8,8 |
| Talkum Pharma M ® | 15,5 |

Es wurden die folgenden Ergebnisse erzielt.

Tack (vor der thermischen Vulkanisation) bei 23°C: 0,6 N

Klebkraft (vor der thermischen Vulkanisation):

| Prüfkörper | Ölauftrag | Klebkraft, sofort (N/cm) | Klebkraft, nach 30 Minuten (N/cm) |
|---|---|---|---|
| Stahl | ja | 0,03 | 0,12 |

Zugscherfestigkeit (nach der thermischen Vulkanisation):

| Prüfkörper | Ölauftrag | Aushärtung | Zugscherfestigkeit [MPa] | Bruchbild |
|---|---|---|---|---|
| Stahl/Stahl | nein | 30 min/ 180°C | 10,3 | kohäsiv |
| Stahl/ Stahl | ja | 30 min/ 180°C | 9,8 | kohäsiv |
| Stahl/ Stahl | ja | 10 min/ 230°C | 9,4 | kohäsiv |
| Elektrolytisch verzinkter Stahl/ Elekrolytisch verzinkter Stahl | ja | 30 min/ 180°C | 9,1 | kohäsiv |
| Feuerverzinkter Stahl/ Feuerverzinkter Stahl | ja | 30 min/ 180°C | 8,4 | kohäsiv |
| KTL-Stahl/ KTL-Stahl | nein | 30 min/ 140°C | 8,7 | kohäsiv |

**Beispiel 4**

Herstellung des erfindungsgemäßen Klebstoffs und der erfindungsgemäßen Klebebandschicht:

Zur Herstellung des erfindungsgemäßen Klebstoffs und der erfindungsgemäßen Klebebandschicht wurde PBD-PU 3 (inklusive Epoxidharz) verwendet. Dazu wurde PBD-PU 3 (inklusive Epoxidharz) gemäß der folgenden Rezeptur im Doppelschneckenextruder weiter abgemischt. In der folgenden Tabelle ist das bereits während der Polybutadien-Polyurethan-Herstellung eingemischte Epoxidharz wieder separat aufgeführt.

Zusammensetzung der thermisch vulanisierbaren Klebebandschicht auf Basis von PBD-PU 3:

| Rohstoff | Gewichtsprozent |
|---|---|
| PBD-PU 3 (exklusive Epoxidharz) | 44,8 |
| Epikote 828 ® (aus der PBD-PU 3- Herstellung) | 11,3 |
| Mahlschwefel 80/90° | 3,5 |
| MBTS | 2,0 |
| ZBEC | 1,0 |
| TBzTD | 1,0 |
| Luvomaxx N220 ® | 0,9 |
| Omyacarb 5-GU® | 26,1 |
| Rapidquell® Quicklime CL 90-Q | 3,5 |
| Talkum Pharma M ® | 5,9 |

Es wurden die folgenden Ergebnisse erzielt.
Tack (vor der thermischen Vulkanisation) bei 23°C: 0,5 N

Klebkraft (vor der thermischen Vulkanisation):

| Prüfkörper | Ölauftrag | Klebkraft, sofort (N/cm) | Klebkraft, nach 30 Minuten (N/cm) |
|---|---|---|---|
| Stahl | ja | 0,04 | 0,15 |

Zugscherfestigkeit (nach der thermischen Vulkanisation):

| Prüfkörper | Ölauftrag | Aushärtung | Zugscherfestigkeit [MPa] | Bruch bild |
|---|---|---|---|---|
| Stahl /Stahl | nein | 30 min/ 180°C | 17,6 | kohäsiv |
| Stahl/ Stahl | ja | 30 min/ 180°C | 16,1 | kohäsiv |
| Elektrolytisch verzinkter Stahl/ Elekrolytisch verzinkter Stahl | ja | 30 min/ 180°C | 16,9 | kohäsiv |
| Feuerverzinkter Stahl/ Feuerverzinkter Stahl | ja | 30 min/ 180°C | 15,9 | kohäsiv |
| KTL-Stahl/ KTL-Stahl | nein | 30 min/ 130°C | 7,2 | kohäsiv |
| KTL-Stahl/ KTL-Stahl | nein | 30 min/ 160°C | 15,5 | kohäsiv |

**Beispiel 5**

Herstellung des erfindungsgemäßen Klebstoffs und der erfindungsgemäßen Klebebandschicht:

Zur Herstellung des erfindungsgemäßen Klebstoffs und der erfindungsgemäßen Klebebandschicht wurde PBD-PU 3 (inklusive Epoxidharz) verwendet. Dazu wurde PBD-PU 3 (inklusive Epoxidharz) gemäß der folgenden Rezeptur im Doppelschneckenextruder (DSE) weiter abgemischt.
In der folgenden Tabelle ist das bereits während der Polybutadien-Polyurethan-Herstellung eingemischte Epoxidharz wieder separat aufgeführt.
Zusammensetzung der thermisch vulanisierbaren Klebebandschicht auf Basis von PBD-PU 3:

| Rohstoff | Gewichtsprozent |
|---|---|
| PBD-PU 3 (exklusive Epoxidharz) | 44,8 |
| Epikote 828 ® (aus der PBD-PU 3- Herstellung) | 11,3 |
| Mahlschwefel 80/90° | 7,0 |
| MBTS | 2,0 |
| ZBEC | 1,0 |
| TBzTD | 1,0 |
| Luvomaxx N220 ® | 0,9 |
| Omyacarb 5-GU® | 26,1 |
| Rapidquell® Quicklime CL 90-Q | 3,5 |
| Talkum Pharma M ® | 2,4 |

Es wurden die folgenden Ergebnisse erzielt.
Tack (vor der thermischen Vulkanisation) bei 23°C: 0,5 N

Klebkraft (vor der thermischen Vulkanisation):

| Prüfkörper | Ölauftrag | Klebkraft, sofort (N/cm) | Klebkraft, nach 30 Minuten (N/cm) |
|---|---|---|---|
| Stahl | ja | 0,03 | 0,13 |

Zugscherfestigkeit (nach der thermischen Vulkanisation):

| Prüfkörper | Ölauftrag | Aushärtung | Zugscherfestigkeit [MPa] | Bruch bild |
|---|---|---|---|---|
| Stahl/Stahl | nein | 30 min/ 180°C | 27,9 | kohäsiv |
| Stahl/ Stahl | ja | 30 min/ 180°C | 26,3 | kohäsiv |
| Elektrolytisch verzinkter Stahl/ Elekrolytisch verzinkter Stahl | ja | 30 min/ 180°C | 24,1 | kohäsiv |
| Feuerverzinkter Stahl/ Feuerverzinkter Stahl | ja | 30 min/ 180°C | 26,1 | kohäsiv |
| KTL-Stahl/ KTL-Stahl | nein | 30 min/ 130°C | 10,5 | kohäsiv |
| KTL-Stahl/ KTL-Stahl | nein | 30 min/ 160°C | 24,8 | kohäsiv |

**Beispiel 6**

Herstellung des erfindungsgemäßen Klebstoffs und der erfindungsgemäßen Klebebandschicht:

Zur Herstellung des erfindungsgemäßen Klebstoffs und der erfindungsgemäßen Klebebandschicht wurde PBD-PU 3 (inklusive Epoxidharz) verwendet. Dazu wurde PBD-PU 3 (inklusive Epoxidharz) gemäß der folgenden Rezeptur im Doppelschneckenextruder weiter abgemischt.

Das Prepolymer wurde dabei über eine Fassschmelze und Zwangseinspeisung in den Extruder eingespeist (T ca. 70°C, Durchsatz ca. 16kg/h, Extruderdrehzahl 300 1/min). Die Schmelzetemperatur wurde auf ca. 100°C gehalten, so dass keine Vernetzung auftrat.

In der folgenden Tabelle ist das bereits während der Polybutadien-Polyurethan-Herstellung eingemischte Epoxidharz wieder separat aufgeführt.

Zusammensetzung der thermisch vulanisierbaren Klebebandschicht auf Basis von PBD-PU 3:

| Rohstoff | Gewichtsprozent |
|---|---|
| PBD-PU 3 (exklusive Epoxidharz) | 44,8 |
| Epikote 828 ® (aus der PBD-PU 3- Herstellung) | 11,3 |
| Mahlschwefel 80/90° | 3,5 |
| ZBEC | 1,0 |
| TBzTD | 1,0 |
| Luvomaxx N220 ® | 0,9 |
| Omyacarb 5-GU® | 26,1 |
| Rapidquell® Quicklime CL 90-Q | 3,5 |
| Talkum Pharma M ® | 7,9 |

Es wurden die folgenden Ergebnisse erzielt.

Tack (vor der thermischen Vulkanisation) bei 23°C: 0,5 N

Klebkraft (vor der thermischen Vulkanisation):

| Prüfkörper | Ölauftrag | Klebkraft, sofort (N/cm) | Klebkraft, nach 30 Minuten (N/cm) |
|---|---|---|---|

(fortgesetzt)

| Prüfkörper | Ölauftrag | Klebkraft, sofort (N/cm) | Klebkraft, nach 30 Minuten (N/cm) |
|---|---|---|---|
| Stahl | ja | 0,04 | 0,15 |
| Härtungstemperatur (DSC): 156 °C | | | |

Zugscherfestigkeit (nach der thermischen Vulkanisation):

| Prüfkörper | Ölauftrag | Aushärtung | Zugscherfestigkeit [MPa] | Bruchbild |
|---|---|---|---|---|
| Stahl/Stahl | nein | 30 min/ 180°C | 14,2 | kohäsiv |
| Stahl/ Stahl | ja | 30 min/ 180°C | 12,9 | kohäsiv |
| Elektrolytisch verzinkter Stahl/ Elekrolytisch verzinkter Stahl | ja | 30 min/ 180°C | 11,8 | kohäsiv |
| Feuerverzinkter Stahl/ Feuerverzinkter Stahl | ja | 30 min/ 180°C | 10,7 | kohäsiv |
| KTL-Stahl/ KTL-Stahl | nein | 30 min/ 130°C | 6,3 | kohäsiv |
| KTL-Stahl/ KTL-Stahl | nein | 30 min/ 160°C | 11,9 | kohäsiv |

**Beispiel 6a**

Herstellung des erfindungsgemäßen Klebstoffs und der erfindungsgemäßen Klebebandschicht:

Zur Herstellung des erfindungsgemäßen Klebstoffs und der erfindungsgemäßen Klebebandschicht wurde PBD-PU 3 (inklusive Epoxidharz) verwendet. Dazu wurde PBD-PU 3 (inklusive Epoxidharz) gemäß der folgenden Rezeptur im Planetwalzenextruder (PWE) weiter abgemischt. Ziel war eine Absenkung der Prozesstemperatur, um eine die Gefahr einer vorzeitigen Vernetzung insbesondere bei erhöhten Ultrabeschleunigeranteilen abzumindern.

Im PWE wurden die pulverförmigen Feststoffe wie Talkum, Kreide, Kalk (Calciumoxid), Schwefel und ein Ultrabeschleuniger-Premix rezepturabhängig in die PU-Basis eingearbeitet werden. Die flüssige Rußdispersion wurde in einem nachgeschalteten DSE eingebracht, in dem auch eine Entgasung vorgenommen wurde.

Das Prepolymer wurde dabei über eine Fassschmelze und Zwangseinspeisung in den Extruder (Typ Entex PWE, vierschüssig, Durchmesser 70 mm, bestückt mit Standardspindeln: 7, 7, 7, 6 je Schuss) eingespeist (T ca. 70°C). Der Durchsatz betrug ca. 25 kg/h, die Drehzahl 70 1/min). Es zeigte sich, dass die verrringerte Spindelbestückung des letzten Schusses für eine geringe Prozesstemperatur vorteilhaft ist.

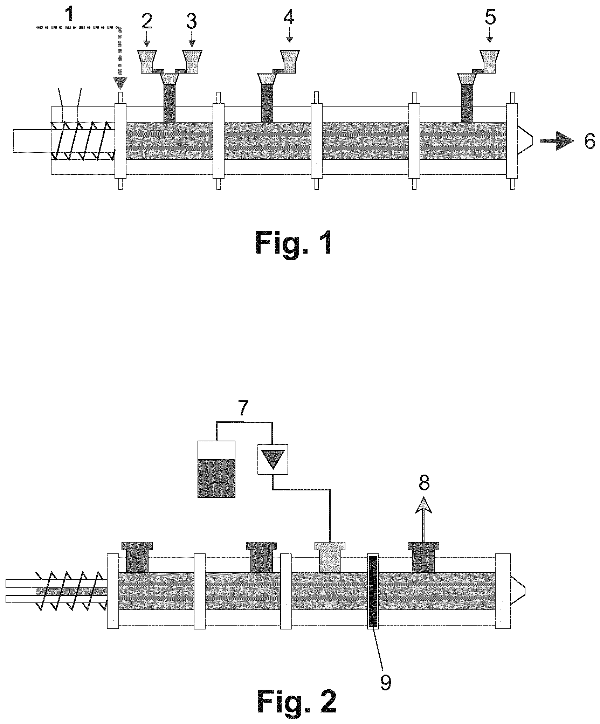

Um die Dosiererkomplexität zu reduzieren, wurden Premixe für Talkum und Kalk sowie für die Ultrabeschleuniger ZBEC und TBzTD angefertigt. Lediglich Kreide und Schwefel wurden separat dosiert. Fig. 1 zeigt den Aufbau.

Die vier Walzenzylinder wurden auf 70/50/35/35°C abfallend und die Zentralspindel auf 20°C temperiert. Die Schmelzetemperatur unmittelbar hinter dem PWE wurde mit 72°C bestimmt.

Über eine mit 75°C temperierte Schmelzepumpe und nachfolgenden Schmelzeschlauch wurde das Compound in den DSE überführt. Bei einer Drehzahl von 110 1/min wurden die Einzelzonen auf 60°C vorgewählt. Der Niederhalter im Entgasungsbereich lief mit 250 1/min. Die Austrittstemperatur betrug etwa 77°C. Fig. 2zeigt diesen Anlagenteil schematisch.

In der folgenden Tabelle ist das bereits während der Polybutadien-Polyurethan-Herstellung eingemischte Epoxidharz wieder separat aufgeführt.

Zusammensetzung der thermisch vulanisierbaren Klebebandschicht auf Basis von PBD-PU 3:

| Rohstoff | Gewichtsprozent |
|---|---|
| PBD-PU 3 (exklusive Epoxidharz) | 44,8 |
| Epikote 828 ® (aus der PBD-PU 3- Herstellung) | 11,3 |
| Mahlschwefel 80/90° | 3,5 |
| ZBEC | 1,0 |
| TBzTD | 1,0 |

(fortgesetzt)

| Rohstoff | Gewichtsprozent |
|---|---|
| Luvomaxx N220 ® | 0,9 |
| Omyacarb 5-GU® | 26,1 |
| Rapidquell® Quicklime CL 90-Q | 3,5 |
| Talkum Pharma M ® | 7,9 |

Das Beispiel zeigt, dass sich mit der bevorzugten Verwendung eines Planetwalzenextruders vorteilhaft die Prozesstemperaturen absenken lassen.

**Beispiel 7**

Herstellung des erfindungsgemäßen Klebstoffs und der erfindungsgemäßen Klebebandschicht:

Zur Herstellung des erfindungsgemäßen Klebstoffs und der erfindungsgemäßen Klebebandschicht wurde PBD-PU 3 (inklusive Epoxidharz) verwendet. Dazu wurde PBD-PU 3 (inklusive Epoxidharz) gemäß der folgenden Rezeptur im Doppelschneckenextruder analog Beispiel 6 weiter abgemischt.

In der folgenden Tabelle ist das bereits während der Polybutadien-Polyurethan-Herstellung eingemischte Epoxidharz wieder separat aufgeführt.

Zusammensetzung der thermisch vulanisierbaren Klebebandschicht auf Basis von PBD-PU 3:

| Rohstoff | Gewichtsprozent |
|---|---|
| PBD-PU 3 (exklusive Epoxidharz) | 44,8 |
| Epikote 828 ® (aus der PBD-PU 3- Herstellung) | 11,3 |
| Mahlschwefel 80/90° | 3,5 |
| ZBEC | 1,5 |
| TBzTD | 1,5 |
| Luvomaxx N220 ® | 0,9 |
| Omyacarb 5-GU® | 26,1 |
| Rapidquell® Quicklime CL 90-Q | 3,5 |
| Talkum Pharma M ® | 6,9 |

Es wurden die folgenden Ergebnisse erzielt.
Tack (vor der thermischen Vulkanisation) bei 23°C: 0,5 N

Klebkraft (vor der thermischen Vulkanisation):

| Prüfkörper | Ölauftrag | Klebkraft, sofort (N/cm) | Klebkraft, nach 30 Minuten (N/cm) |
|---|---|---|---|
| Stahl | ja | 0,04 | 0,18 |
| Härtungstemperatur (DSC): 139°C | | | |

Zugscherfestigkeit (nach der thermischen Vulkanisation):

| Prüfkörper | Ölauftrag | Aushärtung | Zugscherfestigkeit [MPa] | Bruch bild |
|---|---|---|---|---|
| Stahl/Stahl | nein | 30 min/ 180°C | 17,8 | kohäsiv |
| Stahl/ Stahl | ja | 30 min/ 180°C | 17,3 | kohäsiv |

(fortgesetzt)

| Prüfkörper | Ölauftrag | Aushärtung | Zugscherfestigkeit [MPa] | Bruch bild |
|---|---|---|---|---|
| Elektrolytisch verzinkter Stahl/ Elekrolytisch verzinkter Stahl | ja | 30 min/ 180°C | 17,6 | kohäsiv |
| Feuerverzinkter Stahl/ Feuerverzinkter Stahl | ja | 30 min/ 180°C | 15,6 | kohäsiv |
| KTL-Stahl/ KTL-Stahl | nein | 30 min/ 130°C | 12,3 | kohäsiv |
| KTL-Stahl/ KTL-Stahl | nein | 30 min/ 160°C | 15,2 | kohäsiv |

**Beispiel** 8

Herstellung des erfindungsgemäßen Klebstoffs und der erfindungsgemäßen Klebebandschicht:

Zur Herstellung des erfindungsgemäßen Klebstoffs und der erfindungsgemäßen Klebebandschicht wurde PBD-PU 3 (inklusive Epoxidharz) verwendet. Dazu wurde PBD-PU 3 (inklusive Epoxidharz) gemäß der folgenden Rezeptur im Doppelschneckenextruder weiter abgemischt. In der folgenden Tabelle ist das bereits während der Polybutadien-Polyurethan-Herstellung eingemischte Epoxidharz wieder separat aufgeführt.

Zusammensetzung der thermisch vulanisierbaren Klebebandschicht auf Basis von PBD-PU 3:

| Rohstoff | Gewichtsprozent |
|---|---|
| PBD-PU 3 (exklusive Epoxidharz) | 44,8 |
| Epikote 828 ® (aus der PBD-PU 3- Herstellung) | 11,3 |
| Mahlschwefel 80/90° | 3,5 |
| ZBEC | 3,0 |
| TBzTD | 3,0 |
| Luvomaxx N220 ® | 0,9 |
| Omyacarb 5-GU® | 26,1 |
| Rapidquell® Quicklime CL 90-Q | 3,5 |
| Talkum Pharma M ® | 3,9 |

Es wurden die folgenden Ergebnisse erzielt.
Tack (vor der thermischen Vulkanisation) bei 23°C: 0,4 N

Klebkraft (vor der thermischen Vulkanisation):

| Prüfkörper | Ölauftrag | Klebkraft, sofort (N/cm) | Klebkraft, nach 30 Minuten (N/cm) |
|---|---|---|---|
| Stahl | ja | 0,04 | 0,18 |

Die Härtungstemperatur der Klebemasse konnte durch den sehr hohen Gehalt an Ultrabeschleunigern unter den für übliche Vulkanisationsklebstoffe bekannten Bereich von 130 - 250 °C eingestellt werden und betrug 120 °C.

Zugscherfestigkeit (nach der thermischen Vulkanisation):

| Prüfkörper | Ölauftrag | Aushärtung | Zugscherfestigkeit [MPa] | Bruch bild |
|---|---|---|---|---|
| Stahl/Stahl | nein | 30 min/ 180°C | 17,8 | kohäsiv |
| Stahl/ Stahl | ja | 30 min/ 180°C | 17,1 | kohäsiv |
| Elektrolytisch verzinkter Stahl/ Elekrolytisch verzinkter Stahl | ja | 30 min/ 180°C | 17,0 | kohäsiv |
| Feuerverzinkter Stahl/ Feuerverzinkter Stahl | ja | 30 minl 180°C | 15,9 | kohäsiv |

(fortgesetzt)

| Prüfkörper | Ölauftrag | Aushärtung | Zugscherfestigkeit [MPa] | Bruch bild |
|---|---|---|---|---|
| KTL-Stahl/ KTL-Stahl | nein | 30 min / 130°C | 15,4 | kohäsiv |
| KTL-Stahl/ KTL-Stahl | nein | 30 min / 160°C | 15,8 | kohäsiv |

Beim hier vorliegenden hohen Gehalt an Ultrabeschleunigern und der dementsprechend niedrigen Härtungstemperatur zeigten sich im DSE erste Vernetzungserscheinungen (Stippen, Gelbildung).

**Beispiel 8a**

Herstellung des erfindungsgemäßen Klebstoffs und der erfindungsgemäßen Klebebandschicht:

Zur Herstellung des erfindungsgemäßen Klebstoffs und der erfindungsgemäßen Klebebandschicht wurde PBD-PU 3 (inklusive Epoxidharz) verwendet. Da sich im DSE erste Vernetzungserscheinungen zeigten, wurde PBD-PU 3 (inklusive Epoxidharz) gemäß der folgenden Rezeptur im Planetwalzentextruder analog Beispiel 6a weiter abgemischt. In der folgenden Tabelle ist das bereits während der Polybutadien-Polyurethan-Herstellung eingemischte Epoxidharz wieder separat aufgeführt.

Zusammensetzung der thermisch vulanisierbaren Klebebandschicht auf Basis von PBD-PU 3:

| Rohstoff | Gewichtsprozent |
|---|---|
| PBD-PU 3 (exklusive Epoxidharz) | 44,8 |
| Epikote 828 ® (aus der PBD-PU 3- Herstellung) | 11,3 |
| Mahlschwefel 80/90° | 3,5 |
| ZBEC | 3,0 |
| TBzTD | 3,0 |
| Luvomaxx N220 ® | 0,9 |
| Omyacarb 5-GU® | 26,1 |
| Rapidquell® Quicklime CL 90-Q | 3,5 |
| Talkum Pharma M ® | 3,9 |

Es konnten die Temperaturen in PWE und nachgeschaltetem DSE unterhalb von 80 °C gehalten werden, so dass keine Stippenbildung / Gel auftrat.

Beispiele 6 - 8a mit jeweils steigendem Gehalt an Härtungsagenzien und damit sinkenden Härtungstemperaturen zeigen, dass der Planetwalzenenextruder das bevorzugte Gerät zur Compoundierung von thermisch härtbaren Klebemassen darstellt, da die Härtungsreaktion durch die mit diesem Aggregat niedrigen Temperaturen bei der Herstellung von Klebemasse und Klebeband auch bei einem sehr hohen Gehalt an Härtungsagenzien und dementsprechend niedriger Härtungstemperatur nicht anspringt.

**Beispiel** 9

Die chemische Umsetzung zum Polybutadien-Polyurethan erfolgte in Gegenwart eines Epoxidharzes und eines Klebrigmacherharzes. Das Polybutadien-Polyurethan (PBD-PU 9) setzt sich inklusive des Epoxidharzes und des Klebrigmacherharzes wie folgt zusammen:

Zusammensetzung PBD-PU 9:

| Rohstoff | Gewichtsanteil [Gew.-%] | Anzahl der eingebrachten OH- beziehungsweise NCO-Gruppen, bezogen auf den prozentualen Gewichtsanteil | Prozentuales Verhältnis der Anzahl der OH- Gruppen zueinander |
|---|---|---|---|
| Krasol LBH 2000 ® | 54,99 | 50,04 mmol OH | 50 |

(fortgesetzt)

| Rohstoff | Gewichtsanteil [Gew.-%] | Anzahl der eingebrachten OH- beziehungsweise NCO-Gruppen, bezogen auf den prozentualen Gewichtsanteil | Prozentuales Verhältnis der Anzahl der OH-Gruppen zueinander |
|---|---|---|---|
| 2-Ethyl-1,3-hexandiol ® | 3,66 | 50,04 mmol OH | 50 |
| Coscat 83 ® | 0,13 | | |
| Desmodur W ® | 12,56 | 95,09 mmol NCO | |
| Epikote 828 ® | 17,84 | | |
| Dercolyte S115® | 10,82 | | |
| Summe | 100,00 | | |

Die Herstellung erfolgte im Laboransatz (1 Liter).. Der Gewichtsanteil an Desmodur W ® ist dabei so berechnet, dass das NCO/OH - Verhältnis des Polyurethans 0,95 beträgt. Der theoretische Gelpunkt errechnet sich zu 1,0.

PBD-PU 9 (inklusive Epoxidharz und Klebrigmacherharz) ist bei Raumtemperatur fest, schmelzbar und von der Konsistenz her gummiartig und haftklebrig. Die Prüfergebnisse sind in der folgenden Tabelle zusammengefasst:

Prüfergebnisse PBD-PU 9 (inklusive Epoxidharz und Klebrigmacherharz):

| | |
|---|---|
| G' (bei 1 rad /sec und 23 °C) | 30.000 Pa |
| G'' (bei 1 rad /sec und 23 °C) | 45.000 Pa |
| G' (bei 10 rad /sec und 23 °C) | 130.000 Pa |
| G'' (bei 10 rad /sec und 23 °C) | 140.000 Pa |
| komplexe Viskosität $\eta$ * bei 10 rad/sec und 23°C | 19.000 Pas |
| komplexe Viskosität $\eta$ * bei 10 rad/sec und 90°C | 260 Pas |

Herstellung des erfindungsgemäßen Klebstoffs und der erfindungsgemäßen Klebebandschicht:

PBD-PU 9 (inklusive Epoxidharz und Klebrigmacherharz) wurde zur Herstellung des erfindungsgemäßen Klebstoffs und der erfindungsgemäßen Klebebandschicht gemäß der folgenden Rezeptur im Laboransatz weiter abgemischt und zu einem Film ausgeformt.

Die bereits während der Polybutadien-Polyurethan-Herstellung eingemischten Epoxid- und Klebrigmacherharze sind in der folgenden Tabelle separat aufgeführt.

Zusammensetzung der thermisch vulanisierbaren Klebebandschicht auf Basis von PBD-PU 9:

| Rohstoff | Gewichtsprozent |
|---|---|
| PBD-PU 9 (exklusive Epoxid- und Klebrigmacherharz) | 47,5 |
| Epikote 828 ® (aus der PBD-PU 9- Herstellung) | 11,9 |
| Dercolyte S115® (aus der PBD-PU 9- Herstellung) | 7,2 |
| Mahlschwefel 80/90° | 7,2 |
| MBTS | 2,2 |
| Printex 60 ® | 1,0 |
| Omyacarb 5-GU® | 19,4 |
| Rapidquell® Quicklime CL 90-Q | 3,6 |

Es wurden die folgenden Ergebnisse erzielt.

Tack (vor der thermischen Vulkanisation) bei 23°C: 1,2 N

Klebkraft (vor der thermischen Vulkanisation):

| Prüfkörper | Ölauftrag | Klebkraft, sofort (N/cm) | Klebkraft, nach 30 Minuten (N/cm) |
|---|---|---|---|
| Stahl | ja | 0,2 | 1,8 |

Zugscherfestigkeit (nach der thermischen Vulkanisation):

| Prüfkörper | Ölauftrag | Aushärtung | Zugscherfestigkeit [MPa] | Bruch bild |
|---|---|---|---|---|
| Stahl/Stahl | nein | 30 min/ 180°C | 14,2 | kohäsiv |
| Stahl/ Stahl | ja | 30 min/ 180°C | 13,8 | kohäsiv |
| Elektrolytisch verzinkter Stahl/ Elekrolytisch verzinkter Stahl | ja | 30 min/ 180°C | 13,6 | kohäsiv |
| Feuerverzinkter Stahl/ Feuerverzinkter Stahl | ja | 30 min/ 180°C | 12,4 | kohäsiv |

**Beispiel 10**

Die chemische Umsetzung zum Polybutadien-Polyurethan erfolgte in Gegenwart eines Epoxidharzes und eines Klebrigmacherharzes. Das Polybutadien-Polyurethan (PBD-PU 10) setzt sich inklusive des Epoxidharzes und des Klebrigmacherharzes wie folgt zusammen:

Zusammensetzung PBD-PU 10:

| Rohstoff | Gewichtsanteil [Gew.-%] | Anzahl der eingebrachten OH- beziehungsweise NCO-Gruppen, bezogen auf den prozentualen Gewichtsanteil | Prozentuales Verhältnis der Anzahl der OH-Gruppen zueinander |
|---|---|---|---|
| Krasol LBH 2000 ® | 54,99 | 50,04 mmol OH | 50 |
| 2-Ethyl-1,3-hexandiol ® | 3,66 | 50,04 mmol OH | 50 |
| Coscat 83 ® | 0,13 | | |
| Desmodur W ® | 12,56 | 95,09 mmol NCO | |
| Epikote 828 ® | 17,84 | | |
| Winqtack® 10 | 10,82 | | |
| Summe | 100,00 | | |

Die Herstellung erfolgte im Laboransatz (1 Liter).. Der Gewichtsanteil an Desmodur W ® ist dabei so berechnet, dass das NCO/OH - Verhältnis des Polyurethans 0,95 beträgt. Der theoretische Gelpunkt errechnet sich zu 1,0.

PBD-PU 10 (inklusive Epoxidharz und Klebrigmacherharz) ist bei Raumtemperatur fest, schmelzbar und von der Konsistenz her gummiartig und haftklebrig. Die Prüfergebnisse sind in der folgenden Tabelle zusammengefasst:

Prüfergebnisse PBD-PU 10 (inklusive Epoxidharz und Klebrigmacherharz):

| | |
|---|---|
| G' (bei 1 rad /sec und 23 °C) | 18.000 Pa |
| G" (bei 1 rad /sec und 23 °C) | 32.000 Pa |
| G' (bei 10 rad /sec und 23 °C) | 100.000 Pa |

(fortgesetzt)

| | |
|---|---|
| G" (bei 10 rad /sec und 23 °C) | 120.000 Pa |
| komplexe Viskosität $\eta*$ bei 10 rad/sec und 23°C | 16.000 Pas |
| komplexe Viskosität $\eta*$ bei 10 rad/sec und 90°C | 220 Pas |

Herstellung des erfindungsgemäßen Klebstoffs und der erfindungsgemäßen Klebebandschicht:

PBD-PU 10 (inklusive Epoxidharz und Klebrigmacherharz) wurde zur Herstellung des erfindungsgemäßen Klebstoffs und der erfindungsgemäßen Klebebandschicht gemäß der folgenden Rezeptur im Laboransatz weiter abgemischt und zu einem Film ausgeformt.

Die bereits während der Polybutadien-Polyurethan-Herstellung eingemischten Epoxid- und Klebrigmacherharze sind in der folgenden Tabelle separat aufgeführt.

Zusammensetzung der thermisch vulkanisierbaren Klebebandschicht auf Basis von PBD-PU 10:

| Rohstoff | Gewichtsprozent |
|---|---|
| PBD-PU 10 (exklusive Epoxid- und Klebrigmacherharz) | 47,5 |
| Epikote 828 ® (aus der PBD-PU 10- Herstellung) | 11,9 |
| Wingtack® 10 (aus der PBD-PU 10- Herstellung) | 7,2 |
| Mahlschwefel 80/90° | 7,2 |
| MBTS | 2,2 |
| Printex 60 ® | 1,0 |
| Omyacarb 5-GU® | 19,4 |
| Rapidquell® Quicklime CL 90-Q | 3,6 |

Es wurden die folgenden Ergebnisse erzielt.
Tack (vor der thermischen Vulkanisation) bei 23°C: 1,0 N

Klebkraft (vor der thermischen Vulkanisation):

| Prüfkörper | Ölauftrag | Klebkraft, sofort (N/cm) | Klebkraft, nach 30 Minuten (N/cm) |
|---|---|---|---|
| Stahl | ja | 0,1 | 0,28 |

Zugscherfestigkeit (nach der thermischen Vulkanisation):

| Prüfkörper | Ölauftrag | Aushärtung | Zugscherfestigkeit [MPa] | Bruch bild |
|---|---|---|---|---|
| Stahl/Stahl | nein | 30 min/ 180°C | 13,7 | kohäsiv |
| Stahl/ Stahl | ja | 30 min/ 180°C | 12,2 | kohäsiv |
| Elektrolytisch verzinkter Stahl/ Elekrolytisch verzinkter Stahl | ja | 30 min/ 180°C | 11,9 | kohäsiv |
| Feuerverzinkter Stahl/ Feuerverzinkter Stahl | ja | 30 min/ 180°C | 12,1 | kohäsiv |

**Beispiel 11**

Die chemische Umsetzung zum Polybutadien-Polyurethan erfolgte in Gegenwart eines Epoxidharzes und des Bitumens. Das Polybutadien-Polyurethan (PBD-PU 11) setzt sich inklusive des Epoxidharzes und des Bitumens wie folgt zusammen:

Zusammensetzung PBD-PU 11:

| Rohstoff | Gewichtsanteil [Gew.-%] | Anzahl der eingebrachten OH- beziehungsweise NCO-Gruppen, bezogen auf den prozentualen Gewichtsanteil | Prozentuales Verhältnis der Anzahl der OH-Gruppen zueinander |
|---|---|---|---|
| Krasol LBH 2000 [®] | 54,99 | 50,04 mmol OH | 50 |
| 2-Ethyl-1,3-hexandiol [®] | 3,66 | 50,04 mmol OH | 50 |
| Coscat 83 [®] | 0,13 | | |
| Desmodur W [®] | 12,56 | 95,09 mmol NCO | |
| Epikote 828 [®] | 17,84 | | |
| Azalt 50/70 DE [®] | 10,82 | | |
| Summe 100,00 | | | |

Die Herstellung erfolgte im Laboransatz (1 Liter). Der Gewichtsanteil an Desmodur W [®] ist dabei so berechnet, dass das NCO/OH - Verhältnis des Polyurethans 0,95 beträgt. Der theoretische Gelpunkt errechnet sich zu 1,0.

PBD-PU 11 (inklusive Epoxidharz und Bitumen) ist bei Raumtemperatur fest, schmelzbar und von der Konsistenz her gummiartig und haftklebrig. Die Prüfergebnisse sind in der folgenden Tabelle zusammengefasst:

Prüfergebnisse PBD-PU 11 (inklusive Epoxidharz und Bitumen):

| | |
|---|---|
| G' (bei 1 rad /sec und 23 °C) | 25.000 Pa |
| G" (bei 1 rad /sec und 23 °C) | 39.000 Pa |
| G' (bei 10 rad /sec und 23 °C) | 110.000 Pa |
| G" (bei 10 rad /sec und 23 °C) | 130.000 Pa |
| komplexe Viskosität $\eta^*$ bei 10 rad/sec und 23°C | 17.000 Pas |
| komplexe Viskosität $\eta^*$ bei 10 rad/sec und 90°C | 240 Pas |

Herstellung des erfindungsgemäßen Klebstoffs und der erfindungsgemäßen Klebebandschicht:

PBD-PU 11 (inklusive Epoxidharz und Bitumen) wurde zur Herstellung des erfindungsgemäßen Klebstoffs und der erfindungsgemäßen Klebebandschicht gemäß der folgenden Rezeptur im Laboransatz weiter abgemischt und zu einem Film ausgeformt.

Das bereits während der Polybutadien-Polyurethan-Herstellung eingemischte Epoxidharz und Bitumen sind in der folgenden Tabelle separat aufgeführt.

Zusammensetzung der thermisch vulanisierbaren Klebebandschicht auf Basis von PBD-PU 11:

| Rohstoff | Gewichtsprozent |
|---|---|
| PBD-PU 11 (exklusive Epoxid- und Bitumen) | 47,5 |
| Epikote 828 [®] (aus der PBD-PU 11- Herstellung) | 11,9 |
| Azalt 50/70 DE [®] (aus der PBD-PU 11- Herstellung) | 7,2 |
| Mahlschwefel 80/90° | 7,2 |
| MBTS | 2,2 |
| Printex 60 [®] | 1,0 |
| Omyacarb 5-GU[®] | 19,4 |

(fortgesetzt)

| Rohstoff | Gewichtsprozent |
|---|---|
| Rapidquell® Quicklime CL 90-Q | 3,6 |

Es wurden die folgenden Ergebnisse erzielt.
Tack (vor der thermischen Vulkanisation) bei 23°C: 1,2 N

Klebkraft (vor der thermischen Vulkanisation):

| Prüfkörper | Ölauftrag | Klebkraft, sofort (N/cm) | Klebkraft, nach 30 Minuten (N/cm) |
|---|---|---|---|
| Stahl | ja | 0,1 | 0,22 |

Zugscherfestigkeit (nach der thermischen Vulkanisation):

| Prüfkörper | Ölauftrag | Aushärtung | Zugscherfestigkeit [MPa] | Bruch bild |
|---|---|---|---|---|
| Stahl/Stahl | nein | 30 min/ 180°C | 13,2 | kohäsiv |
| Stahl/ Stahl | ja | 30 min/ 180°C | 14,9 | kohäsiv |
| Elektrolytisch verzinkter Stahl/ Elekrolytisch verzinkter Stahl | ja | 30 min/ 180°C | 13,7 | kohäsiv |
| Feuerverzinkter Stahl/ Feuerverzinkter Stahl | ja | 30 min/ 180°C | 13,1 | kohäsiv |

**Beispiel 12**

Die chemische Umsetzung zum Polybutadien-Polyurethan erfolgte in Gegenwart eines Epoxidharzes. Das Polybutadien-Polyurethan (PBD-PU 12) setzt sich inklusive des Epoxidharzes wie folgt zusammen:

Zusammensetzung PBD-PU 12:

| Rohstoff | Gewichtsanteil [Gew.-%] | Anzahl der eingebrachten OH- beziehungsweise NCO-Gruppen, bezogen auf den prozentualen Gewichtsanteil | Prozentuales Verhältnis der Anzahl der OH- Gruppen zueinander |
|---|---|---|---|
| Krasol LBH 2000 ® | 61,67 | 56,12 mmol OH | 50 |
| 2-Ethyl-1,3-hexandiol ® | 4,10 | 56,12 mmol OH | 50 |
| Coscat 83 ® | 0,15 | | |
| Desmodur W ® | 14,08 | 106,62 mmol NCO | |
| 3,4-Epoxycyclohexylmethyl-3', 4'-epoxycyclohexancarboxvlat | 20,00 | | |
| Summe | 100,00 | | |

Die Herstellung erfolgte im Laboransatz (1Liter). Der Gewichtsanteil an Desmodur W ® ist dabei so berechnet, dass das NCO/OH - Verhältnis des Polyurethans 0,95 beträgt. Der theoretische Gelpunkt errechnet sich zu 1,0.

PBD-PU 12 (inklusive Epoxidharz) ist bei Raumtemperatur fest, schmelzbar und von der Konsistenz her gummiartig und haftklebrig. Die Prüfergebnisse sind in der folgenden Tabelle zusammengefasst:
Prüfergebnisse PBD-PU 12 (inklusive Epoxidharz):

| | |
|---|---|
| G' (bei 1 rad /sec und 23 °C) | 7.000 Pa |
| G" (bei 1 rad /sec und 23 °C) | 16.000 Pa |
| G' (bei 10 rad /sec und 23 °C) | 50.000 Pa |

(fortgesetzt)

| | |
|---|---|
| G" (bei 10 rad /sec und 23 °C) | 70.000 Pa |
| komplexe Viskosität $\eta$* bei 10 rad/sec und 23°C | 6.600 Pas |
| komplexe Viskosität $\eta$* bei 10 rad/sec und 90°C | 180 Pas |

Herstellung des erfindungsgemäßen Klebstoffs und der erfindungsgemäßen Klebebandschicht:

PBD-PU 12 (inklusive Epoxidharz) wurde zur Herstellung des erfindungsgemäßen Klebstoffs und der erfindungsgemäßen Klebebandschicht gemäß der folgenden Rezeptur im Laboransatz weiter abgemischt und zu einem Film ausgeformt.

Das bereits während der Polybutadien-Polyurethan-Herstellung eingemischte Epoxidharz ist in der folgenden Tabelle separat aufgeführt.

Zusammensetzung der thermisch vulanisierbaren Klebebandschicht auf Basis von PBD-PU 12:

| Rohstoff | Gewichtsprozent |
|---|---|
| PBD-PU 12 (exklusive Epoxidharz) | 44,8 |
| 3,4-Epoxycyclohexylmethyl-3',4'-epoxycyclohexan-carboxylat (aus der PBD-PU 12-Herstellung) | 11,3 |
| Mahlschwefel 80/90° | 3,5 |
| ZBEC | 1,5 |
| TBzTD | 1,5 |
| Printex 60 ® | 0,9 |
| Omyacarb 5-GU® | 26,1 |
| Rapidquell® Quicklime CL 90-Q | 3,5 |
| Talkum Pharma M ® | 6,9 |

Es wurden die folgenden Ergebnisse erzielt.

Tack (vor der thermischen Vulkanisation) bei 23°C: 0,4 N

Klebkraft (vor der thermischen Vulkanisation):

| Prüfkörper | Ölauftrag | Klebkraft, sofort (N/cm) | Klebkraft, nach 30 Minuten (N/cm) |
|---|---|---|---|
| Stahl | ja | 0,03 | 0,15 |

Zugscherfestigkeit (nach der thermischen Vulkanisation):

| Prüfkörper | Ölauftrag | Aushärtung | Zugscherfestigkeit [MPa] | Bruch bild |
|---|---|---|---|---|
| Stahl /Stahl | nein | 30 min/ 180°C | 15,2 | kohäsiv |
| Stahl/ Stahl | ja | 30 min/ 180°C | 14,7 | kohäsiv |
| Elektrolytisch verzinkter Stahl/ Elekrolytisch verzinkter Stahl | ja | 30 min/ 180°C | 13,6 | kohäsiv |
| Feuerverzinkter Stahl/ Feuerverzinkter Stahl | ja | 30 min/ 180°C | 14,9 | kohäsiv |
| KTL-Stahl/ KTL-Stahl | nein | 30 min/ 130°C | 13,1 | kohäsiv |
| KTL-Stahl/ KTL-Stahl | nein | 30 min/ 160°C | 15,9 | kohäsiv |

**Beispiel 13**

Die chemische Umsetzung zum Polybutadien-Polyurethan erfolgte in Gegenwart eines Weichmachers. Das Polybutadien-Polyurethan (PBD-PU 13) setzt sich inklusive des Weichmachers wie folgt zusammen:

Zusammensetzung PBD-PU 13:

| Rohstoff | Gewichtsanteil [Gew.-%] | Anzahl der eingebrachten OH- beziehungsweise NCO-Gruppen, bezogen auf den prozentualen Gewichtsanteil | Prozentuales Verhältnis der Anzahl der OH-Gruppen zueinander |
|---|---|---|---|
| Krasol LBH 2000 ® | 61,67 | 56,12 mmol OH | 50 |
| 2-Ethyl-1,3-hexandiol ® | 4,10 | 56,12 mmol OH | 50 |
| Coscat 83 ® | 0,15 | | |
| Desmodur W ® | 14,08 | 106,62 mmol NCO | |
| Gravex 925 ® | 20,00 | | |
| Summe | 100,00 | | |

Die Herstellung erfolgte im Laboransatz (1Liter). Der Gewichtsanteil an Desmodur W ® ist dabei so berechnet, dass das NCO/OH - Verhältnis des Polyurethans 0,95 beträgt. Der theoretische Gelpunkt errechnet sich zu 1,0.

PBD-PU 13 (inklusive Weichmacher) ist bei Raumtemperatur fest, schmelzbar und von der Konsistenz her gummiartig und haftklebrig. Die Prüfergebnisse sind in der folgenden Tabelle zusammengefasst:

Prüfergebnisse PBD-PU 13 (inklusive Weichmacher):

| | |
|---|---|
| G' (bei 1 rad /sec und 23 °C) | 5.000 Pa |
| G" (bei 1 rad /sec und 23 °C) | 11.000 Pa |
| G' (bei 10 rad /sec und 23 °C) | 35.000 Pa |
| G" (bei 10 rad /sec und 23 °C) | 60.000 Pa |
| komplexe Viskosität $\eta$* bei 10 rad/sec und 23°C | 6.900 Pas |
| komplexe Viskosität $\eta$* bei 10 rad/sec und 90°C | 180 Pas |

Herstellung des erfindungsgemäßen Klebstoffs und der erfindungsgemäßen Klebebandschicht:

PBD-PU 13 (inklusive Weichmacher) wurde zur Herstellung des erfindungsgemäßen Klebstoffs und der erfindungsgemäßen Klebebandschicht gemäß der folgenden Rezeptur im Laboransatz weiter abgemischt und zu einem Film ausgeformt.

Der bereits während der Polybutadien-Polyurethan-Herstellung eingemischte Weichmacher ist in der folgenden Tabelle separat aufgeführt.

Zusammensetzung der thermisch vulanisierbaren Klebebandschicht auf Basis von PBD-PU 13:

| Rohstoff | Gewichtsprozent |
|---|---|
| PBD-PU 13 (exklusive Weichmacher) | 44,8 |
| Gravex 925 ® (aus der PBD-PU 13- Herstellung) | 11,3 |
| Mahlschwefel 80/90° | 3,5 |
| ZBEC | 1,5 |
| TBzTD | 1,5 |

(fortgesetzt)

| Rohstoff | Gewichtsprozent |
|---|---|
| Printex 60 ® | 0,9 |
| Omyacarb 5-GU® | 26,1 |
| Rapidquell® Quicklime CL 90-Q | 3,5 |
| Talkum Pharma M ® | 6,9 |

Es wurden die folgenden Ergebnisse erzielt.
Tack (vor der thermischen Vulkanisation) bei 23°C: 0,5 N

Klebkraft (vor der thermischen Vulkanisation):

| Prüfkörper | Ölauftrag | Klebkraft, sofort (N/cm) | Klebkraft, nach 30 Minuten (N/cm) |
|---|---|---|---|
| Stahl | ja | 0,03 | 0,11 |

Zugscherfestigkeit (nach der thermischen Vulkanisation):

| Prüfkörper | Ölauftrag | Aushärtung | Zugscherfestigkeit [MPa] | Bruch bild |
|---|---|---|---|---|
| Stahl/Stahl | nein | 30 min/ 180°C | 13,2 | kohäsiv |
| Stahl/ Stahl | ja | 30 min/ 180°C | 13,7 | kohäsiv |
| Elektrolytisch verzinkter Stahl/ Elekrolytisch verzinkter Stahl | ja | 30 min/ 180°C | 12,1 | kohäsiv |
| Feuerverzinkter Stahl/ Feuerverzinkter Stahl | ja | 30 min/ 180°C | 12,0 | kohäsiv |
| KTL-Stahl/ KTL-Stahl | nein | 30 min/ 130°C | 11,6 | kohäsiv |
| KTL-Stahl/ KTL-Stahl | nein | 30 min/ 160°C | 13,6 | kohäsiv |

**Beispiel 14**

Die chemische Umsetzung zum Polybutadien-Polyurethan erfolgte in Gegenwart eines Epoxidharzes. Das Polybutadien-Polyurethan (PBD-PU 14) setzt sich inklusive des Epoxidharzes wie folgt zusammen:

Zusammensetzung PBD-PU 14:

| Rohstoff | Gewichtsanteil [Gew.-%] | Anzahl der eingebrachten OH- beziehungsweise NCO-Gruppen, bezogen auf den prozentualen Gewichtsanteil | Prozentuales Verhältnis der Anzahl der OH- Gruppen zueinander |
|---|---|---|---|
| Krasol LBH 2000 ® | 63,44 | 57,73 mmol OH | 50 |
| 2-Ethyl-1,3-hexandiol ® | 4,22 | 57,73 mmol OH | 50 |
| Coscat 83 ® | 0,15 | | |
| Vestanat IPDI ® | 12,19 | 109,69 mmol NCO | |
| Epikote 828 ® | 20,00 | | |
| Summe | 100,00 | | |

Die Herstellung erfolgte im Laboransatz (1Liter). Der Gewichtsanteil an Vestanat IPDI ® ist dabei so berechnet, dass das NCO/OH - Verhältnis des Polyurethans 0,95 beträgt. Der theoretische Gelpunkt errechnet sich zu 1,0.

PBD-PU 14 (inklusive Epoxidharz) ist bei Raumtemperatur fest, schmelzbar und von der Konsistenz her gummiartig und haftklebrig. Die Prüfergebnisse sind in der folgenden Tabelle zusammengefasst:

Prüfergebnisse PBD-PU 14 (inklusive Epoxidharz):

| | |
|---|---|
| G' (bei 1 rad /sec und 23 °C) | 7.000 Pa |
| G" (bei 1 rad /sec und 23 °C) | 14.000 Pa |
| G' (bei 10 rad /sec und 23 °C) | 50.000 Pa |
| G" (bei 10 rad /sec und 23 °C) | 80.000 Pa |
| komplexe Viskosität $\eta$* bei 10 rad/sec und 23°C | 9.400 Pas |
| komplexe Viskosität $\eta$* bei 10 rad/sec und 90°C | 190 Pas |

Herstellung des erfindungsgemäßen Klebstoffs und der erfindungsgemäßen Klebebandschicht:

PBD-PU 14 (inklusive Epoxidharz) wurde zur Herstellung des erfindungsgemäßen Klebstoffs und der erfindungsgemäßen Klebebandschicht gemäß der folgenden Rezeptur im Laboransatz weiter abgemischt und zu einem Film ausgeformt.

Das bereits während der Polybutadien-Polyurethan-Herstellung eingemischte Epoxidharz ist in der folgenden Tabelle separat aufgeführt.

Zusammensetzung der thermisch vulanisierbaren Klebebandschicht auf Basis von PBD-PU 14:

| Rohstoff | Gewichtsprozent |
|---|---|
| PBD-PU 14 (exklusive Epoxidharz) | 44,8 |
| Epikote 828 ® (aus der PBD-PU 14- Herstellung) | 11,3 |
| Mahlschwefel 80/90° | 3,5 |
| ZBEC | 1,5 |
| TBzTD | 1,5 |
| Printex 60 ® | 0,9 |
| Omyacarb 5-GU® | 26,1 |
| Rapidquell® Quicklime CL 90-Q | 3,5 |
| Talkum Pharma M ® | 6,9 |

Es wurden die folgenden Ergebnisse erzielt.

Tack (vor der thermischen Vulkanisation) bei 23°C: 0,7 N

Klebkraft (vor der thermischen Vulkanisation):

| Prüfkörper | Ölauftrag | Klebkraft, sofort (N/cm) | Klebkraft, nach 30 Minuten (N/cm) |
|---|---|---|---|
| Stahl | ja | 0,05 | 0,15 |

Zugscherfestigkeit (nach der thermischen Vulkanisation):

| Prüfkörper | Ölauftrag | Aushärtung | Zugscherfestigkeit [MPa] | Bruchbild |
|---|---|---|---|---|
| Stahl/Stahl | nein | 30 min/ 180°C | 12,2 | kohäsiv |
| Stahl/ Stahl | ja | 30 min/ 180°C | 12,5 | kohäsiv |
| Elektrolytisch verzinkter Stahl/ Elekrolytisch verzinkter Stahl | ja | 30 min/ 180°C | 12,7 | kohäsiv |

(fortgesetzt)

| Prüfkörper | Ölauftrag | Aushärtung | Zugscherfestigkeit [MPa] | Bruchbild |
|---|---|---|---|---|
| Feuerverzinkter Stahl/ Feuerverzinkter Stahl | ja | 30 min/ 180°C | 11,9 | kohäsiv |
| KTL-Stahl/ KTL-Stahl | nein | 30 min/ 130°C | 10,8 | kohäsiv |
| KTL-Stahl/ KTL-Stahl | nein | 30 min/ 160°C | 12,4 | kohäsiv |

**Beispiel 15**

Die chemische Umsetzung zum Polybutadien-Polyurethan erfolgte in Gegenwart eines Epoxidharzes. Das Polybutadien-Polyurethan (PBD-PU 15) setzt sich inklusive des Epoxidharzes wie folgt zusammen:

Zusammensetzung PBD-PU 15:

| Rohstoff | Gewichtsanteil [Gew.-%] | Anzahl der eingebrachten OH- beziehungsweise NCO-Gruppen, bezogen auf den prozentualen Gewichtsanteil | Prozentuales Verhältnis der Anzahl der OH-Gruppen zueinander |
|---|---|---|---|
| Krasol LBH 2000 ® | 28,89 | 26,29 mmol OH | 20 |
| Poly bd R-45 HTLO ® | 31,30 | 26,29 mmol OH | 20 |
| 2-Ethyl-1,3-hexandiol ® | 5,77 | 78,88 mmol OH | 60 |
| Coscat 83 ® | 0,15 | | |
| Desmodur W ® | 13,89 | 105,17 mmol NCO | |
| Epikote 828 ® | 20,00 | | |
| Summe | 100,00 | | |

Die Herstellung erfolgte im Laboransatz (1 Liter). Der Gewichtsanteil an Desmodur W ® ist dabei so berechnet, dass das NCO/OH - Verhältnis des Polyurethans 0,80 beträgt. Der theoretische Gelpunkt errechnet sich zu 0,83.
PBD-PU 15 (inklusive Epoxidharz) ist bei Raumtemperatur fest, schmelzbar und von der Konsistenz her gummiartig und haftklebrig. Die Prüfergebnisse sind in der folgenden Tabelle zusammengefasst:

Prüfergebnisse PBD-PU 15 (inklusive Epoxidharz):

| | |
|---|---|
| G' (bei 1 rad /sec und 23 °C) | 1.500 Pa |
| G" (bei 1 rad /sec und 23 °C) | 5.000 Pa |
| G' (bei 10 rad /sec und 23 °C) | 15.000 Pa |
| G" (bei 10 rad /sec und 23 °C) | 60.000 Pa |
| komplexe Viskosität $\eta$* bei 10 rad/sec und 23°C | 6.200 Pas |
| komplexe Viskosität $\eta$* bei 10 rad/sec und 90°C | 160 Pas |

Herstellung des erfindungsgemäßen Klebstoffs und der erfindungsgemäßen Klebebandschicht:

PBD-PU 15 (inklusive Epoxidharz) wurde zur Herstellung des erfindungsgemäßen Klebstoffs und der erfindungsgemäßen Klebebandschicht gemäß der folgenden Rezeptur im Laboransatz weiter abgemischt und zu einem Film ausgeformt.
Das bereits während der Polybutadien-Polyurethan-Herstellung eingemischte Epoxidharz ist in der folgenden Tabelle separat aufgeführt.

Zusammensetzung der thermisch vulanisierbaren Klebebandschicht auf Basis von PBD-PU 15:

| Rohstoff | Gewichtsprozent |
|---|---|
| PBD-PU 15 (exklusive Epoxidharz) | 44,8 |
| Epikote 828 ® (aus der PBD-PU 15- Herstellung) | 11,3 |
| Mahlschwefel 80/90° | 3,5 |
| ZBEC | 1,5 |
| TBzTD | 1,5 |
| Printex 60 ® | 0,9 |
| Omyacarb 5-GU® | 26,1 |
| Rapidquell® Quicklime CL 90-Q | 3,5 |
| Talkum Pharma M ® | 6,9 |

Es wurden die folgenden Ergebnisse erzielt.

Tack (vor der thermischen Vulkanisation) bei 23°C: 1,5 N

Klebkraft (vor der thermischen Vulkanisation):

| Prüfkörper | Ölauftrag | Klebkraft, sofort (N/cm) | Klebkraft, nach 30 Minuten (N/cm) |
|---|---|---|---|
| Stahl | ja | 0,08 | 0,19 |

Zugscherfestigkeit (nach der thermischen Vulkanisation):

| Prüfkörper | Ölauftrag | Aushärtung | Zugscherfestigkeit [MPa] | Bruchbild |
|---|---|---|---|---|
| Stahl/Stahl | nein | 30 min/ 180°C | 13,8 | kohäsiv |
| Stahl/ Stahl | ja | 30 min/ 180°C | 13,1 | kohäsiv |
| Elektrolytisch verzinkter Stahl/ Elekrolytisch verzinkter Stahl | ja | 30 min/ 180°C | 12,9 | kohäsiv |
| Feuerverzinkter Stahl/ Feuerverzinkter Stahl | ja | 30 min/ 180°C | 12,4 | kohäsiv |
| KTL-Stahl/ KTL-Stahl | nein | 30 min/ 130°C | 12,5 | kohäsiv |
| KTL-Stahl/ KTL-Stahl | nein | 30 min/ 160°C | 10,6 | kohäsiv |

**Vergleichsbeispiel 1**

Die chemische Umsetzung zum Polyurethan erfolgte in Gegenwart eines Epoxidharzes. Das Polyurethan (PU-V1) setzt sich inklusive des Epoxidharzes wie folgt zusammen:

Zusammensetzung PU-V1:

| Rohstoff | Gewichtsanteil [Gew.-%] | Anzahl der eingebrachten OH- beziehungsweise NCO-Gruppen, bezogen auf den prozentualen Gewichtsanteil | Prozentuales Verhältnis der Anzahl der OH-Gruppen zueinander |
|---|---|---|---|
| Krasol LBH 2000 ® | 31,82 | 28,95 mmol OH | 25 |
| Voranol P 2000L ® | 29,27 | 28,95 mmol OH | 25 |
| 2-Ethyl-1,3-hexandiol ® | 4,23 | 57,90 mmol OH | 50 |

(fortgesetzt)

| Rohstoff | Gewichtsanteil [Gew.-%] | Anzahl der eingebrachten OH- beziehungsweise NCO-Gruppen, bezogen auf den prozentualen Gewichtsanteil | Prozentuales Verhältnis der Anzahl der OH- Gruppen zueinander |
|---|---|---|---|
| Coscat 83 ® | 0,15 | | |
| Desmodur W ® | 14,53 | 110,01 mmol NCO | |
| Epikote 828 ® | 20,00 | | |
| Summe | 100,00 | | |

Die Herstellung erfolgte im Laboransatz (1 Liter). Der Gewichtsanteil an Desmodur W ® ist dabei so berechnet, dass das NCO/OH - Verhältnis des Polyurethans 0,95 beträgt. Der theoretische Gelpunkt errechnet sich zu 1,0.

PU-V1 (inklusive Epoxidharz) ist bei Raumtemperatur fest, schmelzbar und von der Konsistenz her gummiartig und haftklebrig. Die Prüfergebnisse sind in der folgenden Tabelle zusammengefasst:

Prüfergebnisse PU-V1 (inklusive Epoxidharz):

| | |
|---|---|
| G' (bei 1 rad /sec und 23 °C) | 7.000 Pa |
| G" (bei 1 rad /sec und 23 °C) | 18.000 Pa |
| G' (bei 10 rad /sec und 23 °C) | 60.000 Pa |
| G" (bei 10 rad /sec und 23 °C) | 80.000 Pa |
| komplexe Viskosität $\eta$* bei 10 rad/sec und 23°C | 10.000 Pas |
| komplexe Viskosität $\eta$* bei 10 rad/sec und 90°C | 190 Pas |

Herstellung der Vergleichs-Klebebandschicht:

PU-V1 (inklusive Epoxidharz) wurde zur Herstellung der Vergleichs-Klebebandschicht gemäß der folgenden Rezeptur im Laboransatz weiter abgemischt und zu einem Film ausgeformt.

Das bereits während der Polybutadien-Polyurethan-Herstellung eingemischte Epoxidharz ist in der folgenden Tabelle separat aufgeführt.

Zusammensetzung der Vergleichs-Klebebandschicht auf Basis von PU-V1:

| Rohstoff | Gewichtsprozent |
|---|---|
| PU-V1 (exklusive Epoxidharz) | 44,8 |
| Epikote 828 ® (aus der PU V1- Herstellung) | 11,3 |
| Mahlschwefel 80/90° | 3,5 |
| ZBEC | 1,5 |
| TBzTD | 1,5 |
| Printex 60 ® | 0,9 |
| Omyacarb 5-GU® | 26,1 |
| Rapidquell® Quicklime CL 90-Q | 3,5 |
| Talkum Pharma M ® | 6,9 |

Es wurden die folgenden Ergebnisse erzielt.
Tack (vor der thermischen Vulkanisation) bei 23°C: 0,6 N

Klebkraft (vor der thermischen Vulkanisation):

| Prüfkörper | Ölauftrag | Klebkraft, sofort (N/cm) | Klebkraft, nach 30 Minuten (N/cm) |
|---|---|---|---|
| Stahl | ja | 0,05 | 0,12 |

Zugscherfestigkeit (nach der thermischen Vulkanisation):

| Prüfkörper | Ölauftrag | Aushärtung | Zugscherfestigkeit [MPa] | Bruch bild |
|---|---|---|---|---|
| Stahl/Stahl | nein | 30 min / 180°C | 1,3 | adhäsiv |
| Stahl/ Stahl | ja | 30 min / 180°C | 1,1 | adhäsiv |
| Elektrolytisch verzinkter Stahl/ Elekrolytisch verzinkter Stahl | ja | 30 min / 180°C | 1,2 | adhäsiv |
| Feuerverzinkter Stahl/ Feuerverzinkter Stahl | ja | 30 min / 180°C | 1,4 | adhäsiv |
| KTL-Stahl/ KTL-Stahl | nein | 30 min / 130°C | 0,6 | kohäsiv |
| KTL-Stahl/ KTL-Stahl | nein | 30 min / 160°C | 0,9 | kohäsiv |

**Vergleichsbeispiel 2**

Das Polyurethan (PU-V2) setzt sich wie folgt zusammen:

Zusammensetzung PU-V2:

| Rohstoff | Gewichtsanteil [Gew.-%] | Anzahl der eingebrachten OH- beziehungsweise NCO-Gruppen, bezogen auf den prozentualen Gewichtsanteil | Prozentuales Verhältnis der Anzahl der OH- Gruppen zueinander |
|---|---|---|---|
| Poly bd R-45 HTLO ® | 78,49 | 65,93 mmol OH | 50 |
| 2-Ehyl-1,3-hexandiol ® | 4,82 | 65,93 mmol OH | 50 |
| Coscat 83 ® | 0,15 | | |
| Desmodur W ® | 16,55 | 125,26 mmol NCO | |
| Summe | 100,00 | | |

Die Herstellung erfolgte im Laboransatz (1Liter). Der Gewichtsanteil an Desmodur W ® ist dabei so berechnet, dass das NCO/OH - Verhältnis des Polyurethans 0,95 beträgt. Der theoretische Gelpunkt errechnet sich zu 0,67.
PU-V2 ist bei Raumtemperatur fest und nicht schmelzbar.

Legende zu den Figuren

Figur 1: Planetwalzenextruder

1: Eingabe Polybutadien-Polyurethan
2: Einlass Schwefel
3: Einlass Kreide
4: Einlass Premix Talkum & Kalk
5: Einlass Premix Ultrabeschleuniger (ZBEC / TBzTD)
6: Auslass Compound

Figur 2: Doppelschneckenextruder

    7: Zuführung Rußdispersion
    8: Entgasung (< 0,1 bar)
    9: Blister

**Patentansprüche**

1.  Klebeband enthaltend einen thermisch vulkanisierbaren, schmelzbaren, vorzugsweise haftklebrigen Klebstoff, der ein schmelzbares Polybutadien-Polyurethan als Basiselastomer und gemahlenen Schwefel umfasst, wobei das schmelzbare Polybutadien-Polyurethan das chemische Umsetzungsprodukt eines oder mehrerer Polybutadien-Diole,

    eines oder mehrerer Kettenverlängerer mit einer Hydroxyl-Funktionalität von zwei und einer Molmasse von kleiner oder gleich 300 g/mol und
    optional eines oder mehrerer Polybutadien-Polyole mit einer zahlengemittelten, mittleren Funktionalität zwischen größer 2,0 und kleiner oder gleich 3,
    mit einem oder mehreren aliphatischen oder alicyclischen Diisocyanaten umfasst, **dadurch gekennzeichnet, dass**
    an der Umsetzung zum Polybutadien-Polyurethan keine anderen Polyole oder Isocyanate als die vorgenannten beteiligt sind.

2.  Klebeband nach Anspruch 1, **dadurch gekennzeichnet, dass** der Klebstoff weiter eine oder mehrere Substanzen, unabhängig voneinander gewählt aus der Liste bestehend aus Vulkanisationsbeschleunigern, Füllstoffen, Epoxidharzen, Klebrigmacherharzen, Bitumen, Weichmachern, umfasst.

3.  Klebeband gemäß Anspruch 1 oder 2, **dadurch gekennzeichnet, dass** der Klebstoff weitere Hilfs- und Zusatzstoffe umfasst.

4.  Klebeband gemäß einem der vorangehenden Ansprüche, **dadurch gekennzeichnet, dass**

    der anzahlmäßige Anteil der zur Bildung des schmelzbaren Polybutadien-Polyurethans eingebrachten Hydroxylgruppen, die von dem zumindest einen Kettenverlängerer stammt,
    zwischen größer oder gleich 20,0 % und kleiner oder gleich 80,0 %, bevorzugt zwischen größer oder gleich 30,0 % und kleiner oder gleich 70,0 % liegt.

5.  Klebeband gemäß einem der vorangehenden Ansprüche, **dadurch gekennzeichnet, dass**
    der anzahlmäßige Anteil der zur Bildung des schmelzbaren Polybutadien-Polyurethans eingebrachten Hydroxylgruppen, die von dem optionalen zumindest einen Polybutadien-Polyol mit einer zahlengemittelten, mittleren Funktionalität zwischen größer 2,0 und kleiner oder gleich 3,0 stammt, maximal 50,0 %, bevorzugt maximal 30,0 %, besonders bevorzugt maximal 10,0 %, ganz besonders bevorzugt 0,0% beträgt.

6.  Klebeband gemäß einem der vorangehenden Ansprüche, **dadurch gekennzeichnet, dass**
    das zumindest eine aliphatische oder alicyclische Diisocyanat Isophorondiisocyanat und/oder Dicyclohexylmethan-4,4'-diisocyanat ist oder umfasst.

7.  Klebeband gemäß einem der vorangehenden Ansprüche, **dadurch gekennzeichnet, dass**
    das Verhältnis der Gesamtanzahl der Isocyanat-Gruppen zur Gesamtanzahl der Hydroxylgruppen der an der chemischen Umsetzung zum schmelzbaren Polybutadien-Polyurethan beteiligten Stoffe zwischen größer oder gleich 0,3 und kleiner oder gleich 1,3 bevorzugt zwischen größer oder gleich 0,4 und kleiner oder gleich 1,2, besonders bevorzugt zwischen größer oder gleich 0,5 und kleiner oder gleich 1,1, ganz besonders bevorzugt zwischen größer oder gleich 0,6 und kleiner oder gleich 1,0 liegt.

8.  Klebeband gemäß einem der vorangehenden Ansprüche, **dadurch gekennzeichnet, dass**
    der zumindest eine Füllstoff gemahlene Kreide und gemahlenes Calciumoxid umfasst, wobei deren Gewichtsanteil an dem thermisch vulkanisierbaren, schmelzbaren, vorzugsweise haftklebrigen Klebstoff zusammen zwischen 10,0 und 70,0 Gewichtsprozent beträgt.

**9.** Klebeband gemäß einem der vorangehenden Ansprüche, **dadurch gekennzeichnet, dass** der zumindest eine Füllstoff gemahlenes Talkum umfasst, wobei dessen Gewichtsanteil an dem thermisch vulkanisierbaren, schmelzbaren, vorzugsweise haftklebrigen Klebstoff zwischen 10,0 und 50,0 Gewichtsprozent beträgt.

**10.** Klebeband gemäß einem der vorangehenden Ansprüche, **dadurch gekennzeichnet, dass** der Klebstoff des Weiteren zumindest ein Klebrigmacherharz mit einem Gewichtsanteil von zwischen einschließlich 1,0 Gew.% und einschließlich 30,0 Gew.%, besonders vorteilhaft mit einem Gewichtsanteil von zwischen einschließlich 5,0 Gew.% und einschließlich 20,0 Gew.% enthält, wobei dieses zumindest eine Klebrigmacherharz ein Terpenharz, bevorzugt ein Pinenharz, besonders bevorzugt ein beta-Pinenharz ist

**11.** Klebeband gemäß einem der vorangehenden Ansprüche, **dadurch gekennzeichnet, dass** der zumindest eine Vulkanisationsbeschleuniger zur Substanzklasse der Mercapto-Beschleuniger, der Thiuram-Beschleuniger und/ oder der Dithiocarbamat-Beschleuniger gehört, bevorzugt Di(benzothiazyl)disulfid (MBTS, CAS-Nr.: 120-78-5) oder Tetrabenzyldiuramdisulfid (TBzTD, CAS-Nr.: 10591-85-2) oder Zink-bis(dibenzyldithiocarbamat) (ZBEC, CAS-Nr.: 14726-36-4) oder eine Kombination aus zweien oder allen dieser Stoffe sind, wobei die Konzentration der Vulkanisationsbeschleuniger in dem thermisch vulkanisierbaren, schmelzbaren, vorzugsweise haftklebrigen Klebstoff zusammen zwischen mindestens 0,1 Gewichtsprozent und maximal 15,0 Gewichtsprozent, bevorzugt zwischen mindestens 0,5 und maximal 12,5 Gewichtsprozent , besonders bevorzugt zwischen mindestens 1,0 und maximal 10,0 Gewichtsprozent beträgt.

**12.** Verfahren zur Herstellung eines thermisch vulkanisierbaren, schmelzbaren, vorzugsweise haftklebrigen Klebstoffes eines Klebebandes gemäß einem der Ansprüche 1 bis 11, **dadurch gekennzeichnet, dass** die chemische Umsetzung zum schmelzbaren Polybutadien- Polyurethan unter Zusatz eines Katalysators erfolgt, insbesondere eines Bismut und Kohlenstoff enthaltenden Katalysators, bevorzugt eines Bismutcarboxylats oder eines Bismutcarboxylat-Derivats.

**13.** Verfahren zur Herstellung eines thermisch vulkanisierbaren, schmelzbaren, vorzugsweise haftklebrigen Klebstoffes eines Klebebandes gemäß einem der Ansprüche 1 bis 11, **dadurch gekennzeichnet, dass** die chemische Umsetzung zum schmelzbaren Polybutadien- Polyurethan in Gegenwart eines Epoxidharzes erfolgt.

**14.** Verfahren zur Herstellung des Klebebands gemäß einem der Ansprüche 1 bis 11, **dadurch gekennzeichnet, dass** die Herstellung in einem lösemittelfreien, kontinuierlichen Compoundier- und Beschichtungsprozess erfolgt.

**15.** Verfahren gemäß Anspruch 14, **dadurch gekennzeichnet, dass** die Herstellung in einem lösemittelfreien, kontinuierlichen Compoundier- und Beschichtungsprozess durch Zudosierung des Schwefels und der optionalen Vulkanisationsbeschleuniger, Füllstoffe sowie der weiteren Hilfs- und Zusatzstoffe während des kontinuierlichen Compoundierprozesses in das kontinuierlich arbeitende Mischaggregat, insbesondere den Compoundierextruder erfolgt.

**16.** Verfahren gemäß Anspruch 15, **dadurch gekennzeichnet, dass** der Compoundierextruder ein Planetwalzenextruder ist.

**17.** Verfahren gemäß Anspruch 16, **dadurch gekennzeichnet, dass** die Temperatur des Compounds 90°C, bevorzugt 80 °C, nicht überschreitet.

## Claims

**1.** Adhesive tape comprising a thermally vulcanizable, meltable, preferably pressure-sensitive adhesive which comprises a meltable polybutadiene-polyurethane as base elastomer and ground sulphur, where the meltable polybutadiene-polyurethane comprises the chemical reaction product of

one or more polybutadiene-diols,
one or more chain extenders having a hydroxyl functionality of two and a molar mass of less than or equal to 300 g/mol and
optionally one or more polybutadiene-polyols having a number-averaged average functionality of between greater than 2.0 and less than or equal to 3,
with one or more aliphatic or alicyclic diisocyanates, **characterized in that** no polyols or isocyanates other than those stated above are involved in the reaction to give the polybutadiene-polyurethane.

**2.** Adhesive tape according to Claim 1, **characterized in that** the adhesive further comprises one or more substances independently selected from the list consisting of vulcanization accelerators, fillers, epoxy resins, tackifier resins, bitumens and plasticizers.

**3.** Adhesive tape according to Claim 1 or 2, **characterized in that** the adhesive comprises further auxiliaries and additives.

**4.** Adhesive tape according to any of the preceding claims, **characterized in that** the numerical fraction of the hydroxyl groups introduced for forming the meltable polybutadiene-polyurethane and originating from the at least one chain extender
is between greater than or equal to 20.0% and less than or equal to 80.0%, preferably between greater than or equal to 30.0% and less than or equal to 70.0%.

**5.** Adhesive tape according to any of the preceding claims, **characterized in that** the numerical fraction of the hydroxyl groups introduced for forming the meltable polybutadiene-polyurethane and originating from the optional at least one polybutadiene-polyol having a number-averaged average functionality of between greater than 2.0 and less than or equal to 3.0 is not more than 50.0%, preferably not more than 30.0%, more preferably not more than 10.0%, very preferably 0.0%.

**6.** Adhesive tape according to any of the preceding claims, **characterized in that** the at least one aliphatic or alicyclic diisocyanate is or comprises isophorone diisocyanate and/or dicyclohexylmethane 4,4'-diisocyanate.

**7.** Adhesive tape according to any of the preceding claims, **characterized in that** the ratio of the total number of isocyanate groups to the total number of hydroxyl groups in the substances participating in the chemical reaction to give the meltable polybutadiene-polyurethane is between greater than or equal to 0.3 and less than or equal to 1.3, preferably between greater than or equal to 0.4 and less than or equal to 1.2, more preferably between greater than or equal to 0.5 and less than or equal to 1.1, very preferably between greater than or equal to 0.6 and less than or equal to 1.0.

**8.** Adhesive tape according to any of the preceding claims, **characterized in that** the at least one filler comprises ground chalk and ground calcium oxide, the weight fraction thereof in the thermally vulcanizable, meltable, preferably pressure-sensitive adhesive together being between 10.0 and 70.0 weight per cent.

**9.** Adhesive tape according to any of the preceding claims, **characterized in that** the at least one filler comprises ground talc, the weight fraction thereof in the thermally vulcanizable, meltable, preferably pressure-sensitive adhesive being between 10.0 and 50.0 weight per cent.

**10.** Adhesive tape according to any of the preceding claims, **characterized in that** the adhesive further comprises at least one tackifier resin having a weight fraction of between 1.0 wt% inclusive and 30.0 wt% inclusive, with particular advantage having a weight fraction of between 5.0 wt% inclusive and 20.0 wt% inclusive, said at least one tackifier resin being a terpene resin, preferably a pinene resin, more preferably a beta-pinene resin.

**11.** Adhesive tape according to any of the preceding claims, **characterized in that** the at least one vulcanization accelerator belongs to the class of substance of the mercapto accelerators, the thiuram accelerators and/or the dithiocarbamate accelerators, being preferably di(benzothiazyl) disulphide (MBTS, CAS No.: 120-78-5) or tetrabenzyldiuram disulphide (TBzTD, CAS No.: 10591-85-2) or zinc bis(dibenzyldithiocarbamate) (ZBEC, CAS No.: 14726-36-4) or a combination of two or all of these substances, the concentration of the vulcanization accelerators in the thermally vulcanizable, meltable, preferably pressure-sensitive adhesive together being between at least 0.1 weight per cent and not more than 15.0 weight per cent, preferably between at least 0.5 and not more than 12.5 weight per cent, more preferably between at least 1.0 and not more than 10.0 weight per cent.

**12.** Process for producing a thermally vulcanizable, meltable, preferably pressure-sensitive adhesive of an adhesive tape according to any of Claims 1 to 11, **characterized in that** the chemical reaction to give the meltable polybutadiene-polyurethane takes place with addition of a catalyst, more preferably a catalyst comprising bismuth and carbon, preferably a bismuth carboxylate or a bismuth carboxylate derivative.

**13.** Process for producing a thermally vulcanizable, meltable, preferably pressure-sensitive adhesive of an adhesive tape according to any of Claims 1 to 11, **characterized in that** the chemical reaction to give the meltable polybutadiene-polyurethane takes place in the presence of an epoxy resin.

14. Process for producing the adhesive tape according to any of Claims 1 to 11, **characterized in that** production takes place in a solvent-free, continuous compounding and coating operation.

15. Process according to Claim 14, **characterized in that** production takes place in a solvent-free, continuous compounding and coating operation by metered addition of the sulphur and of the optional vulcanization accelerators, fillers and also of the further auxiliaries and additives during the continuous compounding operation into the continuously operating mixing assembly, more particularly the compounding extruder.

16. Process according to Claim 15, **characterized in that** the compounding extruder is a planetary roller extruder.

17. Process according to Claim 16, **characterized in that** the temperature of the compounded formulation does not exceed 90°C, preferably 80°C.


**Revendications**

1. Ruban adhésif contenant un adhésif vulcanisable à chaud, fusible, de préférence de contact, qui comprend un polybutadiène-polyuréthane fusible en tant qu'élastomère de base et du soufre broyé, le polybutadiène-polyuréthane fusible comprenant le produit de la réaction

   d'un ou plusieurs polybutadiène-diols,
   d'un ou plusieurs extenseurs de chaîne ayant une fonctionnalité hydroxyle de deux et une masse moléculaire inférieure ou égale à 300 g/mol et éventuellement un ou plusieurs polybutadiène-polyols ayant une fonctionnalité moyenne en nombre entre supérieure à 2,0 et inférieure ou égale à 3,
   avec un ou plusieurs diisocyanates aliphatiques ou alicycliques,
   **caractérisé en ce qu'**aucun polyol ou isocyanate autre que ceux qui sont mentionnés ci-dessus ne participe à la réaction pour donnant le polybutadiène-polyuréthane.

2. Ruban adhésif selon la revendication 1, **caractérisé en ce que** l'adhésif comprend en outre une ou plusieurs substances, choisies indépendamment les unes des autres dans la liste consistant en les accélérateurs de vulcanisation, les charges, les résines époxydes, les résines de pégosité, les bitumes, les plastifiants.

3. Ruban adhésif selon la revendication 1 ou 2, **caractérisé en ce que** l'adhésif comprend des adjuvants et additifs supplémentaires.

4. Ruban adhésif selon l'une des revendications précédentes, **caractérisé en ce que**

   la proportion en nombre des groupes hydroxy introduits pour former le polybutadiène-polyuréthane fusible, qui dérive de l'au moins un extenseur de chaîne,
   est comprise entre supérieure ou égale à 20,0 % et inférieure ou égale à 80,0 %, de préférence entre supérieure ou égale à 30,0 % et inférieure ou égale à 70,0 %.

5. Ruban adhésif selon l'une des revendications précédentes, **caractérisé en ce que**
   la proportion en nombre des groupes hydroxyle introduits pour former le polybutadiène-polyuréthane fusible, qui dérive de l'éventuel au moins un polybutadiène-polyol ayant une fonctionnalité moyenne en nombre entre supérieure à 2,0 et inférieure et inférieure ou égale à 3,0, est au maximum de 50,0 %, de préférence au maximum de 30,0 %, d'une manière particulièrement préférée au maximum de 10,0 %, d'une manière tout particulièrement préférée de 0,0 %.

6. Ruban adhésif selon l'une des revendications précédentes, **caractérisé en ce que**
   l'au moins un diisocyanate aliphatique ou alicyclique est ou comprend le diisocyanate d'isophorone et/ou le diisocyanato-4,4'-dicyclohexylméthane.

7. Ruban adhésif selon l'une des revendications précédentes, **caractérisé en ce que**
   le rapport entre le nombre total des groupes isocyanate et le nombre total des groupes hydroxyle des substances participant à la réaction chimique donnant le polybutadiène-polyuréthane fusible est compris entre supérieur ou égal à 0,3 et inférieur ou égal à 1,3, de préférence entre supérieur ou égal à 0,4 et inférieur ou égal à 1,2, d'une manière particulièrement préférée entre supérieur ou égal à 0,5 et inférieur ou égal à 1,1, d'une manière tout particulièrement préférée entre supérieur ou égal à 0,6 et inférieur ou égal à 1,0.

8. Ruban adhésif selon l'une des revendications précédentes, **caractérisé en ce que** l'au moins une charge comprend de la craie broyée ou de l'oxyde de calcium broyé, dont la proportion en poids, par rapport à l'adhésif vulcanisable à chaud, fusible, de préférence de contact est, au total, comprise entre 10,0 et 70,0 pour cent en poids.

9. Ruban adhésif selon l'une des revendications précédentes, **caractérisé en ce que** l'au moins une charge est le talc broyé, dont la proportion en poids par rapport à l'adhésif vulcanisable à chaud, fusible, de préférence de contact, est comprise entre 10,0 et 50,0 pour cent en poids.

10. Ruban adhésif selon l'une des revendications précédentes, **caractérisé en ce que** l'adhésif contient en outre au moins une résine de pégosité selon une proportion en poids entre y compris 1,0 % en poids et y compris 30,0 % en poids, d'une manière particulièrement avantageuse une proportion en poids entre y compris 5,0 % en poids et y compris 20,0 % en poids, cette au moins une résine de pégosité étant une résine terpénique, de préférence une résine pinénique, d'une manière particulièrement préférée une résine de bêta-pinène.

11. Ruban adhésif selon l'une des revendications précédentes, **caractérisé en ce que** l'au moins un accélérateur de vulcanisation appartient à la classe des accélérateurs de type mercapto, des accélérateurs de type thiurame et/ou des accélérateurs de type dithiocarbamate et est de préférence le disulfure de di(benzothiazyle) (MBTS, numéro CAS : 120-78-5) ou le disulfure de tétrabenzylthiurame (TBzTD, numéro CAS : 10591-85-2) ou le bis(dibenzyldithiocarbamate) de zinc (ZBEC, numéro CAS : 14726-36-4) ou une combinaison de deux ou de la totalité de ces substances, la concentration des accélérateurs de vulcanisation dans l'adhésif vulcanisable à chaud, fusible, de préférence de contact, étant dans leur totalité comprise entre au moins 0,1 pour cent en poids et au maximum 15,0 pour cent en poids, de préférence entre au moins 0,5 et au maximum 12,5 pour cent en poids, d'une manière particulièrement préférée entre au moins 1,0 et au maximum 10,0 pour cent en poids.

12. Procédé de fabrication d'un adhésif vulcanisable à chaud, fusible, de préférence de contact, d'un ruban adhésif selon l'une des revendications 1 à 11, **caractérisé en ce que** la réaction chimique donnant le polybutadiène-polyuréthane fusible s'effectue avec ajout d'un catalyseur, en particulier d'un catalyseur contenant du bismuth et du carbone, de préférence un carboxylate de bismuth ou un dérivé de carboxylate de bismuth.

13. Procédé de fabrication d'un ruban adhésif vulcanisable à chaud, fusible, de préférence de contact, d'un ruban adhésif selon l'une des revendications 1 à 11, **caractérisé en ce que** la réaction chimique donnant le polybutadiène-polyuréthane fusible a lieu en présence d'une résine époxyde.

14. Procédé de fabrication d'un ruban adhésif selon l'une des revendications 1 à 11, **caractérisé en ce que** la fabrication a lieu dans le cadre d'un procédé continu sans solvant de mélangeage et de revêtement.

15. Procédé selon la revendication 14, **caractérisé en ce que** la fabrication a lieu dans un procédé continu sans solvant de mélangeage et de revêtement pour addition du soufre et de l'éventuel accélérateur de vulcanisation, des charges ainsi que des adjuvants et additifs supplémentaires, pendant le procédé de mélangeage continu dans l'équipement mélangeur fonctionnant en continu, en particulier l'extrudeuse de mélangeage.

16. Procédé selon la revendication 15, **caractérisé en ce que** l'extrudeuse de mélangeage est une extrudeuse à vis planétaires.

17. Procédé selon la revendication 16, **caractérisé en ce que** la température du mélange ne dépasse pas 90 °C, en particulier 80 °C.

**Fig. 1**

**Fig. 2**

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente

- EP 877069 B1, Beiersdorf
- DE 3830895 A, Hüls
- EP 0356715 B1, Henkel
- JP 59230076 A, Sekisui
- US 3743617 A, Kest
- US 3515773 A, Continental
- WO 1998030648 A1, Shell
- DE 1645358 A
- EP 0877069 A1

### In der Beschreibung aufgeführte Nicht-Patentliteratur

- **SATAS.** Handbook of Pressure Sensitive Adhesive Technology. 1999, 153-203
- **WERNER HOFFMANN ; HEINZ GUPTA.** Handbuch der Kautschuk-Technologie. 2001
- *CHEMICAL ABSTRACTS,* 25068-38-6
- *CHEMICAL ABSTRACTS,* 2386-87-0
- Ullmann's Encyclopedia of Industrial Chemistry. vol. 12, 271
- *Encyclopedia of Polymer Science and Engineering,* vol. 6, 345
- *CHEMICAL ABSTRACTS,* 9011-11-4
- *CHEMICAL ABSTRACTS,* 25719-60-2
- **GAECHTER ; MÜLLER ; KIRK-OTHMER.** *Taschenbuch der Kunststoff-Additive, München,* 1979, vol. 23 (3), 615-627
- *Encycl. Polym. Sci. Technol.,* vol. 14, 125-148
- **ULLMANN.** *Verbindungen Verwendung,* vol. 8 (4), 15, , 529, , 676
- *CHEMICAL ABSTRACTS,* 003077-13-2
- *CHEMICAL ABSTRACTS,* 144-19-4
- *CHEMICAL ABSTRACTS,* 115-84-4
- *CHEMICAL ABSTRACTS,* 94-96-2
- **HERBERT CHAO ; NAN TIAN.** Cray Valley. PCI, April 2010
- *CHEMICAL ABSTRACTS,* 4098-71-9
- *CHEMICAL ABSTRACTS,* 5124-30-1
- *CHEMICAL ABSTRACTS,* 34364-26-6
- *CHEMICAL ABSTRACTS,* 101-68-8
- *CHEMICAL ABSTRACTS,* 7704-34-9
- *CHEMICAL ABSTRACTS,* 120-78-5
- *CHEMICAL ABSTRACTS,* 14726-36-4
- *CHEMICAL ABSTRACTS,* 10591-85-2
- *CHEMICAL ABSTRACTS,* 14807-96-6